# EUROPÄISCHE PATENTSCHRIFT

(11) **EP 2 239 310 B1**
(45) Veröffentlichungstag und Bekanntmachung des Hinweises auf die Patenterteilung: **27.06.2012**
(21) Anmeldenummer: 10002556.8
(22) Anmeldetag: 11.03.2010
(51) Int. Cl.: C09K 19/34, C09K 19/40

(54) **Flüssigkristallines Medium und Flüssigkristallanzeige**
Liquid crystal medium and liquid crystal display
Milieu à base de cristaux liquides et affichage à base de cristaux liquides

(30) Priorität: 06.04.2009 DE 102009016305
(43) Veröffentlichungstag der Anmeldung: 13.10.2010
(73) Patentinhaber: Merck Patent GmbH, 64293 Darmstadt (DE)
(72) Erfinder: Klasen-Memmer, Melanie, Dr., 67259 Heuchelheim (DE); Jansen, Axel, Dr., 64293 Darmstadt (DE); Pauluth, Detlef, Dr., 64372 Ober-Ramstadt (DE)

(56) Entgegenhaltungen:
- DE-A1-102008 036 807
- JP-A- 2007 084 487
- CRUZ DA C ET AL: "SYNTHESIS AND MESOMORPHIC PROPERTIES OF A NEW CHIRAL SERIES WITH A HETEROCYCLE IN THE MOLECULAR CORE" LIQUID CRYSTALS: AN INTERNATIONAL JOURNAL OF SCIENCE AND TECHNOLOGY, TAYLOR & FRANCIS, GB LNKD- DOI:10.1080/0267829031000136075, Bd. 30, Nr. 10, 1. Oktober 2003 (2003-10-01), Seiten 1175-1180, XP001170863 ISSN: 0267-8292
- MATKIN L S ET AL: "Resonant x-ray scattering at the Se edge in liquid crystal free-standing films and devices" APPLIED PHYSICS LETTERS, AIP, AMERICAN INSTITUTE OF PHYSICS, MELVILLE, NY, US LNKD- DOI:10.1063/1.126193, Bd. 76, Nr. 14, 3. April 2000 (2000-04-03) , Seiten 1863-1865, XP012024962 ISSN: 0003-6951

## Beschreibung

Die vorliegende Erfindung betrifft Flüssigkristallmedien und deren Verwendung in Flüssigkristallanzeigen sowie diese Flüssigkristallanzeigen, besonders Flüssigkristallanzeigen, die den ECB- (Electrically Controlled Birefringence) Effekt mit dielektrisch negativen Flüssigkristallen in einer homeotropen Ausgangsorientierung verwenden. Die erfindungsgemäßen Flüssigkristallmedien zeichnen sich durch eine besonders niedrige Schaltzeit in den erfindungsgemäßen Anzeigen bei gleichzeitig hohem Spannungshaltevermögen (Voltage Holding Ratio) aus.

Anzeigen, die den ECB-Effekt verwenden haben sich als so genannte VAN- (Vertically Aligned Nematic) Anzeigen neben IPS- (In Plane Switching) Anzeigen (z.B.: Yeo, S.D., Vortrag 15.3: "A LC Display for the TV Application", SID 2004 International Symposium, Digest of Technical Papers, XXXV, Buch II, S. 758 & 759) und den lange bekannten TN-(Twisted Nematic) Anzeigen, als eine der drei zur Zeit wichtigsten neueren Typen von Flüssigkristallanzeigen insbesondere für Fernsehanwendungen etabliert.

Als wichtigste Bauformen sind zu nennen: MVA (Multi-Domain Vertical Alignment, z. B.: Yoshide, H. et al., Vortrag 3.1: "MVA LCD for Notebook or Mobile PCs ...", SID 2004 International Symposium, Digest of Technical Papers, XXXV, Buch I, S. 6 bis 9 und Liu, C.T. et al., Vortrag 15.1: "A 46-inch TFT-LCD HDTV Technology ...", SID 2004 International Symposium, Digest of Technical Papers, XXXV, Buch II, S. 750 bis 753), PVA (Patterned Vertical Alignment, z. B.: Kim, Sang Soo, Vortrag 15.4: "Super PVA Sets New State-of-the-Art for LCD-TV", SID 2004 International Symposium, Digest of Technical Papers, XXXV, Buch II, S. 760 bis 763) und ASV (Advanced Super View, z. B.: Shigeta, Mitzuhiro und Fukuoka, Hirofumi, Vortrag 15.2: "Development of High Quality LCDTV", SID 2004 International Symposium, Digest of Technical Papers, XXXV, Buch II, S. 754 bis 757).

In allgemeiner Form werden die Technologien z.B. in Souk, Jun, SID Seminar 2004, Seminar M-6: "Recent Advances in LCD Technology", Seminar Lecture Notes, M-6/1 bis M-6/26 und Miller, lan, SID Seminar 2004, Seminar M-7: "LCD-Television", Seminar Lecture Notes, M-7/1 bis M-7/32, verglichen. Obwohl die Schaltzeiten moderner ECB-Anzeigen durch Ansteuerungsmethoden mit Übersteuerung (overdrive) bereits deutlich verbessert wurden, z.B.: Kim, Hyeon Kyeong et al., Vortrag 9.1: "A 57-in. Wide UXGA TFT-LCD for HDTV Application", SID 2004 International Symposium, Digest of Technical Papers, XXXV, Buch I, S. 106 bis 109, ist die Erzielung von videotauglichen Schaltzeiten insbesondere beim Schalten von Graustufen immer noch ein noch nicht zufriedenstellend gelöstes Problem.

ECB-Anzeigen verwenden wie ASV-Anzeigen flüssigkristalline Medien mit negativer dielektrischer Anisotropie (Δε), wohingegen TN- und bislang alle gebräuchlichen IPS-Anzeigen flüssigkristalline Medien mit positiver dielektrischer Anisotropie verwenden.

In derartigen Flüssigkristallanzeigen werden die Flüssigkristalle als Dielektrika verwendet, deren optische Eigenschaften sich bei Anlegen einer elektrischen Spannung reversibel ändern.

Da bei Anzeigen im allgemeinen, also auch bei Anzeigen nach diesen erwähnten Effekten, die Betriebsspannung möglichst gering sein soll, werden Flüssigkristallmedien eingesetzt, die in der Regel überwiegend aus Flüssigkristallverbindungen zusammengesetzt sind, die alle das gleiche Vorzeichen der dielektrischen Anisotropie aufweisen und einen möglichst großen Betrag der dielektrischen Anisotropie haben. Bei den gemäß der vorliegenden Anmeldung verwendeten Medien werden typischerweise allenfalls nennenswerte Mengen an dielektrisch neutralen Flüssigkristallverbindungen und in der Regel nur sehr geringe Mengen an oder gar keine dielektrisch positiven Verbindungen eingesetzt, da generell die Flüssigkristallanzeigen möglichst niedrige Ansteuerspannungen haben sollen.

Die Ansteuerspannung der Anzeigen des Standes der Technik ist oft zu groß, insbesondere für Anzeigen die nicht direkt oder nicht durchgehend ans Stromversorgungsnetz angeschlossen werden wie z. B. Anzeigen für mobile Anwendungen.

Außerdem muss der Phasenbereich ausreichend breit für die beabsichtigte Anwendung sein.

Insbesondere müssen die Schaltzeiten der Flüssigkristallmedien in den Anzeigen verbessert, also verringert, werden. Dies ist besonders für Anzeigen für Fernseh- oder Multi-Media Anwendungen wichtig. Zur Verbesserung der Schaltzeiten ist in der Vergangenheit wiederholt vorgeschlagen worden, die Rotationsviskosität der Flüssigkristallmedien (γ₁) zu optimieren, also Medien mit einer möglichst geringen Rotationsviskosität zu realisieren. Die dabei erzielten Ergebnisse sind jedoch nicht ausreichend für viele Anwendungen und lassen es daher wünschenswert erscheinen, weitere Optimierungsansätze aufzufinden.

Somit besteht ein großer Bedarf an Flüssigkristallmedien, die die Nachteile der Medien aus dem Stand der Technik nicht, oder zumindest in deutlich vermindertem Umfang, aufweisen.

Überraschend wurde gefunden, dass Flüssigkristallanzeigen realisiert werden können, die eine geringe Schaltzeit in ECB-Anzeigen aufweisen und gleichzeitig eine ausreichend breite nematische Phase, eine günstige Doppelbrechung (Δn) und eine hohe Voltage Holding Ratio aufweisen. Derartige Medien sind insbesondere für elektrooptische Anzeigen mit einer Aktivmatrix-Addressierung basierend auf dem ECB-Effekt sowie für IPS-oder FFS- (Fringe Field Switching)-Anzeigen zu verwenden. Vorzugsweise besitzt das erfindungsgemäße Medium eine negative dielektrische Anisotropie.

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie Δε ≤ -0,5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homeotrope Randorientierung auf (VA-Technologie = Vertical Aligned). Auch bei Anzeigen, die den IPS- oder den FFS-Effekt verwenden, können dielektrisch negative Flüssigkristallmedien zum Einsatz kommen.

Den erfindungsgemäßen Mischungen können weiterhin polymerisierbare Verbindungen, bevorzugt polymerisierbare, mesogene Verbindungen, sogenannte reaktive Mesogene (RMs), beispielsweise wie in U.S. 6,861,107 offenbart, in Konzentrationen von bevorzugt 0,12 - 5 Gew.-%, besonders bevorzugt 0,2 - 2 % bezogen auf die Mischung, zugesetzt werden. Optional können diese Mischungen auch einen Initiator enthalten, wie beispielsweise in der U.S. 6,781,665 beschrieben. Der Initiator, z.B. Irganox®-1076 der Fa. Ciba, wird vorzugsweise der Mischung enthaltend polymerisierbare Verbindungen in Mengen von 0 - 1 % zugesetzt. Derartige Mischungen können für sogenannte Polymer Stabilized VA-Modes (PS-VA), bei denen eine Polymerisierung der reaktiven Mesogene in der flüssigkristallinen Mischung erfolgen soll, verwendet werden. Voraussetzung hierfür ist, dass die Flüssigkristallmischung selbst keine polymerisierbaren Komponenten enthält. Geeignete polymerisierbare Verbindungen sind beispielsweise in Tabelle G. aufgelistet.

Für die technische Anwendung dieses Effektes in elektrooptischen Anzeigeelementen werden flüssigkristalline Medien benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren flüssigkristallinen Medien eine flüssigkristalline Mesophase in einem geeigneten Temperaturbereich und eine niedrige Viskosität gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als flüssigkristalline Medien verwendbare Substanzen zu erhalten.

Matrix-Flüssigkristallanzeigen (MFK-Anzeigen) sind bekannt. Als nichtlineare Elemente zur individuellen Schaltung der einzelnen Bildpunkte können beispielsweise aktive Elemente (d.h. Transistoren) verwendet werden. Man spricht dann von einer "aktiven Matrix", wobei im Allgemeinen Dünnfilm-Transistoren (TFT) verwendet werden, die in der Regel auf einer Glasplatte als Substrat angeordnet sind.

Man unterscheidet zwei Technologien: TFT's aus Verbindungshalbleitern wie z.B. CdSe oder TFT's auf der Basis von polykristallinem und u. a. amorphem Silizium. Letztere Technologie hat derzeit weltweit die größte kommerzielle Bedeutung.

Die TFT-Matrix ist auf der Innenseite der einen Glasplatte der Anzeige aufgebracht, während die andere Glasplatte auf der Innenseite die transparente Gegenelektrode trägt. Im Vergleich zu der Größe der Bildpunkt-Elektrode ist der TFT sehr klein und stört das Bild praktisch nicht. Diese Technologie kann auch für voll farbtaugliche Bilddarstellungen erweitert werden, wobei ein Mosaik von roten, grünen und blauen Filtern derart angeordnet ist, dass je ein Filterelement einem schaltbaren Bildelement gegenüber liegt.

Der Begriff MFK-Anzeigen umfasst hier jedes Matrix-Display mit integrierten nichtlinearen Elementen, d.h. neben der aktiven Matrix auch Anzeigen mit passiven Elementen wie Varistoren oder Dioden (MIM = Metall-Isolator-Metall).

Derartige MFK-Anzeigen eignen sich insbesondere für TV-Anwendungen, Monitore und "Note Books" oder für Displays mit hoher Informationsdichte z.B. in Automobil- oder Flugzeugbau. Neben Problemen hinsichtlich der Winkelabhängigkeit des Kontrastes und der Schaltzeiten resultieren bei MFK-Anzeigen Schwierigkeiten bedingt durch einen nicht ausreichend hohen spezifischen Widerstand der Flüssigkristallmischungen [TOGASHI, S., SEKIGUCHI, K., TANABE, H., YAMAMOTO, E., SORIMACHI, K., TAJIMA, E., WATANABE, H., SHIMIZU, H., Proc. Eurodisplay 84, Sept. 1984: A 210-288 Matrix LCD Controlled by Double Stage Diode Rings, p. 141 ff, Paris; STROMER, M., Proc. Eurodisplay 84, Sept. 1984: Design of Thin Film Transistors for Matrix Addressing of Television Liquid Crystal Displays, p. 145 ff, Paris]. Mit abnehmendem Widerstand verschlechtert sich der Kontrast einer MFK-Anzeige. Da der spezifische Widerstand der Flüssigkristallmischung durch Wechselwirkung mit den inneren Oberflächen der Anzeige im Allgemeinen über die Lebenszeit einer MFK-Anzeige abnimmt, ist ein hoher (Anfangs)-Widerstand sehr wichtig für Anzeigen die akzeptable Widerstandswerte über eine lange Betriebsdauer aufweisen müssen.

Verbindungen mit einem 2,5-Thiophen-Ring werden in der GB 2 229 179 A offenbart und insbesondere als Bestandteile von smektischen Flüssigkristallmischungen vorgeschlagen.

Dielektrisch positive Thiophencarbonsäureester werden in DE 101 02 631 A1 offenbart und in WO 01/64814 als Bestandteile nematischer Flüssigkristallmischungen für STN-Anzeigen eingesetzt. Dielektrisch negative Thiophenverbindungen werden in JP 2007-084487 (A) offenbart und in einem dielektrisch neutralen Host untersucht. Selenophene und Tellurophene werden auch in DE 10 2008 036 807 A1 offenbart.

Mesogene Einzelverbindungen mit einem 2,5-Selenophen-Ring mit verschiedenen Vorzeichen den dielektrischen Anisotropie werden in der bislang noch nicht offen gelegten DE 102008036807.5 beschrieben und als Bestandteile von Flüssigkristallmischungen genannt.

Der Nachteil der bisher bekannten MFK-Anzeigen beruht auf ihrem vergleichsweise niedrigen Kontrast, der relativ hohen Blickwinkelabhängigkeit und der Schwierigkeit in diesen Anzeigen Graustufen zu erzeugen, sowie ihrer ungenügenden Voltage Holding Ratio und ihrer ungenügenden Lebensdauer.

Es besteht somit immer noch ein großer Bedarf nach MFK-Anzeigen mit sehr hohem spezifischen Widerstand bei gleichzeitig großem Arbeitstemperaturbereich, kurzen Schaltzeiten und niedriger Schwellenspannung, mit deren Hilfe verschiedene Graustufen erzeugt werden können und die insbesondere eine gute und stabile Voltage Holding Ratio aufweisen.

Der Erfindung liegt die Aufgabe zugrunde MFK-Anzeigen, nicht nur für Monitor- und TV-Anwendungen, sondern auch für Mobiltelefone und Navigationssysteme, welche auf dem ECB-, auf dem IPS- oder auf dem FFS-Effekt beruhen, bereitzustellen, die die oben angegebenen Nachteile nicht oder nur in geringerem Maße und gleichzeitig sehr hohe spezifische Widerstände aufweisen. Insbesondere muss für Mobiltelefone und Navigationssysteme gewährleistet sein, dass diese auch bei extrem hohen und extrem niedrigen Temperaturen arbeiten.

Überraschenderweise wurde nun gefunden, dass diese Aufgabe gelöst werden kann, wenn man in diesen Anzeigeelementen nematische Flüssigkristallmischungen verwendet, die mindestens eine Verbindung der Formel I sowie mindestens eine weitere, mesogene Verbindung enthalten.

Die erfindungsgemäßen Mischungen zeigen sehr breite nematische Phasenbereiche mit Klärpunkten ≥ 85 °C, sehr günstige Werte für die kapazitive Schwelle, relativ hohe Werte für die Holding Ratio und gleichzeitig sehr gute Tieftemperaturstabilitäten bei -30 °C und -40 °C sowie sehr geringe Rotationsviskositäten. Weiterhin zeichnen sich die erfindungsgemäßen Mischungen durch ein gutes Verhältnis von Klärpunkt und Rotationsviskosität und durch eine hohe negative dielektrische Anisotropie aus.

Die Erfindung betrifft ein dielektrisch negatives, nematisches Medium welches
a) eine erste dielektrisch negative Komponente (*Komponente A*), die aus einer oder mehreren Verbindungen der Formel I besteht 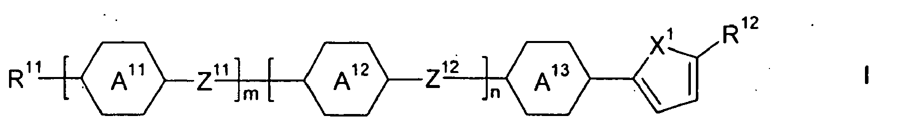 worin
   - R¹¹ und R¹²: jeweils unabhängig voneinander H, einen unsubstituierten Alkyl- oder Alkenylrest mit bis zu 15 C-Atomen, wobei in diesen Resten auch eine oder mehrere CH₂-Gruppen durch -O-, -S-, , -C≡C-, -CF₂-O-, -O-CF₂-, -CO-O- oder -O-CO- so ersetzt sein können, dass O-Atome nicht direkt miteinander verknüpft sind, bevorzugt einen unsubstituierten Alkyl-, Alkenyl-, Alkoxy-, Oxaalkyl- oder Alkenyloxyrest, besonders bevorzugt einer von R¹¹ und R¹² einen Alkyl- oder Alkenylrest und der andere einen Alkyl-, Alkenyl-, Alkoxy- oder Alkenyloxyrest, besonders bevorzugt R¹² geradkettiges Alkyl oder Alkenyl, insbesondere CH₂=CH-, E-CH₃-CH=CH-, CH₂=CH-CH₂-CH₂-, CH₃-CH=CHC₂H₄-, CH₃-, C₂H₅-, *n*-C₃H₇, *n*-C₄H₉- oder n-C₅H₁₁- und R¹¹ Alkoxy, insbesondere C₂H₅-O- oder *n*-C₄H₉-O-,
   einer der vorhandenen Ringe 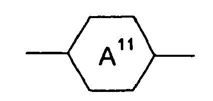 bis 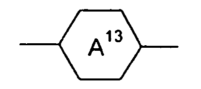 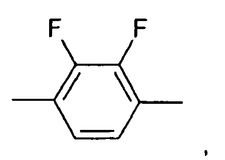 bevorzugt 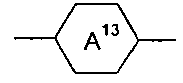 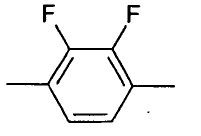 und die anderen, soweit vorhanden, jeweils unabhängig voneinander 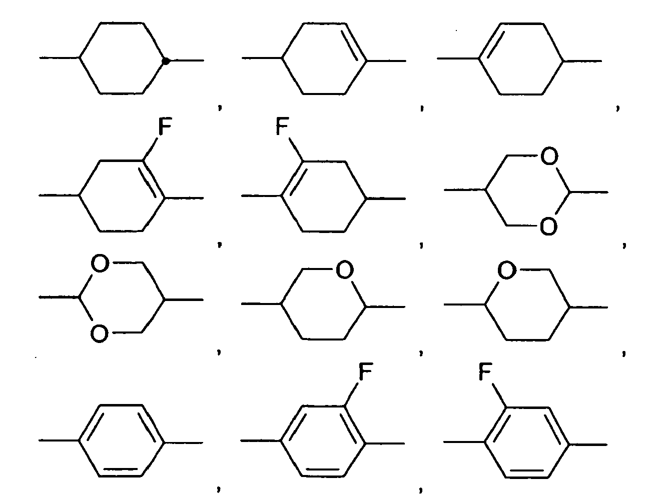 oder 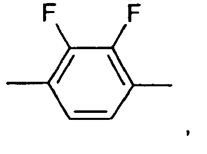 bevorzugt 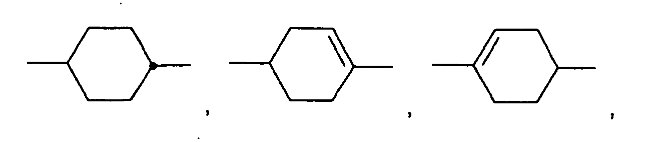 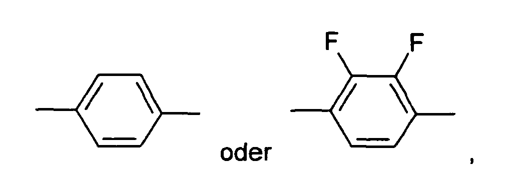 besonders bevorzugt 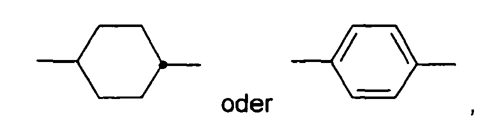
   - Z¹¹ und Z¹²: jeweils unabhängig voneinander -CH₂-CH₂-, -CH=CH-, -C=C-, -CH₂-O-, -O-CH₂-, -CO-O-, -O-CO-, -CF₂-O-, -O-CF₂-, -CF₂-CF₂- oder eine Einfachbindung, bevorzugt -CH₂-CH₂-, -CH=CH-, -C=C-, -CO-O-, -CF₂-O-, -O-CF₂- oder eine Einfachbindung, besonders bevorzugt -CH=CH-, -CO-O-, oder eine Einfachbindung und ganz besonders bevorzugt einer oder, soweit vorhanden, alle eine Einfachbindung,
   - X¹: S,
   - m und n: unabhängig voneinander 0 oder 1
   bedeuten,
b) eine zweite dielektrisch negative Komponente *(Komponente B),* die aus einer oder mehreren Verbindungen ausgewählt aus Gruppe der Formeln II-1 bis II-16 besteht 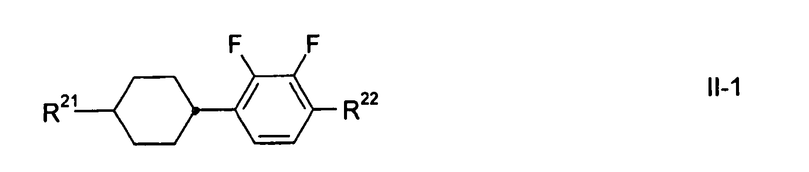 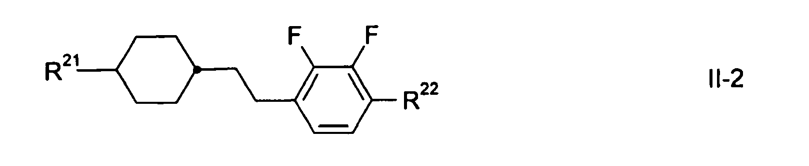 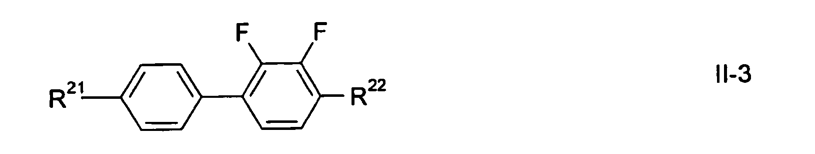 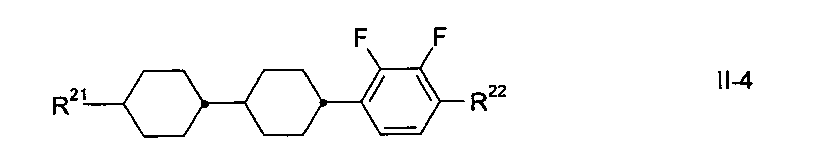 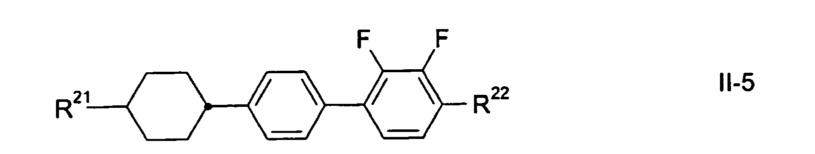 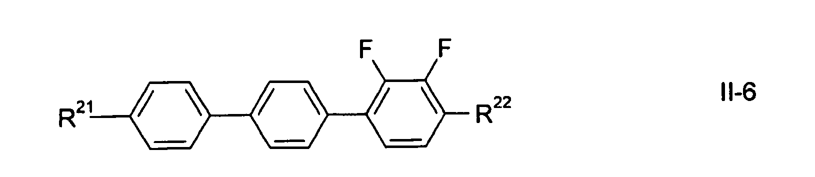 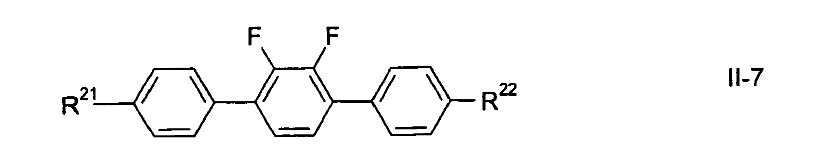 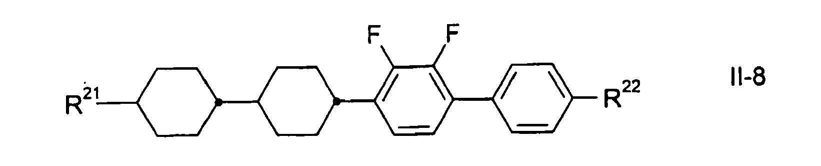 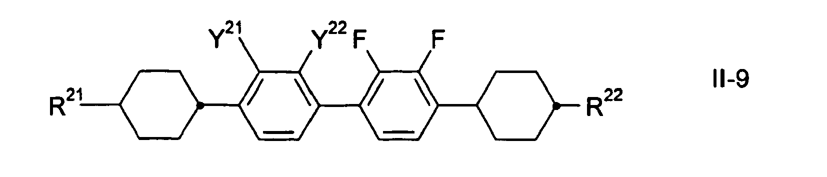 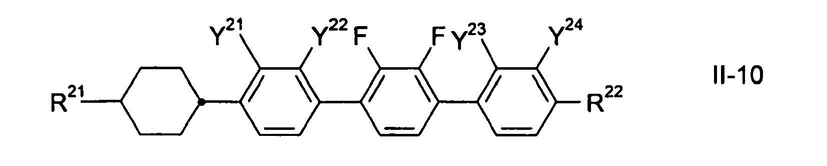 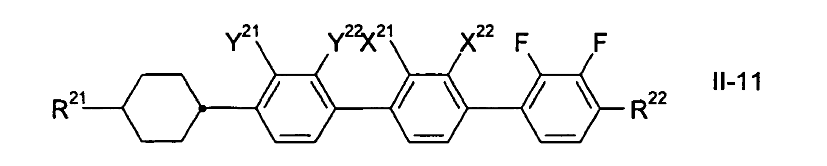 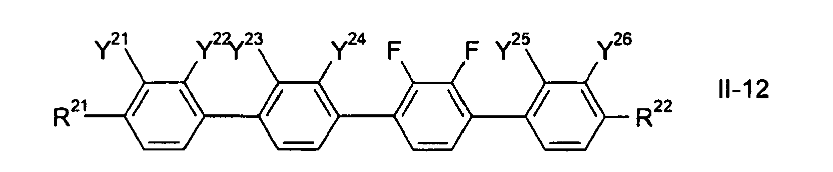 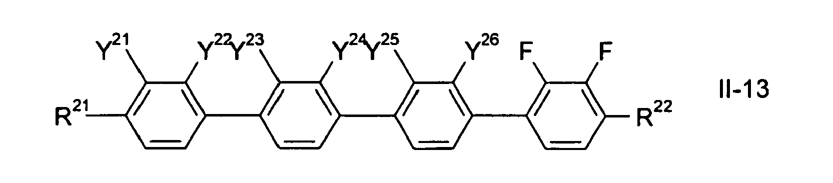 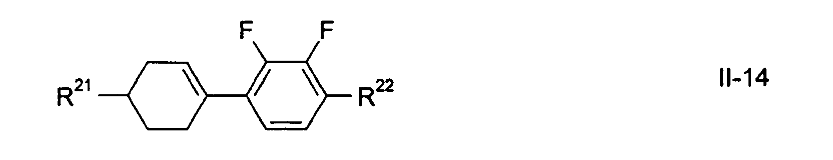 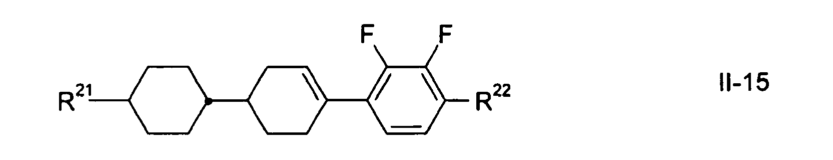 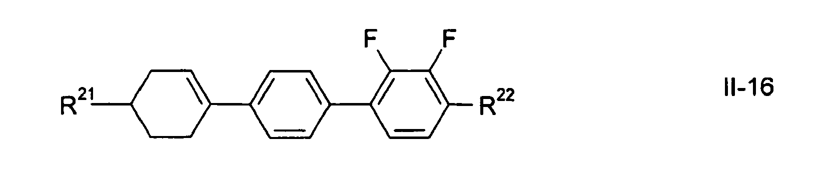 worin
   - R²¹ und R²²: jeweils unabhängig voneinander H, einen unsubstituierten Alkyl- oder Alkenylrest mit bis zu 15 C- Atomen, wobei in diesen Resten auch eine oder mehrere CH₂-Gruppen durch -O-, -S-, 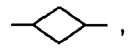 -C≡C-, -CF₂-O-, -O-CF₂-, -CO-O- oder -O-CO- so ersetzt sein können, dass O-Atome nicht direkt miteinander verknüpft sind,
   - Y²¹ bis Y²⁶: unabhängig voneinander H oder F, und
   - X²¹ und X²²: beide H oder einer von X²¹ und X²² H und der andere F,
   jedoch bevorzugt höchstens vier, besonders bevorzugt höchstens drei und ganz besonders bevorzugt einer oder zwei, von Y²¹ bis Y²⁶, X²¹ und X²² F,
   bedeuten und
c) eine dielektrisch neutrale Komponente *(Komponente C*), die aus einer oder mehreren Verbindungen ausgewählt aus der Gruppe der Formeln V-1 bis V-14 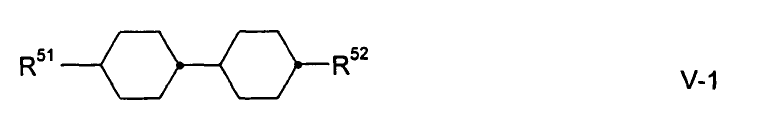 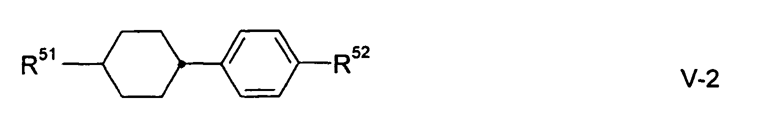 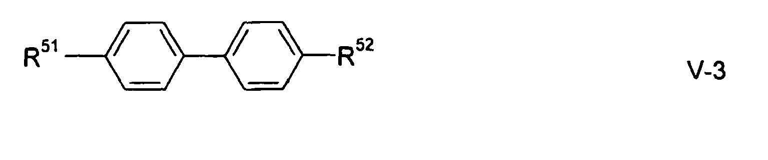 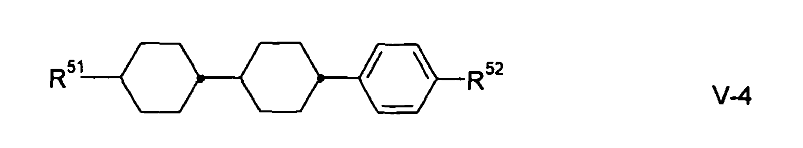 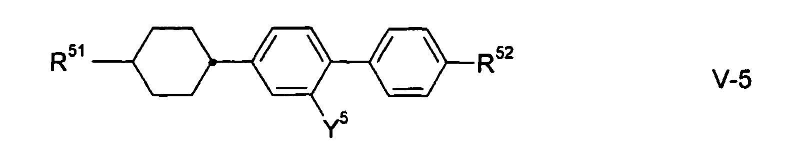 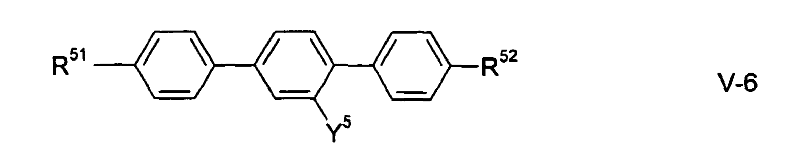 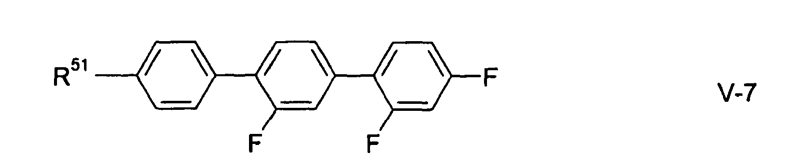 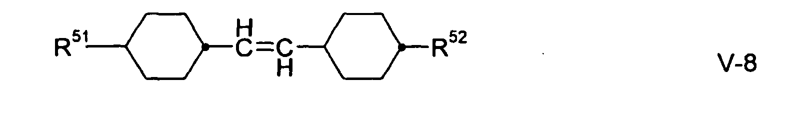 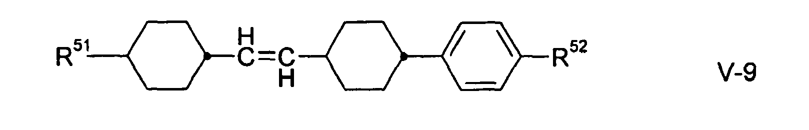 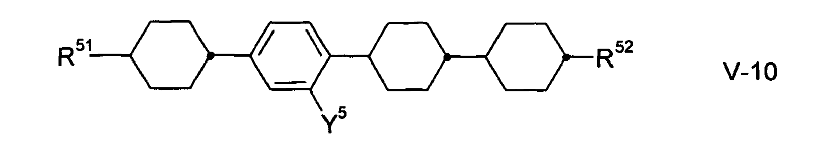 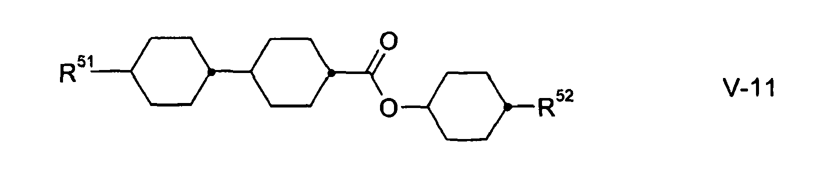 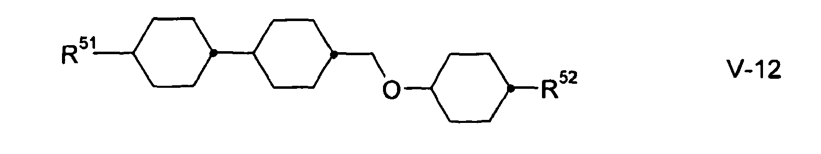 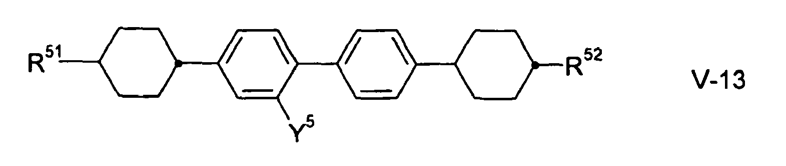 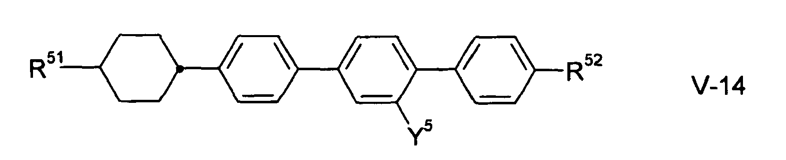 worin
   - R⁵¹ und R⁵²: jeweils unabhängig voneinander, eine der für R¹¹ und R¹² gegebenen Bedeutung haben und
   - Y⁵: H oder F bedeutet,
   enthält.
   Gegebenefalls enthält das Medium eine oder mehrere Verbindungen ausgewählt aus der Gruppe der Verbindungen der Formeln III und IV 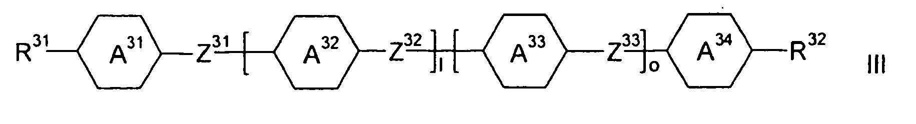 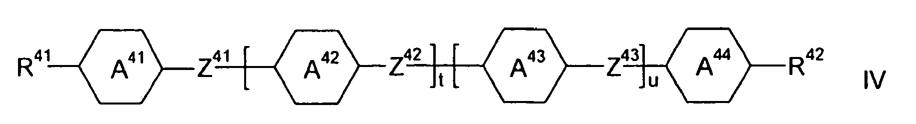 worin
   - R²¹ und R²²: jeweils unabhängig voneinander H, einen unsubstituierten Alkyl- oder Alkenylrest mit bis zu 15 C-Atomen, wobei in diesen Resten auch eine oder mehrere CH₂-Gruppen durch -O-, -S-, -C≡C-, -CF₂-O-, -O-CF₂-, -CO-O- oder -O-CO- so ersetzt sein können, dass O-Atome nicht direkt miteinander verknüpft sind, bevorzugt einen unsubstituierten Alkyl-, Alkenyl-, Alkoxy- oder Alkenyloxyrest, besonders bevorzugt einer von R²¹ und R²² einen Alkyl- oder Alkenylrest und der andere einen Alkyl-, Alkenyl-, Alkoxy- oder Alkenyloxyrest, bevorzugt unabhängig voneinander Alkyl mit 1 bis 7 C-Atomen, bevorzugt *n*-Alkyl, besonders bevorzugt *n*-Alkyl mit 1 bis 5 C-Atomen, Alkoxy mit 1 bis 7 C-Atomen, bevorzugt *n*- Alkoxy, besonders bevorzugt n-Alkoxy mit 1 bis 5 C- Atomen oder Alkoxyalkyl, Alkenyl oder Alkenyloxy mit 2 bis 7 C-Atomen, bevorzugt mit 2 bis 4 C-Atomen, bevorzugt Alkenyl, wobei in allen Gruppen eine oder mehrere H- Atome durch Halogenatome, bevorzugt F-Atome, ersetzt sein können,
   besonders bevorzugt einer von R²¹ und R²², bevorzugt R²¹, einen Alkyl- oder Alkenylrest und der andere einen Alkyl-, Alkenyl-, Alkoxy- oder Alkenyloxyrest, besonders bevorzugt R²¹ geradkettiges Alkyl, insbesondere CH₃-, C₂H₅-, *n*-C₃H₇, *n*-C₄H₉- oder n-C₅H₁₁-, oder Alkenyl, insbesondere CH₂=CH-, *E*-CH₃-CH=CH-, CH₂=CH-CH₂-CH₂-, *E*-CH₃-CH=CH-CH₂-CH₂- oder *E*-*n*-C₃H₇-CH=CH-,
   - R³¹, R³², R⁴¹ und R⁴²: jeweils unabhängig voneinander eine der für R²¹ und R²² gegebenen Bedeutung haben und bevorzugt Alkyl mit 1 bis 7 C-Atomen, bevorzugt *n*-Alkyl und besonders bevorzugt n-Alkyl mit 1 bis 5 C-Atomen, Alkoxy mit 1 bis 7 C-Atomen, bevorzugt *n*-Alkoxy und besonders bevorzugt *n*-Alkoxy mit 2 bis 5 C-Atomen oder Alkoxyalkyl, Alkenyl oder Alkenyloxy mit 2 bis 7 C-Atomen, bevorzugt mit 2 bis 4 C-Atomen, bevorzugt Alkenyloxy,
   besonders bevorzugt einer von R³¹ und R³², bevorzugt R³¹, einen Alkyl- oder Alkenylrest und der andere einen Alkyl-, Alkenyl-, Alkoxy- oder Alkenyloxyrest, besonders bevorzugt R³¹ geradkettiges Alkyl, insbesondere CH₃-, C₂H₅-, *n*-C₃H₇, *n*-C₄H₉- oder *n*-C₅H₁₁-, oder Alkenyl, insbesondere CH₂=CH-, *E*-CH₃-CH=CH-, CH₂=CH-CH₂-CH₂-, *E*-CH₃-CH=CH-CH₂-CH₂- oder E-*n*-C₃H₇-CH=CH-,
   einer der vorhandenen Ringe 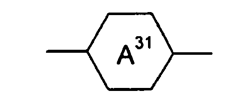 bis 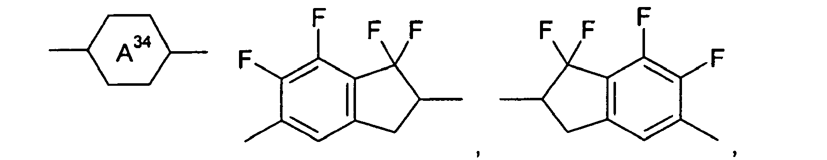 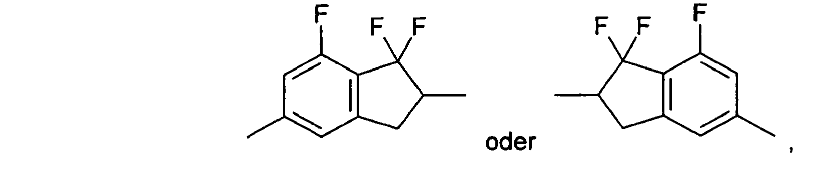 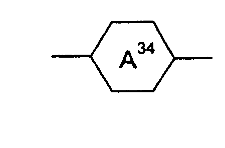 bevorzugt 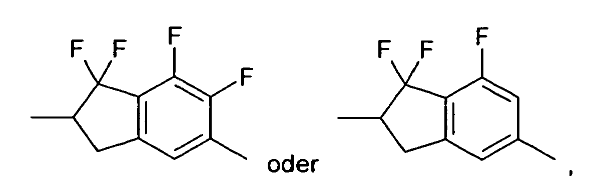 und die anderen, soweit vorhanden, jeweils unabhängig voneinander 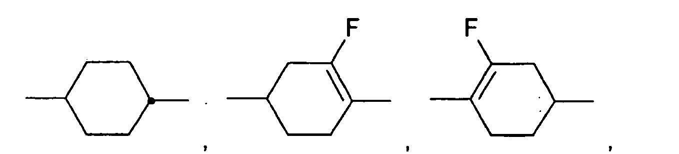 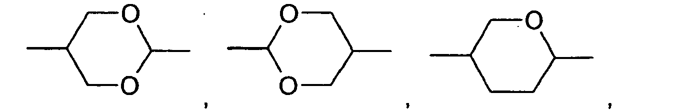 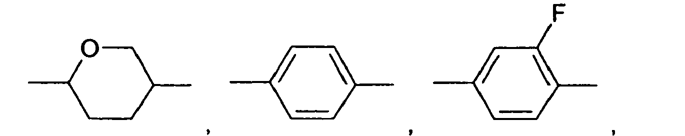 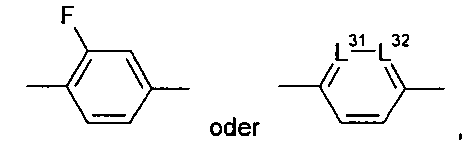 mit
   - L³¹ und L³²: unabhängig voneinander =C(X³)- und einer von L³¹ und L³² alternaiv auch =N-, wobei bevorzugt mindestens einer von L³¹ und L³² =C(-F)- und der andere =C(-F)- oder =C(-Cl)-, besonders bevorzugt L³¹ und L³² beide =C(-F)- und
   - X³: F, Cl, OCF₃, CF₃, CH₃, CH₂F, CHF₂, bevorzugt F oder Cl, besonders bevorzugt F,
   bevorzugt 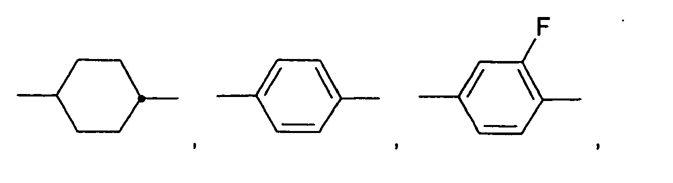 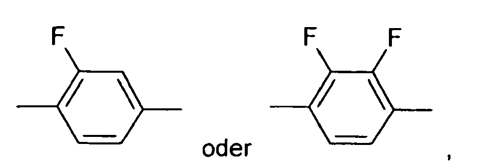 besonders bevorzugt 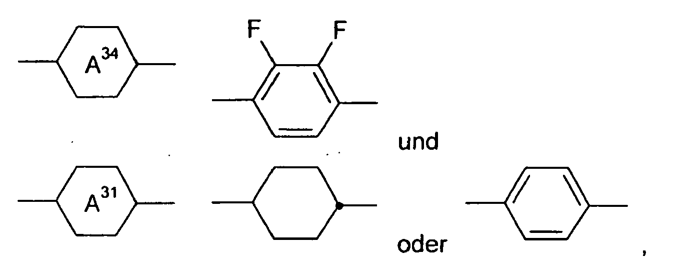 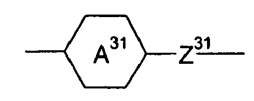 zusammen optional auch eine Einfachbindung,
   wobei für den Fall, dass 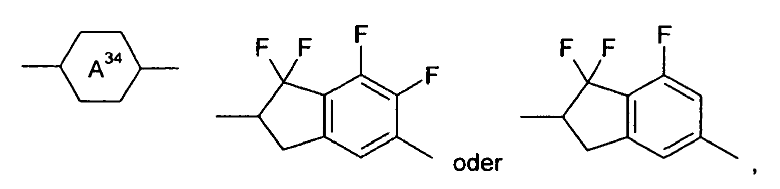 bedeutet, dann bevorzugt
   - R³²: H,
   einer der vorhandenen Ringe 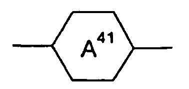 bis 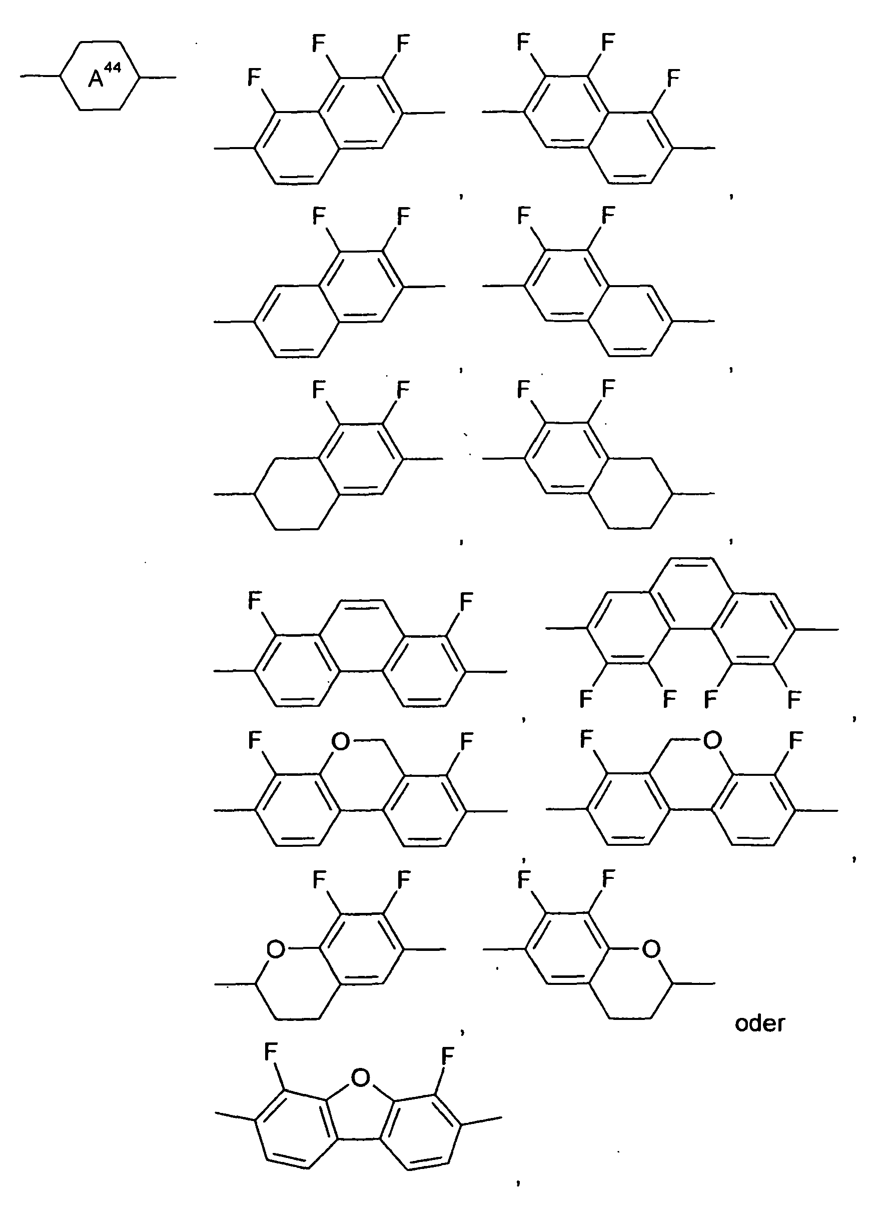 und die anderen, soweit vorhanden, jeweils unabhängig voneinander 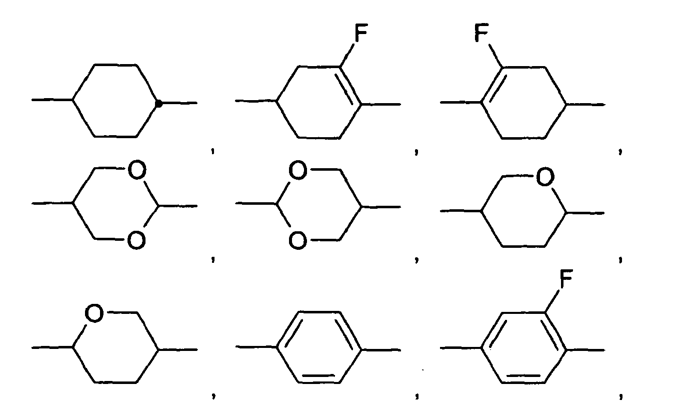 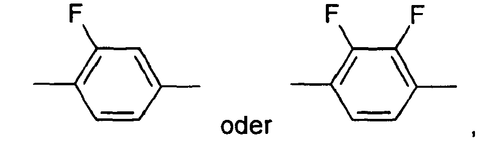 bevorzugt 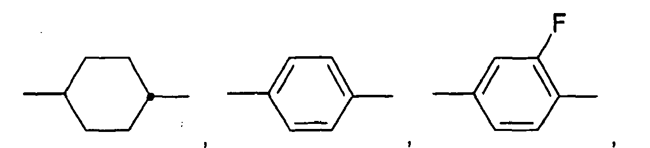 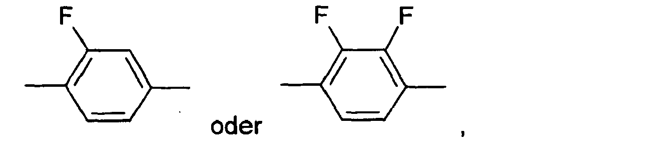 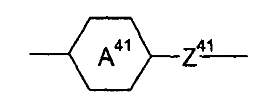 zusammen optional auch eine Einfachbindung,
   - Z³¹ bis Z³³ und Z⁴¹ bis Z⁴³: jeweils unabhängig voneinander, eine der für Z¹¹ bis Z¹³ gegebene Bedeutung haben und bevorzugt -CH₂-CH₂-, -CH₂-O-, -CH=CH-, -C=C-, -COO- oder eine Einfachbindung, bevorzugt -CH₂-CH₂-, -CH₂-O- oder eine Einfachbindung und besonders bevorzugt -CH₂-O- oder eine Einfachbindung,
   - Z³¹ bis Z⁴³: bevorzugt jeweils unabhängig voneinander -CH₂-CH₂-, -CH₂-CF₂-, -CF₂-CH₂-, -CF₂-CF₂-, -CH=CH-, -CF=CH-, -CH=CF-, -C=C-, -CH₂-O-, -O-CH₂-, -CO-O-, -O-CO-, -CF₂-O-, -O-CF₂- oder eine Einfachbindung, bevorzugt -CH₂-CH₂-, -CH=CH-, -C=C-, -CF₂-O-, -O-CF₂- oder eine Einfachbindung, besonders bevorzugt einer oder, soweit vorhanden, jeweils mehrere von Z²¹ bis Z²³, bzw. Z³¹ bis Z³³, bzw. Z⁴¹ bis Z⁴³ eine Einfachbindung, und ganz besonders bevorzugt alle eine Einfachbindung,
   - t und u: jeweils unabhängig voneinander, 0 oder 1,
   - (t + u): bevorzugt 0 oder 1, bevorzugt 0,
   - I und o: jeweils unabhängig voneinander 0 oder 1 und
   - (l + o): bevorzugt 0 oder 1
   bedeuten und gegebenenfalls
d) eine chirale Komponente (*Komponente D*), die aus einer oder mehreren chiralen Verbindungen besteht,
enthält.

Vorzugsweise sind die erfindungsgemäßen Medien dielektrisch negativ.

Vorzugsweise enthält das erfindungsgemäße Medium eine, zwei, drei, vier oder mehr, vorzugsweise zwei oder drei oder mehr, Verbindungen der Formel I.

Besonders bevorzugt sind Verbindungen der Formel I, worin
a) R¹¹ und/oder R¹² H, Alkyl, Alkenyl, Alkoxy, Oxaalkyl oder Alkenyloxy, bevorzugt mit bis zu 6 C-Atomen, R¹¹ ganz besonders bevorzugt Alkoxy oder Alkenyloxy und R¹² ganz besonders bevorzugt Alkyl oder Oxaalkyl bedeuten oder
b) R¹¹ und R¹² beide Alkyl bedeuten, wobei der Alkylrest gleich oder verschieden sein kann oder
c) R¹¹ geradkettiges Alkoxy und R¹² geradkettiges Alkyl oder Oxaalkyl bedeutet.

Falls R¹¹ und/oder R¹² Alkenyl bedeuten, so ist dieses vorzugsweise CH₂=CH-, CH₃-CH=CH-, CH₂=CH-C₂H₄- oder CH₃-CH=CH-C₂H₄-.

Falls R¹¹ und/oder R¹² Oxaalkyl bedeuten, so ist dieses vorzugsweise CH₃-O-CH₂-, CH₃-O-C₂H₄-, C₂H₅-CH=CH-CH₂-, C₂H₅-CH=CH-C₂H₄- oder CH₃-O-C₃H₆-, bevorzugt CH₃-O-CH₂-, CH₃-O-C₂H₄- oder CH₃-O-C₃H₆-, und besonders bevorzugt CH₃-O-CH₂-.

Falls R¹¹ und/oder R¹² Alkyl bedeuten, so ist dieses vorzugsweise Methyl, Ethyl, *n*-Propyl, *n*-Butyl oder *n*-Pentyl, bevorzugt Methyl, Ethyl, n-Propyl oder n-Pentyl und besonders bevorzugt Ethyl oder n-Propyl.

Falls R¹¹ und/oder R¹² Alkoxy bedeuten, so ist dieses vorzugsweise Methoxy, Ethoxy oder n-Butoxy, bevorzugt Ethoxy oder n-Butoxy.

Bevorzugt sind die Verbindungen der Formel I ausgewählt aus der Gruppe der Verbindungen der Formeln I-1 bis I-4, bevorzugt aus der Gruppe der Formeln I-1 und I-4, besonders bevorzugt der Formeln I-1 und/oder I-3, 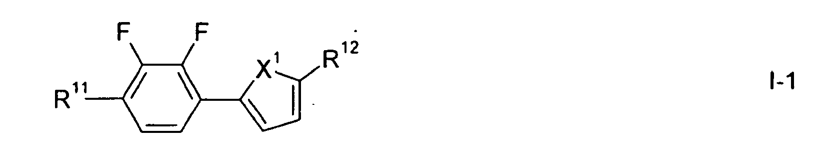 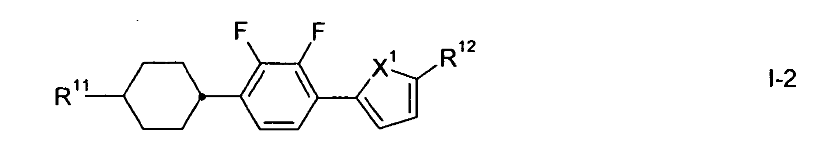 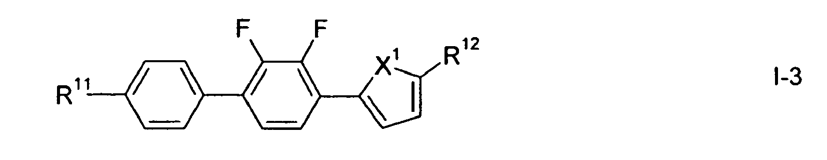 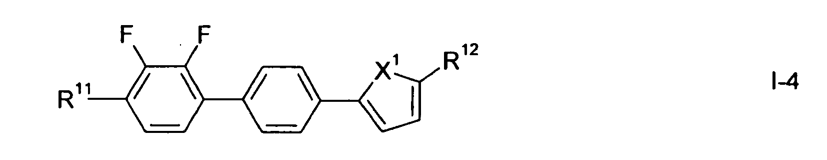 worin die Parameter die jeweiligen oben unter Formel I angegebenen Bedeutungen haben.

Besonders bevorzugt sind die Verbindungen der Formel I ausgewählt aus der Gruppe der Verbindungen der Formeln I-1a bis I-4a, bevorzugt aus der Gruppe der Formeln I-1a und I-3a, besonders bevorzugt der Formeln I-1a und/oder I-3a, 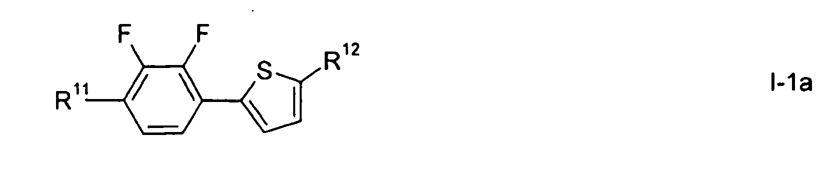 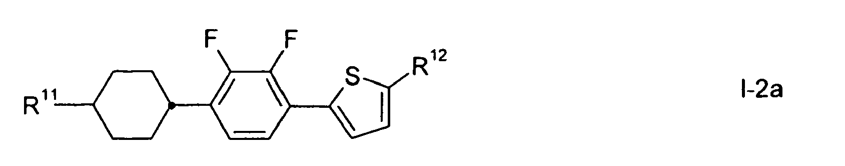 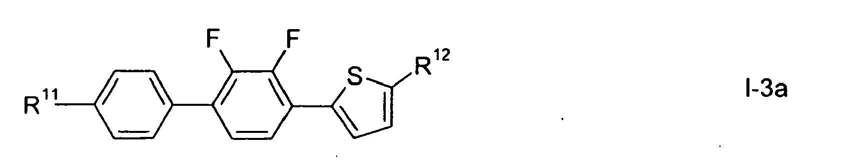 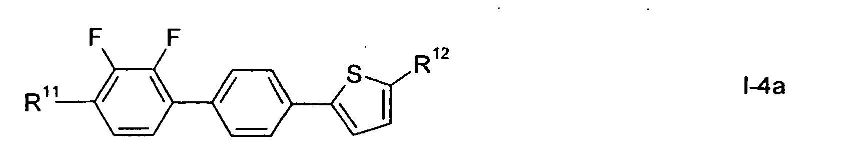 worin die Parameter die jeweiligen oben unter Formel I angegebenen Bedeutungen haben.

In einer weiteren bevorzugten Ausführungsform sind die Verbindungen der Formel I bevorzugt Verbindungen ausgewählt aus der Gruppe der Verbindungen der Formeln I-1b bis I-4b, bevorzugt aus der Gruppe der Formeln I-1b bis I-3b, besonders bevorzugt der Formeln I-1b und/oder I-1b und/oder I-3b, 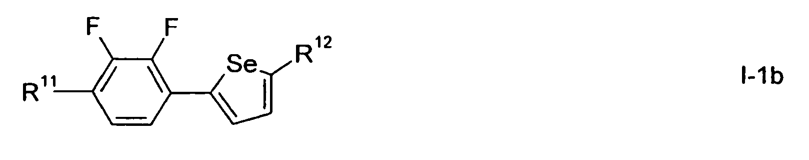 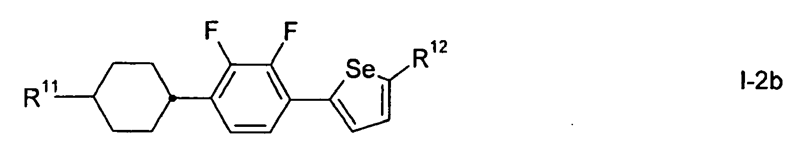 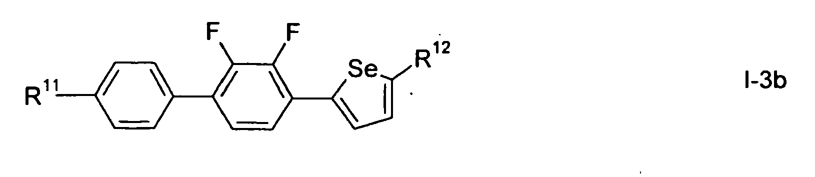 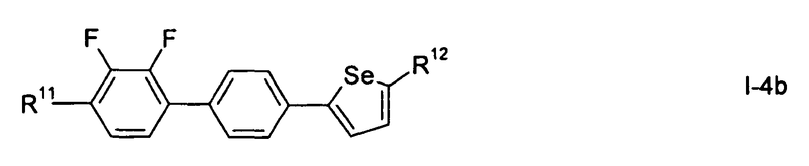 worin die Parameter die jeweiligen oben unter Formel I angegebenen Bedeutungen haben.

Bevorzugt bedeuten in den Formeln II-1 bis II-16
- R²¹: Alkyl oder Alkenyl und
- R²²: Alkyl, Alkenyl, Alkoxy oder Alkenyloxy, bevorzugt (O)CᵥH₂ᵥ₊₁ und
- v: eine ganze Zahl von 1 bis 6.

In einer weiteren bevorzugten Ausführungsform enthält das Medium eine oder mehrere Verbindungen der Formel II-1, ausgewählt aus der Gruppe der Verbindungen der Formeln II-1a bis 11-1d, bevorzugt der Formeln II-1b und/oder II-1d, besonders bevorzugt der Formel II-1b, 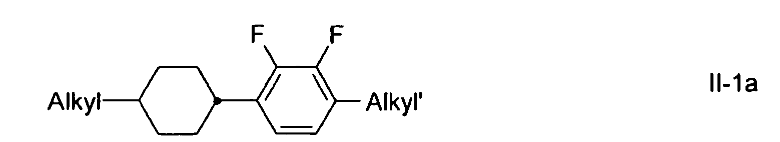 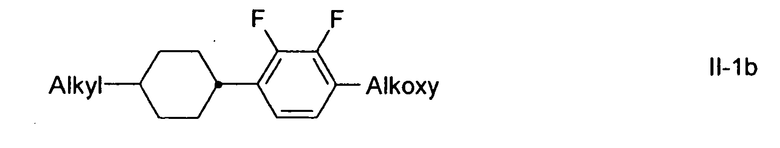 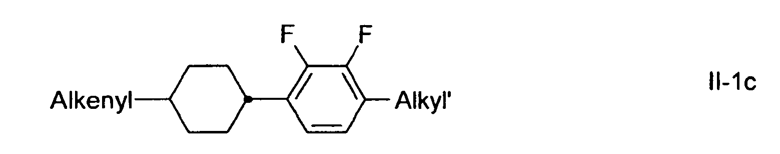 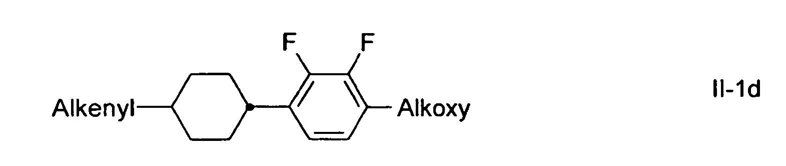 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C- Atomen und
- Alkenyl: Alkenyl mit 2 bis 7 C-Atomen, bevorzugt mit 2 bis 5 C-Atomen bedeuten.

Bevorzugte Verbindungen der Formeln II-1c bzw. II-1d sind die Verbindungen der folgenden Formeln 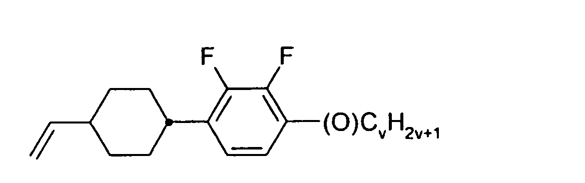 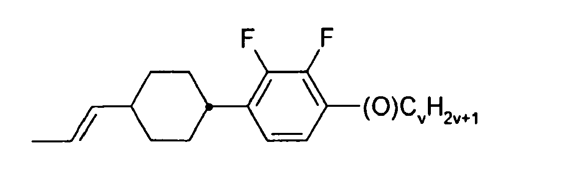 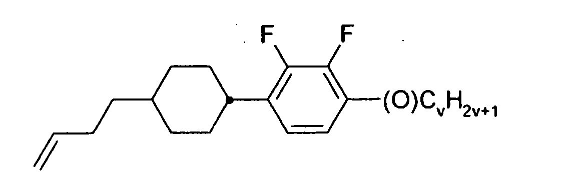 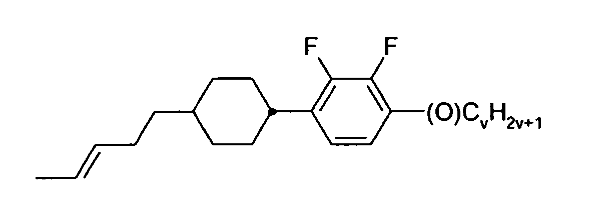 worin v die oben angegebene Bedeutung hat.

Weitere bevorzugte Verbindungen der Formeln II-1 sind die Verbindungen der folgenden Formeln 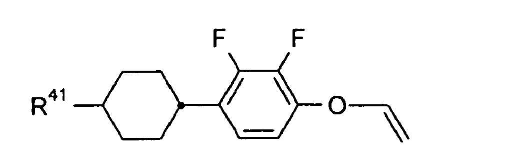 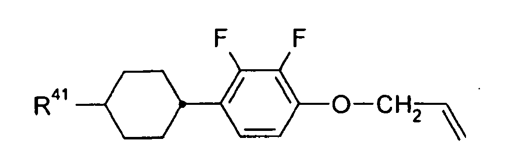 worin R²¹ die oben bei Formel II angegebene Bedeutung hat. In einer bevorzugten Ausführungsform enthält das Medium eine oder mehrere Verbindungen der Formel II-3, ausgewählt aus der Gruppe der Verbindungen der Formeln II-3a bis II-3d, bevorzugt der Formeln II-3b und/oder II-3d, besonders bevorzugt der Formel II-3b, 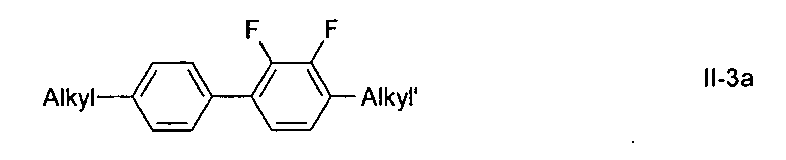 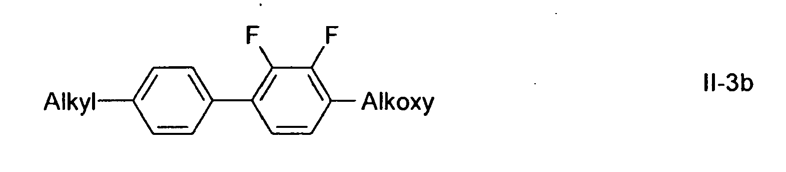 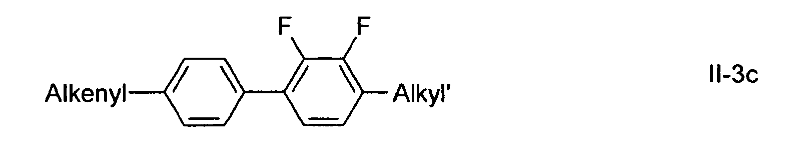 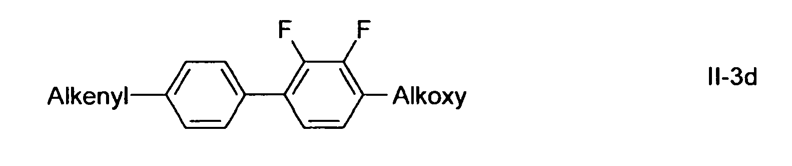 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C- Atomen und
- Alkenyl: Alkenyl mit 2 bis 7 C-Atomen, bevorzugt mit 2 bis 5 C-Atomen bedeuten.

Vorzugsweise beträgt die Konzentration dieser Biphenylverbindungen in der Gesamtmischung 3 % oder mehr, insbesondere 5 % oder mehr, und ganz besonders bevorzugt von 5 bis 25 %.

In einer weiteren bevorzugten Ausführungsform enthält das Medium eine oder mehrere Verbindungen der Formel II-4, ausgewählt aus der Gruppe der Verbindungen der Formeln II-4a bis II-4d, bevorzugt der Formeln II-4a und/oder II-4b, besonders bevorzugt der Formel II-4b, 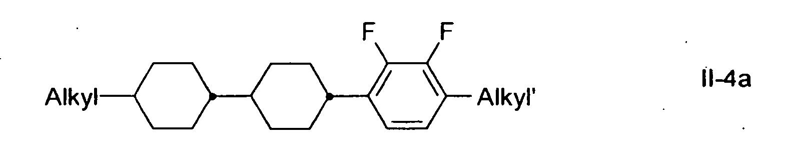 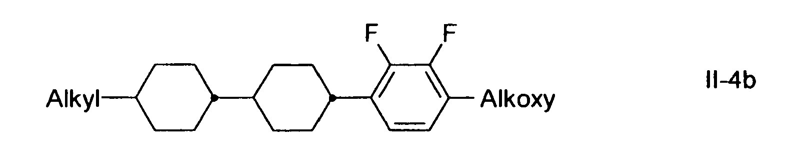 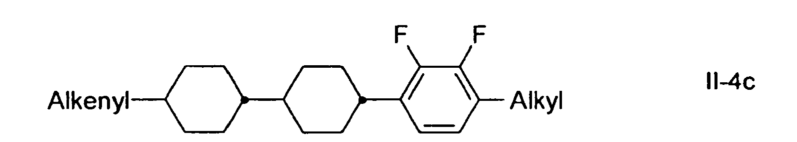 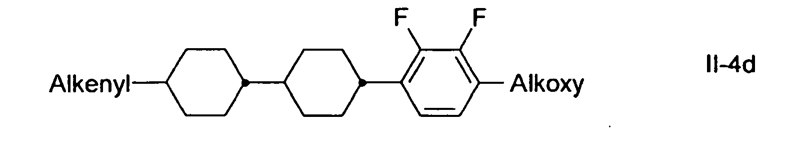 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C- Atomen und
- Alkenyl: Alkenyl mit 2 bis 7 C-Atomen, bevorzugt mit 2 bis 5 C-Atomen bedeuten.

Bevorzugte Verbindungen der Formeln II-4c bzw. II-4d sind die Verbindungen der folgenden Formeln 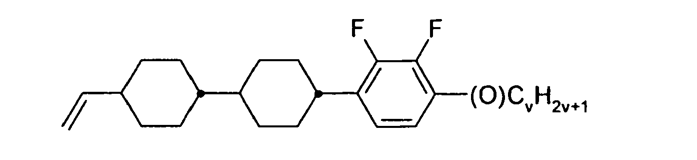 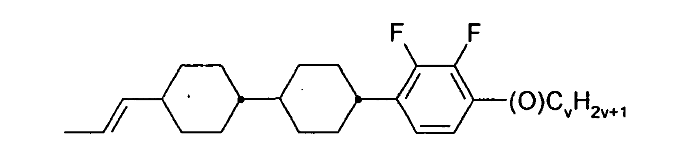 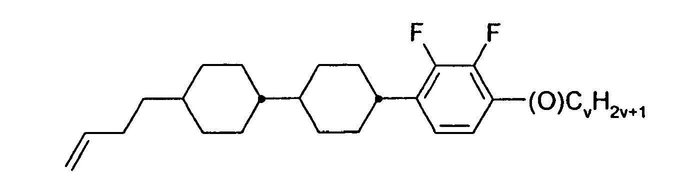 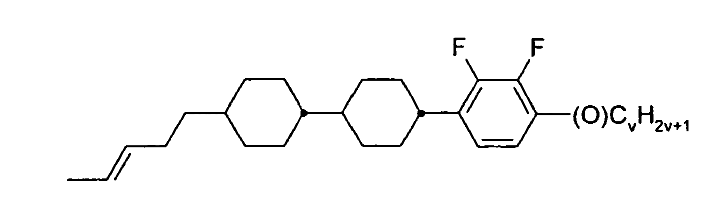 worin v die oben angegebene Bedeutung hat.

In einer weiteren bevorzugten Ausführungsform enthält das Medium eine oder mehrere Verbindungen der Formel II-4 der folgenden Unterformel II-4e 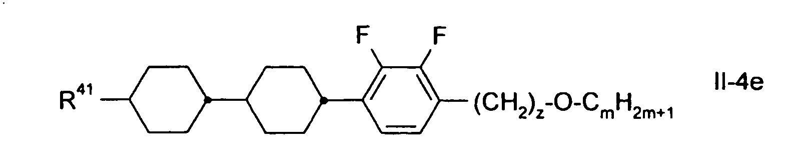 worin
- R²¹: die oben angegebene Bedeutung hat und
- m und z: jeweils unabhängig eine ganze Zahl von 1 bis 6 und
- m + z: bevorzugt eine ganze Zahl von 1 bis 6 bedeuten.

In einer weiteren bevorzugten Ausführungsform enthält das Medium eine oder mehrere Verbindungen der Formel II-5, ausgewählt aus der Gruppe der Verbindungen der Formeln II-5a bis II-5d, bevorzugt der Formeln II-5b und/oder II-5d, 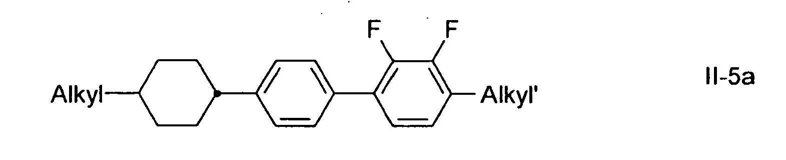 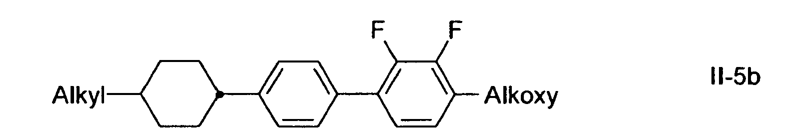 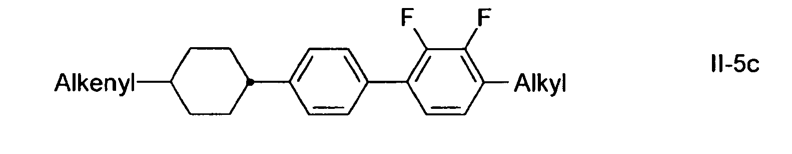 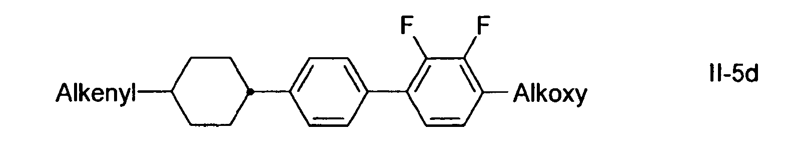 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C- Atomen und
- Alkenyl: Alkenyl mit 2 bis 7 C-Atomen, bevorzugt mit 2 bis 5 C-Atomen bedeuten.

Bevorzugte Verbindungen der Formeln 11-5c bzw. II-5d sind die Verbindungen der folgenden Formeln 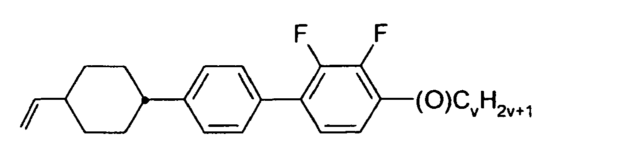 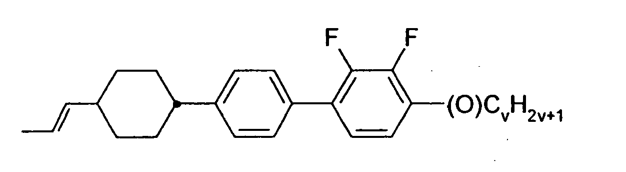 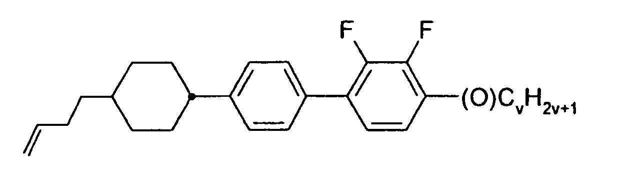 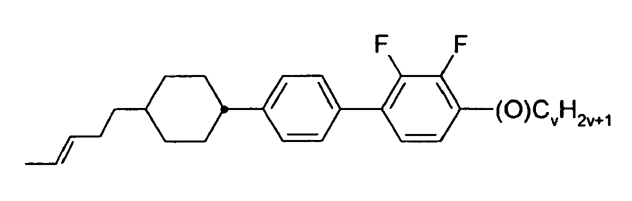 worin v die oben angegebene Bedeutung hat.

In einer weiteren bevorzugten Ausführungsform enthält das Medium eine oder mehrere Verbindungen der Formel II-6, ausgewählt aus der Gruppe der Verbindungen der Formeln II-6a bis II-6d, bevorzugt der Formeln II-6a und/oder II-6c, besonders bevorzugt der Formel II-6a, 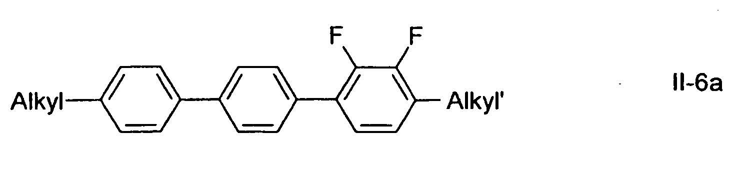 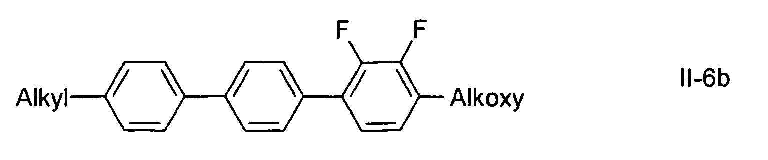 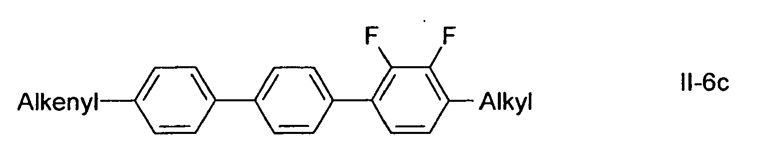 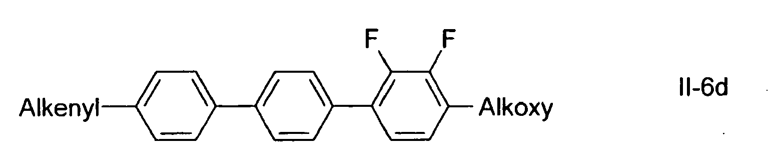 worin
- Alkyl und Alkyl': unabhängig voneinander Alkyl mit 1 bis 7 C-Atomen, bevorzugt mit 2 bis 5 C-Atomen
- Alkoxy: Alkoxy mit bis 1 bis 7 C-Atomen, bevorzugt mit 2 bis 4 C-Atomen und
- Alkenyl: Alkenyl mit 2 bis 7 C-Atomen, bevorzugt mit 2 bis 5 C-Atomen
bedeuten und/oder der Gruppe der Verbindungen der Formeln II-6e bis II-6m 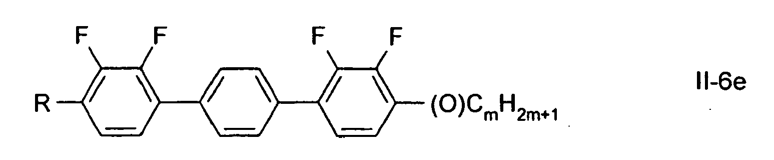 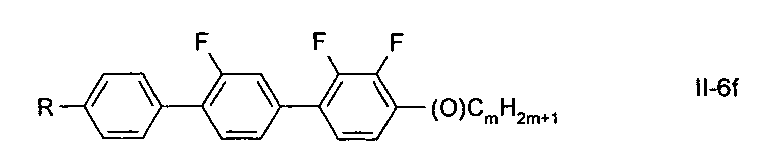 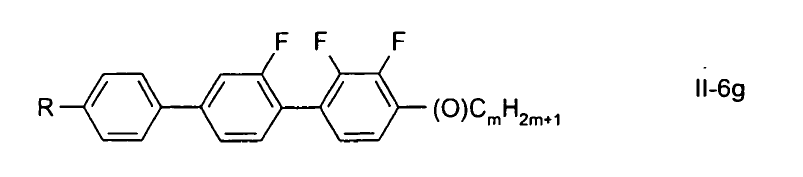 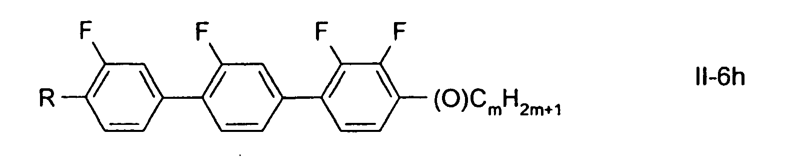 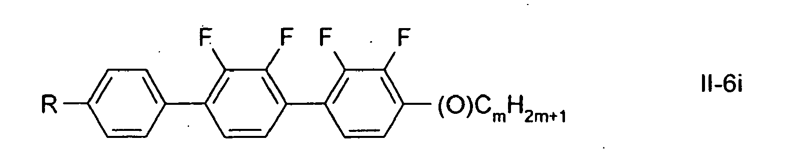 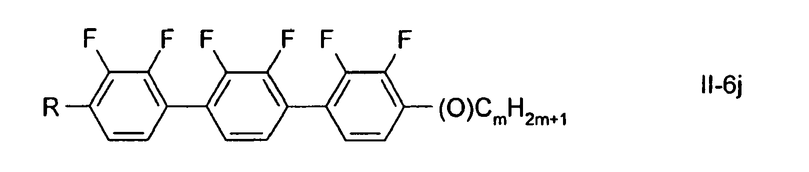 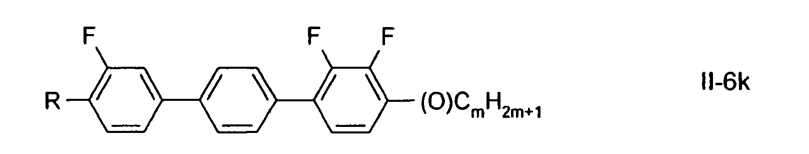 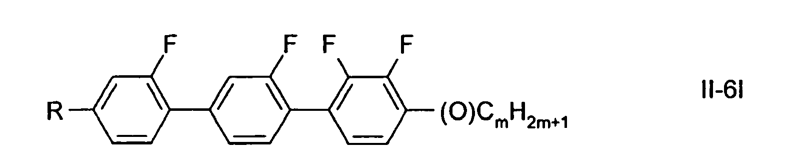 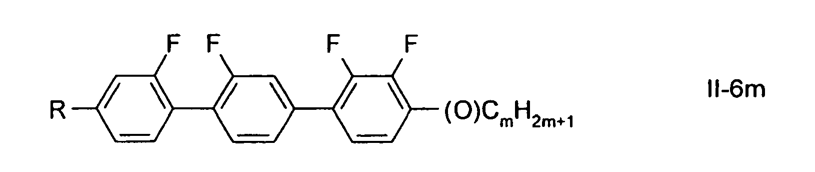 worin
R die oben für R²¹ angegebene Bedeutung hat und
- m: eine ganze Zahl von 1 bis 6 bedeutet.

Bevorzugt bedeutet R geradkettiges Alkyl oder Alkoxy mit jeweils 1 bis 6 C-Atomen oder Alkoxyalkyl, Alkenyl oder Alkenyloxy mit 2-6 C-Atomen, besonders bevorzugt Alkyl mit 1-5 C-Atomen, vorzugsweise Methyl, Ethyl, Propyl, Butyl, oder ferner Alkoxy mit 1-5 C-Atomen, vorzugsweise Hexyl, Methoxy, Ethoxy, Propoxy, oder Butoxy.

In einer weiteren bevorzugten Ausführungsform enthält das Medium eine oder mehrere Verbindungen der Formel II-7, ausgewählt aus der Gruppe der Verbindungen der Formeln II-7a bis II-7d, bevorzugt der Formeln II-7a und/oder II-7c, besonders bevorzugt der Formel II-7a, 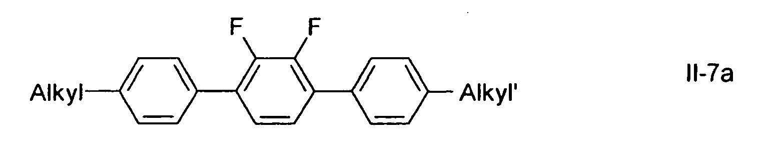 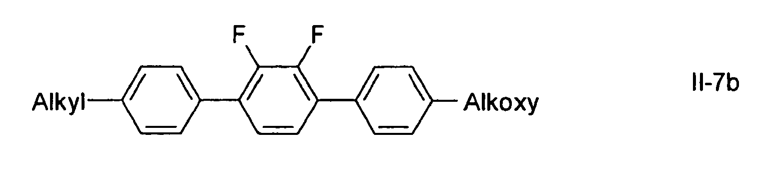 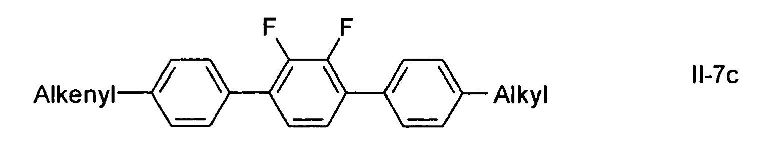 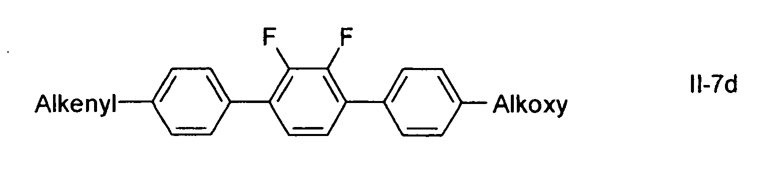 worin
- Alkyl und Alkyl': unabhängig voneinander Alkyl mit 1 bis 7 C-Atomen, bevorzugt mit 2 bis 5 C-Atomen
- Alkoxy: Alkoxy mit bis 1 bis 5 C-Atomen, bevorzugt mit 2 bis 4 C-Atomen und
- Alkenyl: Alkenyl mit 2 bis 7 C-Atomen, bevorzugt mit 2 bis 5 C-Atomen
bedeuten und/oder der Gruppe der Verbindungen der Formeln II-7e bis II-7i 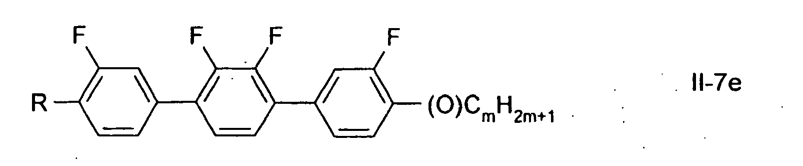 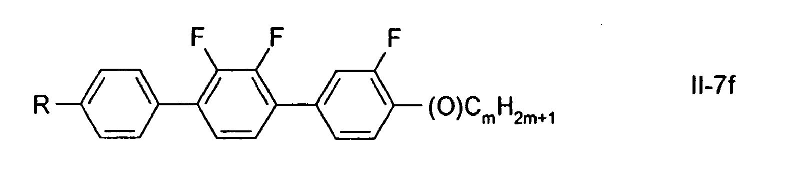 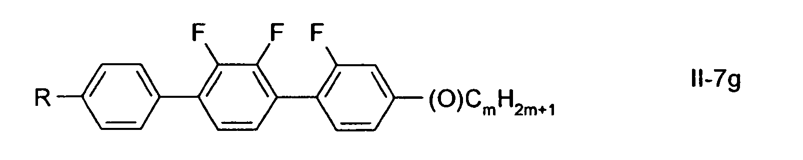 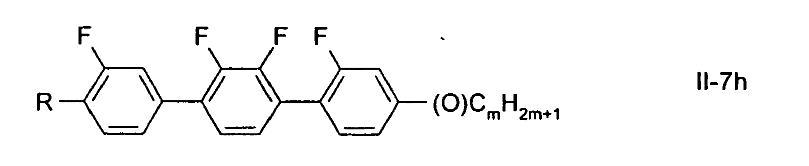 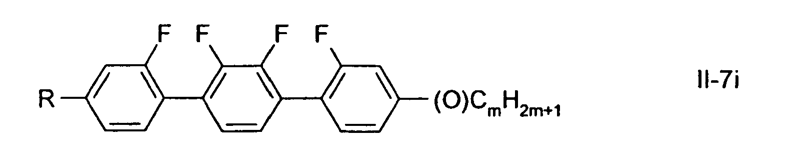 worin
- R die oben für R²¹: angegebene Bedeutung hat und
- m: eine ganze Zahl von 1 bis 6 bedeutet.

Bevorzugt bedeutet R geradkettiges Alkyl oder Alkoxy mit jeweils 1 bis 6 C-Atomen oder Alkylalkoxy, Alkenyl oder Alkenyloxy mit 2-6 C-Atomen, besonders bevorzugt Alkyl mit 1-5 C-Atomen, vorzugsweise Methyl, Ethyl, Propyl, Butyl, oder ferner Alkoxy mit 1-5 C-Atomen, vorzugsweise Hexyl, Methoxy, Ethoxy, Propoxy, oder Butoxy.

In einer weiteren bevorzugten Ausführungsform enthält das Medium eine oder mehrere Verbindungen der Formel II-8, ausgewählt aus der Gruppe der Verbindungen der Formeln II-8a und II-8b, besonders bevorzugt II-8b 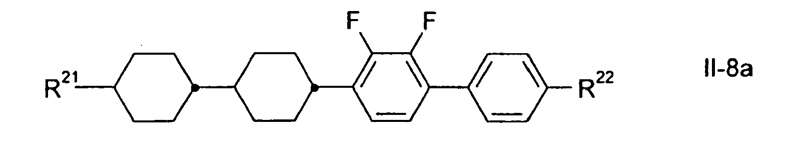 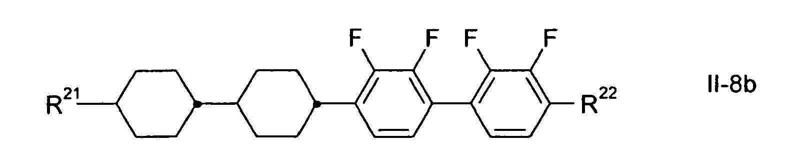 worin die Parameter die jeweiligen oben angegebenen Bedeutungen haben.

In einer weiteren bevorzugten Ausführungsform enthält das Medium eine oder mehrere Verbindungen der Formel II-9, ausgewählt aus der Gruppe der Verbindungen der Formeln II-9a bis II-9d 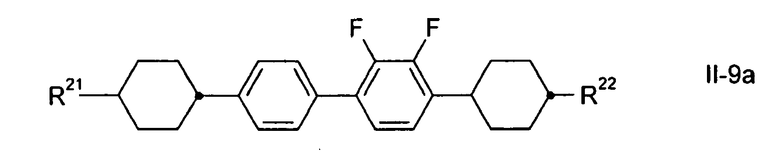 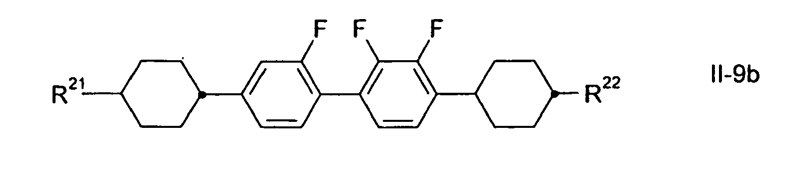 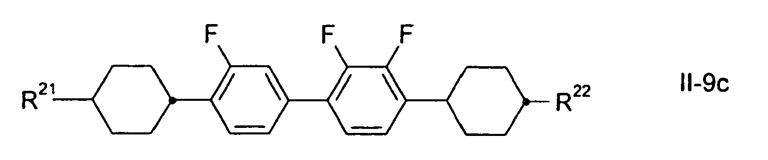 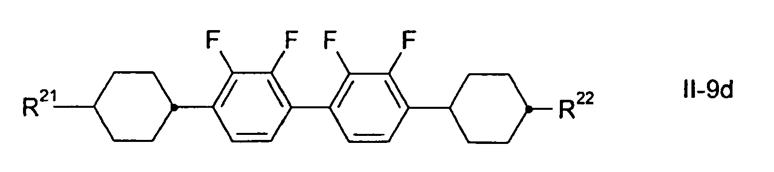 worin die Parameter die jeweiligen oben angegebenen Bedeutungen haben und bevorzugt
- R²²: CᵥH₂ᵥ₊₁ und
- v: eine ganze Zahl von 1 bis 6 bedeutet.

In einer weiteren bevorzugten Ausführungsform enthält das Medium eine oder mehrere Verbindungen der Formel II-10, ausgewählt aus der Gruppe der Verbindungen der Formeln II-10a bis II-10e 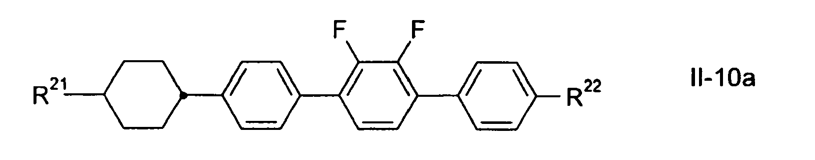 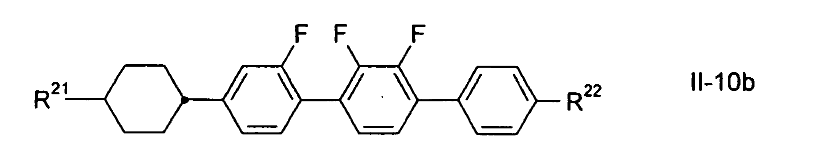 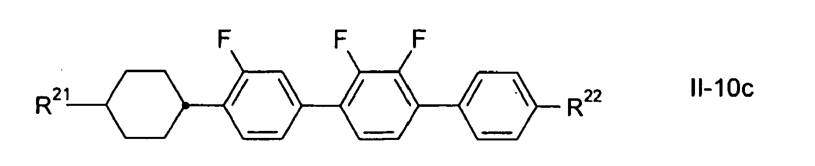 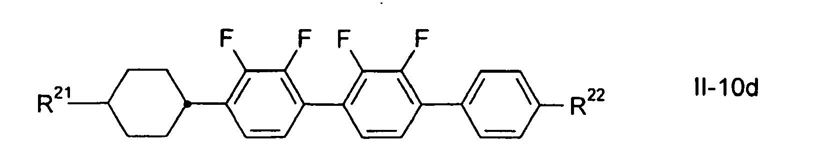 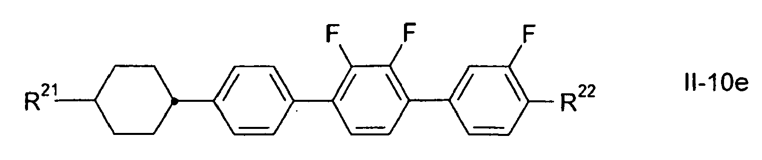 worin die Parameter die jeweiligen oben angegebenen Bedeutungen haben und bevorzugt
- R²²: CᵥH₂ᵥ₊₁ und
- v: eine ganze Zahl von 1 bis 6 bedeutet.

In einer weiteren bevorzugten Ausführungsform enthält das Medium eine oder mehrere Verbindungen der Formel II-11, ausgewählt aus der Gruppe der Verbindungen der Formeln II-11a und II-11b, besonders bevorzugt II-11b 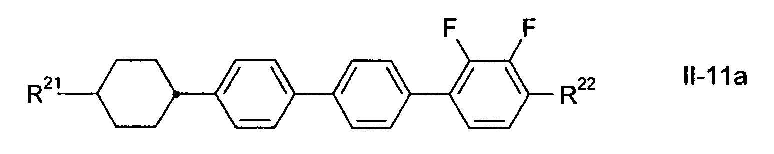 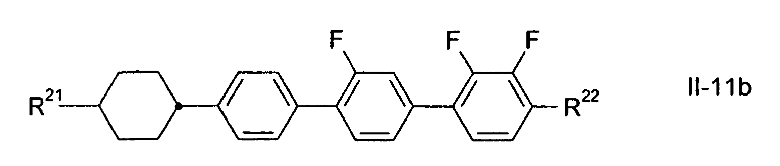 worin die Parameter die jeweiligen oben angegebenen Bedeutungen haben.

In einer weiteren bevorzugten Ausführungsform enthält das Medium eine oder mehrere Verbindungen der Formel II-14, ausgewählt aus der Gruppe der Verbindungen der Formeln II-14a bis II-14d, bevorzugt der Formeln II-14a und/oder II-14b, besonders bevorzugt der Formel II-14b, 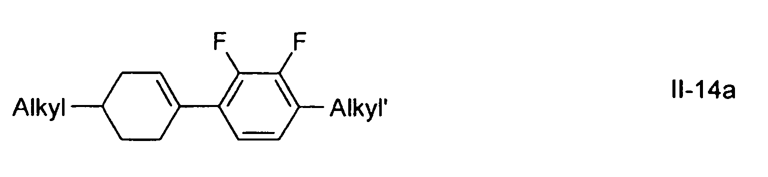 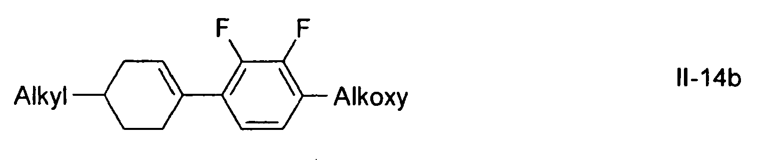 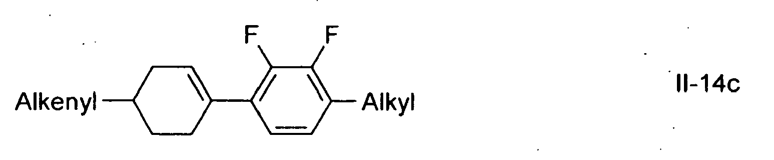 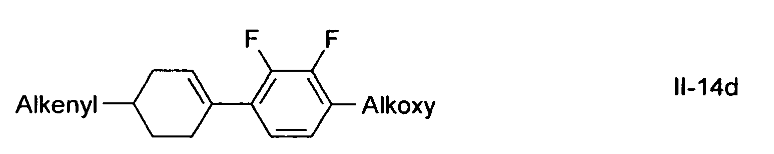 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C- Atomen und
- Alkenyl: Alkenyl mit 2 bis 7 C-Atomen, bevorzugt mit 2 bis 5 C-Atomen bedeuten.

In einer weiteren bevorzugten Ausführungsform enthält das Medium eine oder mehrere Verbindungen der Formel II-15, ausgewählt aus der Gruppe der Verbindungen der Formeln II-15a bis II-15d, bevorzugt der Formeln II-15a und/oder II-15b, besonders bevorzugt der Formel II-15b, 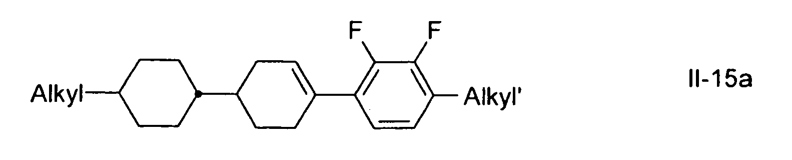 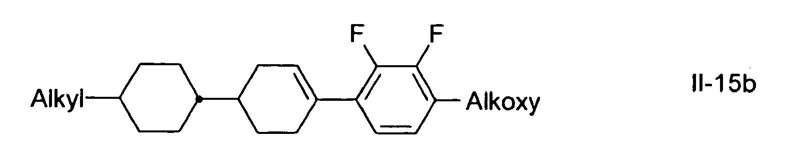 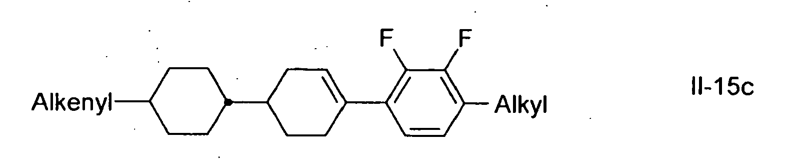 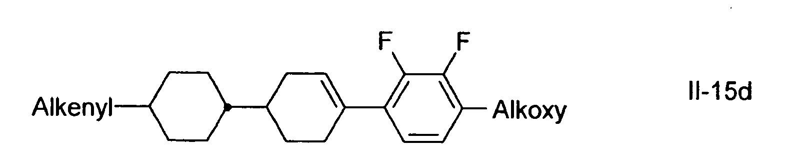 worin
- Alkyl und Alkyl': unabhängig voneinander Alkyl mit 1 bis 7 C-Atomen, bevorzugt mit 2 bis 5 C-Atomen
- Alkoxy: Alkoxy mit 1 bis 7 C-Atomen, bevorzugt mit 2 bis 4 C- Atomen und
- Alkenyl: Alkenyl mit 2 bis 7 C-Atomen, bevorzugt mit 2 bis 5 C-Atomen bedeuten.

Bevorzugt enthält das Medium eine oder mehrere Verbindungen der Formel III, ausgewählt aus der Gruppe der Verbindungen der Formeln III-1 und III-2, bevorzugt der Formel III-2, 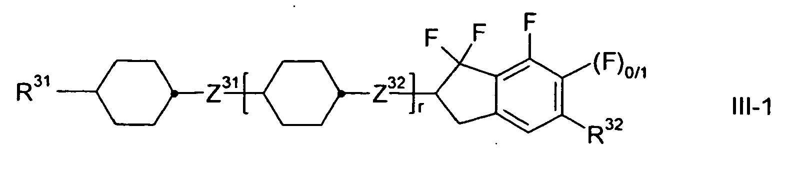 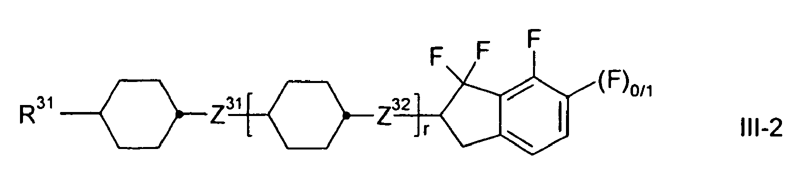 worin die Parameter die jeweiligen oben bei Formel III angegebenen Bedeutungen haben und bevorzugt
- R³¹: Alkyl oder Alkenyl und
- R³²: Alkyl, Alkenyl, Alkoxy oder Alkenyloxy bedeuten,
- Z³¹,: eine Einfachbindung und
- r: 0
bedeuten.

Ganz besonders bevorzugt sind die Verbindungen der Formel III-2a 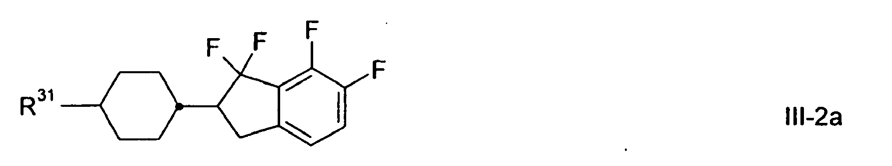 worin R³¹ die oben angegebene Bedeutung besitzt und bevorzugt Alkyl mit 1 bis 7, bevorzugt mit 1 bis 5, C-Atomen, bevorzugt n-Alkyl bedeutet.

In einer weiteren bevorzugten Ausführungsform enthält das Medium (zusätzlich) eine oder mehrere Verbindungen der Formel IV bevorzugt ausgewählt aus der Gruppe der Verbindungen der Formeln IV-1 bis IV-8, bevorzugt der Formeln IV-7 und/oder IV-8 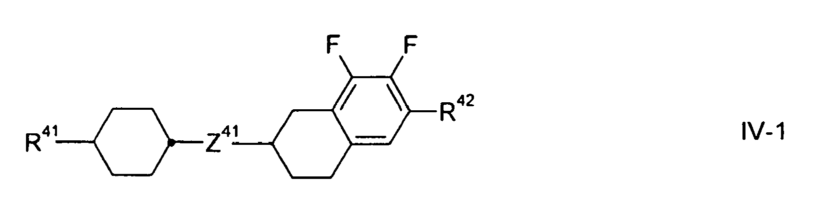 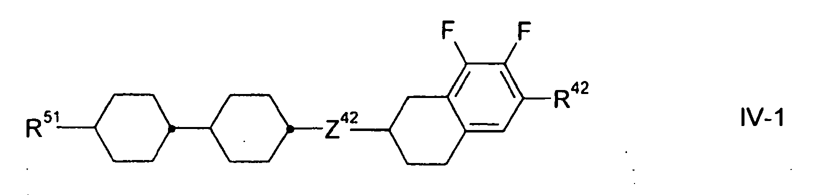 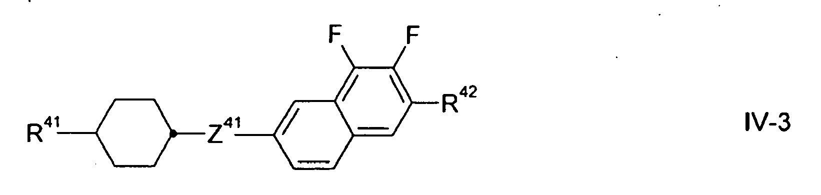 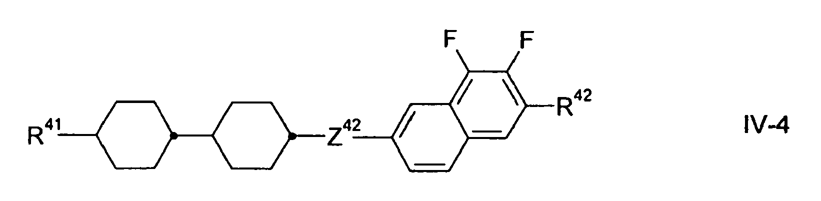 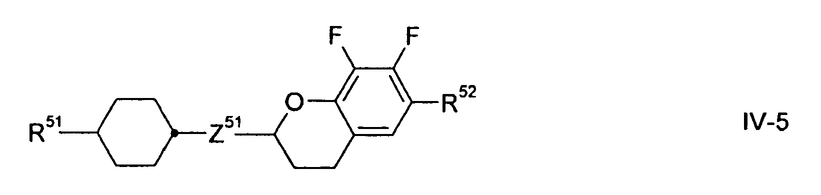 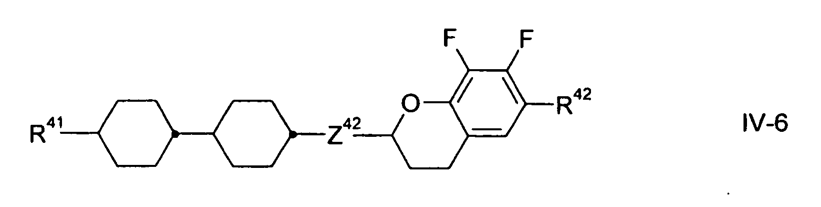 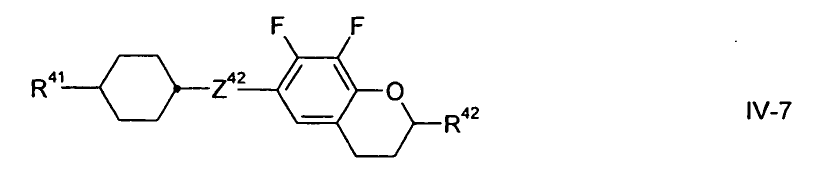 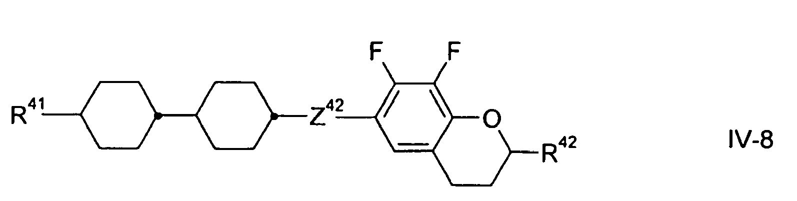 worin die Parameter die jeweiligen oben bei Formel IV angegebenen Bedeutungen haben und bevorzugt
- R⁴¹: Alkyl oder Alkenyl und
- R⁴²: Alkyl, Alkenyl, Alkoxy oder Alkenyloxy bedeuten.

In dieser Ausführungsform, bevorzugt wenn das Medium eine oder mehrere Verbindungen der Formeln IV-7 und/oder IV-8 enthält, kann das Medium im Wesentlichen aus Verbindungen der Formeln I, II, IV und V bestehen.

In einer weiteren bevorzugten Ausführungsform enthält das Medium (zusätzlich) eine oder mehrere Verbindungen die eine fluorierte Phenanthren-Einheit aufweisen, bevorzugt Verbindungen der Formel IV, bevorzugt ausgewählt aus der Gruppe der Verbindungen der Formeln IV-9 und IV-10 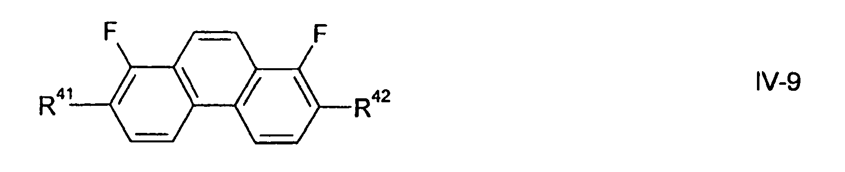 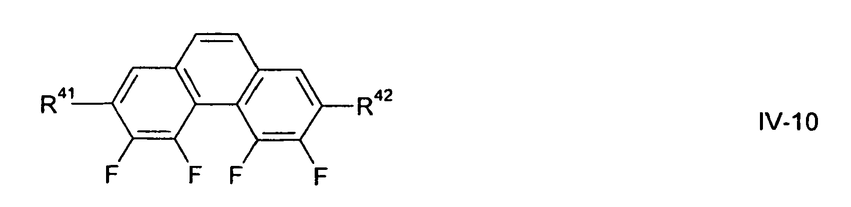 worin die Parameter die jeweiligen oben bei Formel IV angegebenen Bedeutungen haben und bevorzugt
- R⁴¹: Alkyl oder Alkenyl und
- R⁴²: Alkyl, Alkenyl, Alkoxy oder Alkenyloxy bedeuten.

In einer weiteren bevorzugten Ausführungsform enthält das Medium (zusätzlich) eine oder mehrere Verbindungen die eine fluorierte Dibenzofuran-Einheit aufweisen, bevorzugt Verbindungen der Formel IV, bevorzugt der Formel IV-11 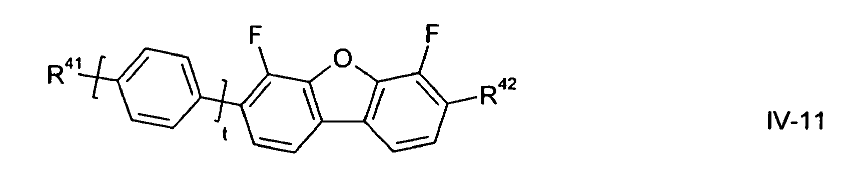 worin die Parameter die jeweiligen oben bei Formel IV angegebenen Bedeutungen haben und bevorzugt
- R⁴¹: Alkyl oder Alkenyl und
- R⁴²: Alkyl, Alkenyl, Alkoxy oder Alkenyloxy bedeuten.

In einer weiteren bevorzugten Ausführungsform enthält das Medium (zusätzlich) eine oder mehrere Verbindungen der Formel IV ausgewählt aus der Gruppe der Verbindungen der Formeln IV-12 bis I-15, bevorzugt aus der Gruppe der Formeln IV-12 und IV-14, besonders bevorzugt der Formel IV-12, 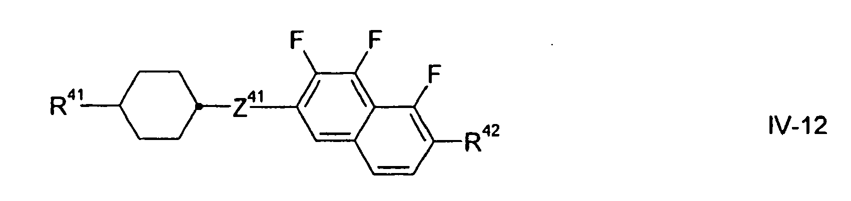 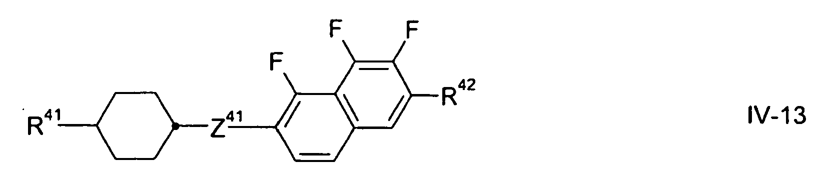 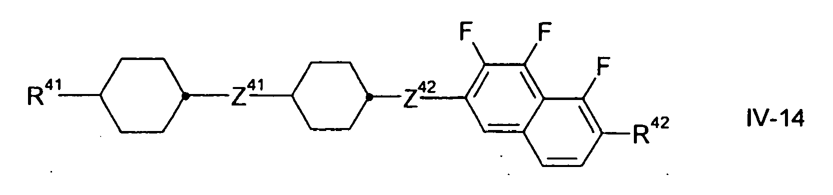 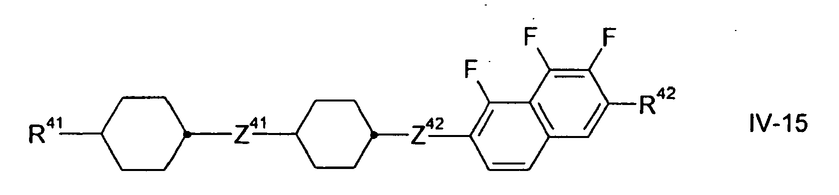 worin die Parameter die jeweiligen oben unter Formel IV angegebenen Bedeutungen haben und bevorzugt
in Formel IV-12 und IV-13
- Z⁴¹: -CH₂-CH₂-, -CH₂-O- oder eine Einfachbindung, bevorzugt -CH₂-O- oder eine Einfachbindung, besonders bevorzugt -CH₂-O-,
in Formel IV-14 und IV-15
- Z⁴¹: -CH₂-CH₂- oder eine Einfachbindung, bevorzugt eine Einfachbindung und
- Z⁴²: -CH₂-CH₂-, -CH₂-O- oder eine Einfachbindung, bevorzugt -CH₂-O- oder eine Einfachbindung, besonders bevorzugt -CH₂-O-
bedeuten.

Ganz besonders bevorzugt sind die Verbindungen der Formeln IV-12 und IV-14 und insbesondere die Verbindungen der folgenden Formeln IV-12a, IV-12b, IV-14a und IV-14b 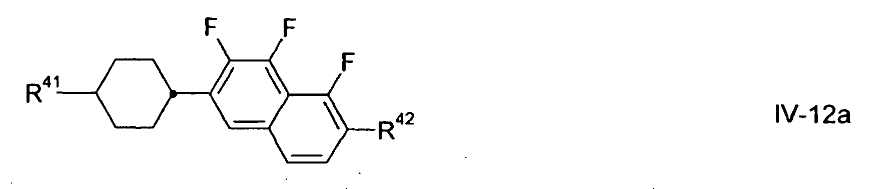 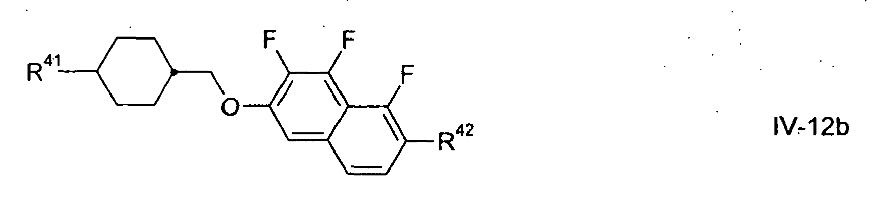 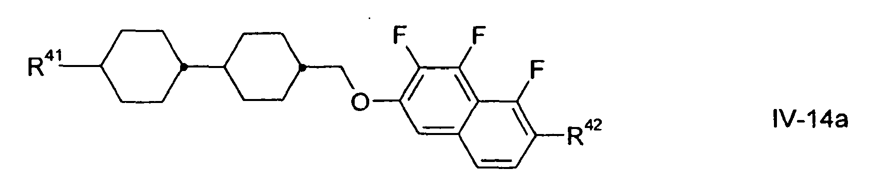 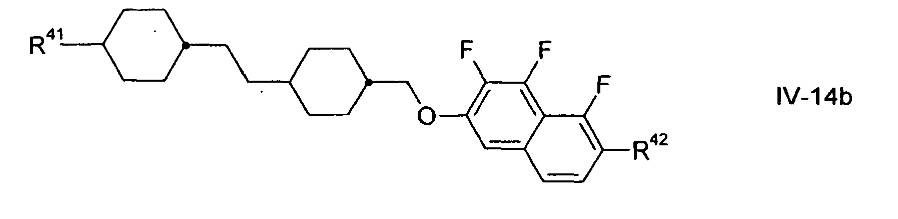 worin die Parameter die jeweiligen oben unter Formel IV angegebenen Bedeutungen besitzen und R⁴¹ bevorzugt Alkyl mit 1 bis 7, bevorzugt mit 1 bis 5, C-Atomen, bevorzugt n-Alkyl und R⁴² bevorzugt Alkoxy mit 1 bis 5, bevorzugt mit 2 bis 4, C-Atomen bedeuten.

In einer weiteren bevorzugten Ausführungsform enthält das Medium eine oder mehrere Verbindungen der Formel V worin mindestens zwei der Ringe

Ganz besonders bevorzugt sind die Verbindungen der Formeln IV-12 und IV-14 und insbesondere die Verbindungen der folgenden Formeln IV-12a, IV-12b, IV-14a und IV-14b 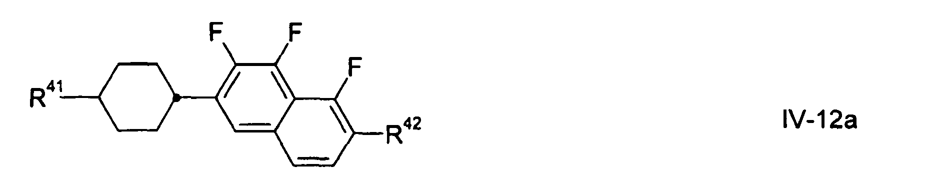 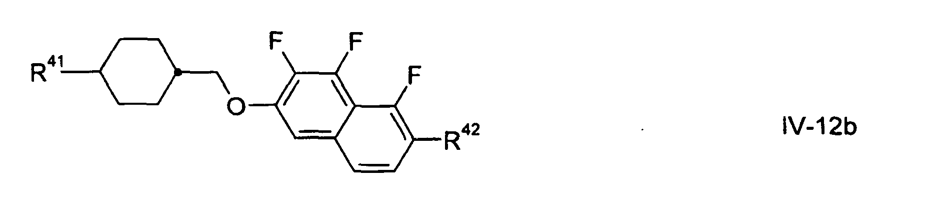 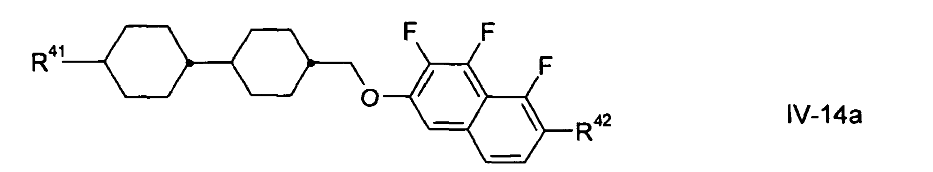 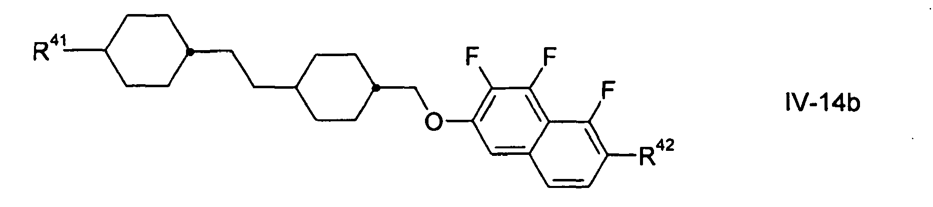 worin die Parameter die jeweiligen oben unter Formel IV angegebenen Bedeutungen besitzen und R⁴¹ bevorzugt Alkyl mit 1 bis 7, bevorzugt mit 1 bis 5, C-Atomen, bevorzugt n-Alkyl und R⁴² bevorzugt Alkoxy mit 1 bis 5, bevorzugt mit 2 bis 4, C-Atomen bedeuten.

In den Verbindungen der Formeln V-1 bis V-14 bedeuten bevorzugt
- R⁵¹: Alkyl oder Alkenyl und
- R⁵²: Alkyl, Alkenyl oder Alkoxy, bevorzugt Alkyl oder Alkenyl, besonders bevorzugt Alkenyl.

Besonders bevorzugt enthält das Medium eine oder mehrere Verbindung(en) der Formel V-1, ausgewählt aus der Gruppe
- der Formeln V-1c, insbesondere bevorzugt
- der Formel V-1 in der R⁵¹ Vinyl oder 1-Propenyl und R⁵² Alkyl, bevorzugt n-Alkyl, besonders bevorzugt R⁵¹⁵¹ Vinyl und R⁵² Propyl bedeuten und
- der Formeln V-1d, insbesondere bevorzugt
- der Formel V-1 in der R⁵¹⁵¹ und R⁵²unabhängig voneinander Vinyl oder 1-Propenyl, bevorzugt und R⁵¹ Vinyl und besonders bevorzugt R⁵¹ und R⁵² Vinyl bedeuten.

In einer weiteren bevorzugten Ausführungsform enthält das Medium eine oder mehrere Verbindungen der Formel V-1, ausgewählt aus der Gruppe der Verbindungen der Formeln V-1 a bis V-1 e, bevorzugt der Formeln V-1 a und/oder Formeln V-1 c und/oder V-1d, besonders bevorzugt der Formeln V-1 c und/oder V-1 d und ganz besonders bevorzugt der Formel V-1c und der Formel V-1d, 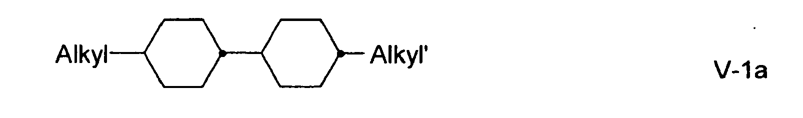 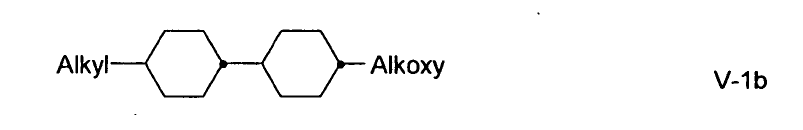 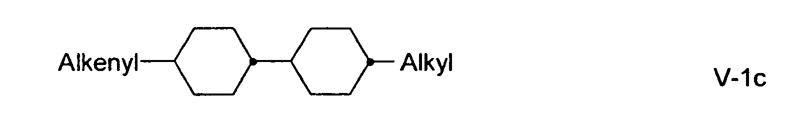 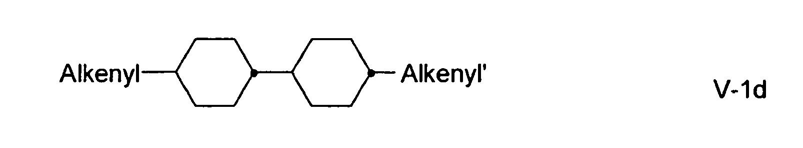 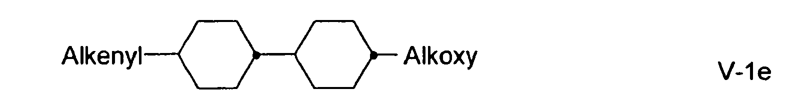 worin
- Alkyl und Alkyl': unabhängig voneinander Alkyl mit 1 bis 7 C-Atomen, bevorzugt mit 2 bis 5 C-Atomen,
- Alkoxy: Alkoxy mit 1 bis 5 C-Atomen, bevorzugt mit 2 bis 4 C- Atomen und
- Alkenyl und Alkenyl': unabhängig voneinander, Alkenyl mit 2 bis 7 C- Atomen, bevorzugt mit 2 bis 5 C-Atomen
bedeuten.

Besonders bevorzugt enthält das erfindungsgemäße Medium Verbindungen der Formel V-1 in Mengen von 20 Gew.-% oder mehr, insbesondere von 25 Gew.-% oder mehr, ganz besonders bevorzugt von 30 Gew.-% oder mehr, insbesondere Verbindungen der Formel V-1c' 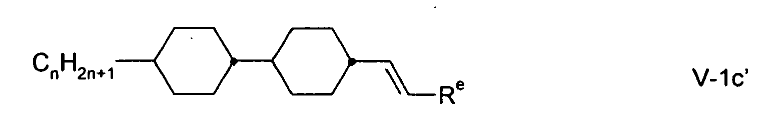 worin
- n: 3, 4 oder 5 und
- R^{e}: H, CH₃ oder C₂H₅
bedeuten.

In einer weiteren bevorzugten Ausführungsform enthält das Medium eine oder mehrere Verbindungen der Formel V-1, ausgewählt aus der Gruppe der Verbindungen der Formeln V-1a und V-1 b, bevorzugt der Formeln V-1a und/oder V-1 b, besonders bevorzugt der Formel V-1a. Bevorzugt enthält das Medium in dieser Ausführungsform keine Verbindungen der Formel III, bevorzugt der Formel V-1, mit einer Alkenylendgruppe oder mehreren Alkenylendgruppen, also bevorzugt keine Verbindungen der Formeln V-1c bis V-1e. Besonders bevorzugt enthält das Medium in dieser Ausführungsform eine oder mehrere Verbindungen ausgewählt aus der Gruppe der Verbindungen der Formeln CC-2-3, CC-2-5, CC-3-4 und CC-3-5, wobei die Akronyme (Abkürzungen) in den Tabellen A bis C erläutert und in Tabelle D durch Beispiele illustriert sind.

In einer weiteren bevorzugten Ausführungsform enthält das Medium eine oder mehrere Verbindungen der Formel V-2, ausgewählt aus der Gruppe der Verbindungen der Formeln V-2a bis V-2d, bevorzugt der Formeln V-2a und/oder V-2b, besonders bevorzugt der Formel V-2b, 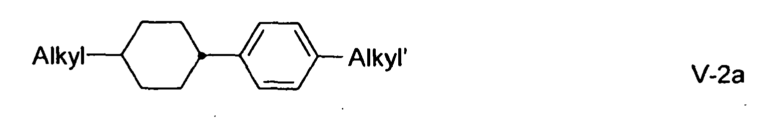 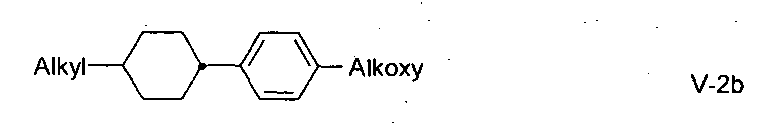 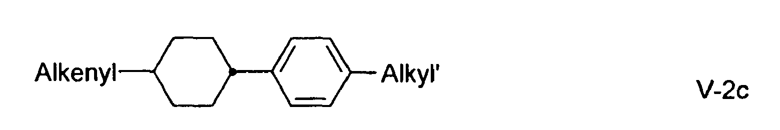 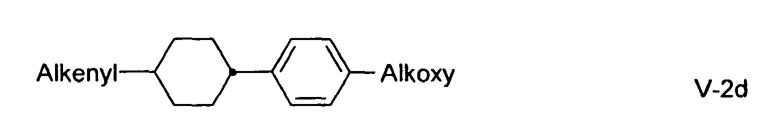 worin
- Alkyl und Alkyl': unabhängig voneinander Alkyl mit 1 bis 7 C-Atomen, bevorzugt mit 2 bis 5 C-Atomen,
- Alkoxy: Alkoxy mit 1 bis 5 C-Atomen, bevorzugt mit 2 bis 4 C- Atomen und
- Alkenyl: Alkenyl mit 2 bis 7 C-Atomen, bevorzugt mit 2 bis 5 C-Atomen
bedeuten.

In einer weiteren bevorzugten Ausführungsform enthält das Medium eine oder mehrere Verbindungen der Formel V-3, ausgewählt aus der Gruppe der Verbindungen der Formeln V-3a bis V-3c 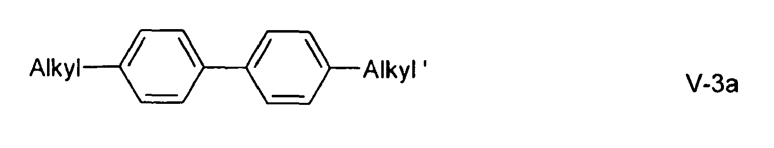 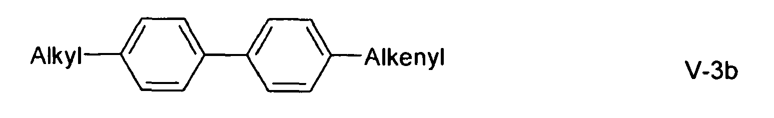 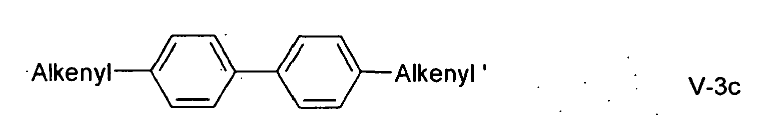 worin
- Alkyl und Alkyl': unabhängig voneinander Alkyl mit 1 bis 7 C-Atomen, bevorzugt mit 2 bis 5 C-Atomen und
- Alkenyl: Alkenyl mit 2 bis 7 C-Atomen, bevorzugt mit 2 bis 5 C-Atomen
bedeuten.

Der Anteil dieser Biphenyle in der Gesamtmischung beträgt vorzugsweise 3 Gew.-% oder mehr, insbesondere 5 Gew.-% oder mehr.

Bevorzugte Verbindungen der Formeln V-3a bzw. V-3b sind die Verbindungen der folgenden Formel 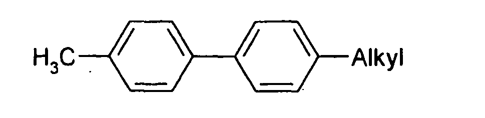 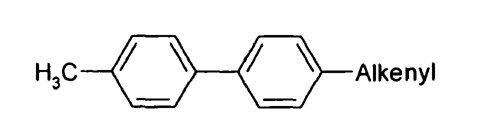 worin die Parameter die jeweiligen oben angegebenen Bedeutungen haben.

Besonders bevorzugte Verbindungen der Formel V-3b sind die Verbindungen der folgenden Formel 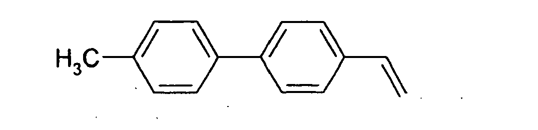 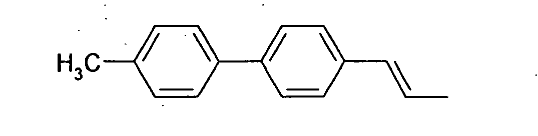 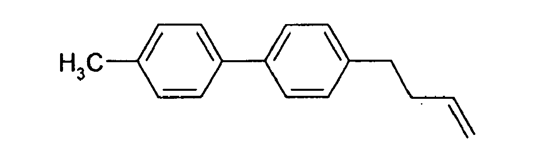 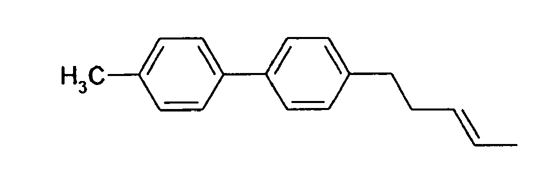 und hiervon insbesondere die der letzten Formel.

In einer bevorzugten Ausführungsform enthält das Medium eine oder mehrere Verbindungen der Formel V-4, insbesondere bevorzugt eine oder mehrere Verbindung(en), in denen R⁵¹ Vinyl oder 1-Propenyl und R⁵² Alkyl, bevorzugt n-Alkyl, besonders bevorzugt R⁵¹ Vinyl und R⁵² Methyl bedeuten.

In einer weiteren bevorzugten Ausführungsform enthält das Medium eine oder mehrere Verbindungen der Formel V-4, ausgewählt aus der Gruppe der Verbindungen der Formeln V-4a bis V-4d, bevorzugt der Formeln V-4a und/oder V-4b, besonders bevorzugt der Formel V-4b, 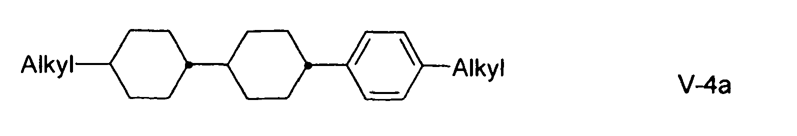 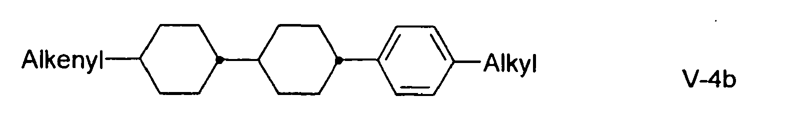 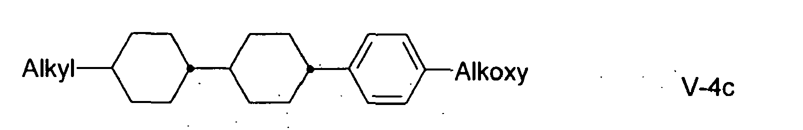 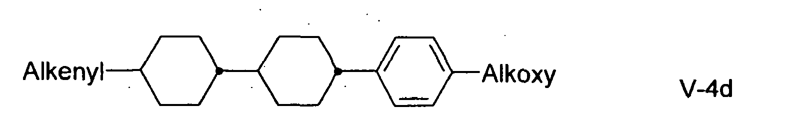 worin
- Alkyl und Alkyl': unabhängig voneinander Alkyl mit 1 bis7 C-Atomen, bevorzugt mit 2 bis 5 C-Atomen,
- Alkoxy: Alkoxy mit bis 1 bis 5 C-Atomen, bevorzugt mit 2 bis 4 C-Atomen und
- Alkenyl: Alkenyl mit 2 bis 7 C-Atomen, bevorzugt mit 2 bis 5 C-Atomen
bedeuten.

In einer bevorzugten Ausführungsform enthält das Medium eine oder mehrere Verbindungen der Formel V-5, insbesondere bevorzugt eine oder mehrere Verbindung(en), in denen R⁵¹ Alkyl, Vinyl oder 1-Propenyl und R⁵² Alkyl, bevorzugt *n*-Alkyl bedeuten.

In einer weiteren bevorzugten Ausführungsform enthält das Medium eine oder mehrere Verbindungen der Formel V-5 ausgewählt aus der Gruppe der Verbindungen der Formeln V-5a bis V-5d, bevorzugt der Formeln V-5a und/oder V-5b, besonders bevorzugt der Formel V-5a, 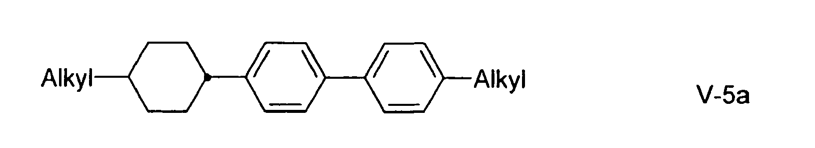 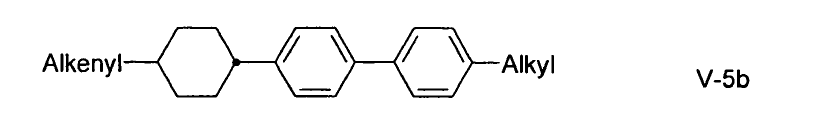 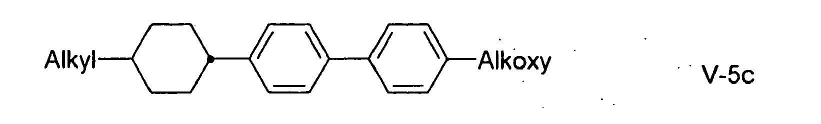 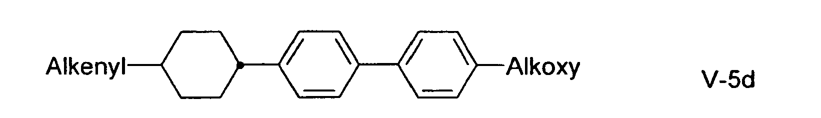 worin
- Alkyl und Alkyl': unabhängig voneinander Alkyl mit 1 bis 7 C-Atomen, bevorzugt mit 2 bis 5 C-Atomen,
- Alkoxy: Alkoxy mit bis 1 bis 5 C-Atomen, bevorzugt mit 2 bis 4 C-Atomen und
- Alkenyl: Alkenyl mit 2 bis 7 C-Atomen, bevorzugt mit 2 bis 5 C-Atomen
bedeuten,
und/oder der Formeln V-5e bis V-5h, bevorzugt der Formeln V-5e und/oder V-5f, besonders bevorzugt der Formel V-5e, 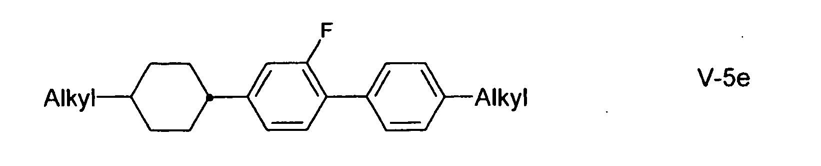 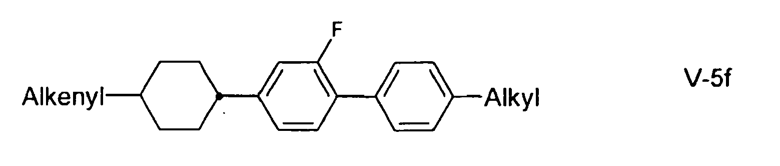 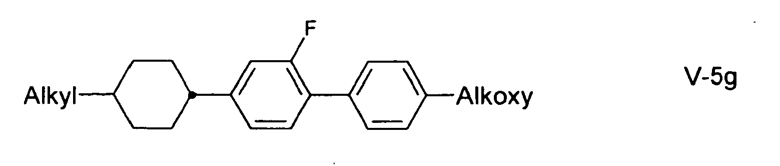 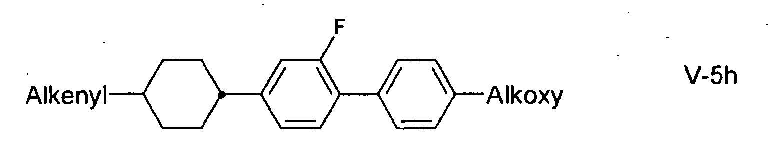 worin
- Alkyl und Alkyl': unabhängig voneinander Alkyl mit 1 bis 7 C-Atomen, bevorzugt mit 2 bis 5 C-Atomen,
- Alkoxy: Alkoxy mit bis 1 bis 5 C-Atomen, bevorzugt mit 2 bis 4 C-Atomen und
- Alkenyl: Alkenyl mit 2 bis 7 C-Atomen, bevorzugt mit 2 bis 5 C-Atomen
bedeuten.

In einer weiteren bevorzugten Ausführungsform enthält das Medium eine oder mehrere Verbindungen der Formel V-6 ausgewählt aus der Gruppe der Verbindungen der Formeln V-6a bis V-6c, bevorzugt der Formeln V-6a und/oder V-6b, besonders bevorzugt der Formel V-6a, 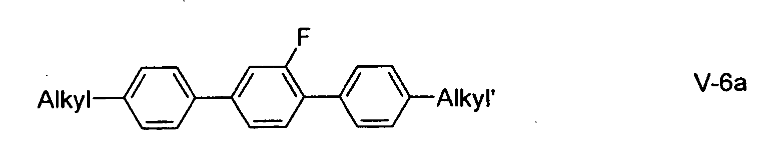 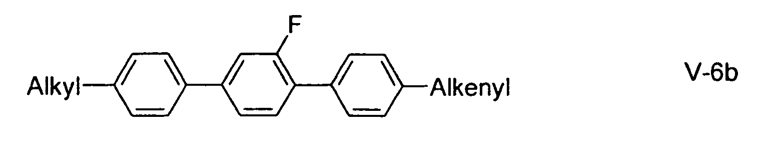 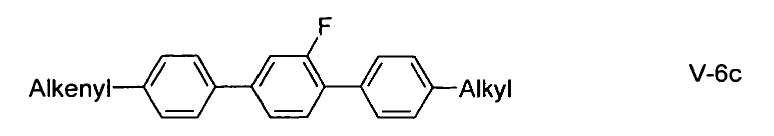 worin
- Alkyl und Alkyl': unabhängig voneinander Alkyl mit 1 bis 7 C- Atomen, bevorzugt mit 2 bis 5 C-Atomen,
- Alkoxy: Alkoxy mit bis 1 bis 5 C-Atomen, bevorzugt mit 2 bis 4 C-Atomen, und
- Alkenyl: Alkenyl mit 2 bis 7 C-Atomen, bevorzugt mit 2 bis 5 C-Atomen
bedeuten.

Besonders bevorzugt enthalten die erfindungsgemäßen Medien eine oder mehrere Verbindungen ausgewählt aus den Verbindungen der Formeln V-6a, bevorzugt ausgewählt aus der Gruppe der Verbindungen PGP-2-3, PGP-3-3 und PGP-3-4, und der Formel V-6b, bevorzugt ausgewählt aus der Gruppe der Formeln PGP-1-2V, PGP-2-2V und PGP-3-2V, wobei die Akronyme(Abkürzungen) in den Tabellen A bis C erläutert und in Tabelle D durch Beispiele illustriert sind.

In einer weiteren bevorzugten Ausführungsform enthält das Medium eine oder mehrere Verbindungen der Formel V-13 ausgewählt aus der Gruppe der Verbindungen der Formeln V-13a und V-13b 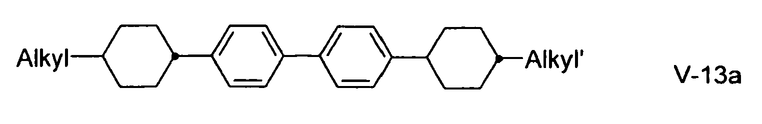 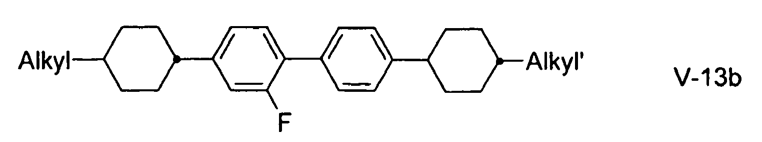 worin
- Alkyl und Alkyl': unabhängig voneinander Alkyl mit 1 bis 7 C-Atomen, bevorzugt mit 2 bis 5 C-Atomen
bedeuten.

In einer weiteren bevorzugten Ausführungsform enthält das Medium eine oder mehrere Verbindungen der Formel V-14 der Verbindungen der Formeln V-14a 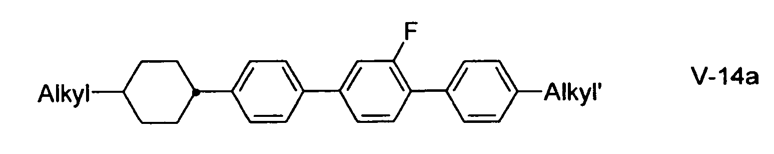 worin
- Alkyl und Alkyl': unabhängig voneinander Alkyl mit 1 bis 7 C-Atomen, bevorzugt mit 2 bis 5 C-Atomen
bedeuten.

Die chirale Verbindung oder die chiralen Verbindungen, die in Komponente D der Flüssigkristallmedien gemäß der vorliegenden Erfindung verwendet werden können, werden ausgewählt aus den bekannten chiralen Dotierstoffen. Bevorzugt besteht die Komponente D überwiegend, besonders bevorzugt im wesentlichen und ganz besonders bevorzugt nahezu vollständig aus einer oder mehreren Verbindungen ausgewählt aus der Gruppe der Verbindungen der folgenden Formeln VI bis VIII 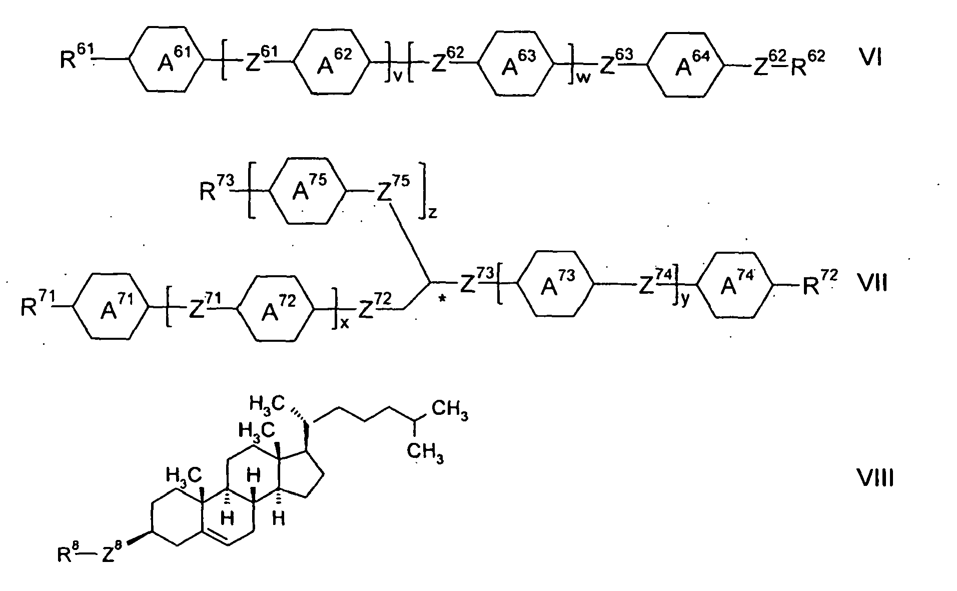 worin
- R⁶¹ und R⁶², R⁷¹ bis R⁷³ und R⁸: jeweils unabhängig voneinander, die oben bei Formel V für R⁵¹ angegebene Bedeutung besitzen, und alternativ H, CN, F, Cl CF₃, OCF₃, CF₂H oder OCF₂H und mindestens einer von R⁶¹ und R⁶² eine chirale Gruppe bedeuten,
- Z⁶¹ und Z⁶², Z⁷¹ bis Z⁷³ und Z⁸: jeweils unabhängig voneinander -CH₂CH₂-, -CH=CH-, -COO-, -O-CO- oder eine Einfachbindung, bevorzugt Z⁶¹, Z⁶², Z⁷¹, Z⁷⁴ und Z⁷⁵ eine Einfachbindung, Z⁶³, Z⁷² und Z⁷³ -COO- oder eine Einfachbindung, Z⁷² bevorzugt -COO- und Z⁷³ und Z⁸ -O-CO-, 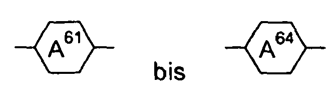 und 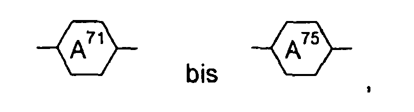 jeweils unabhängig voneinander, 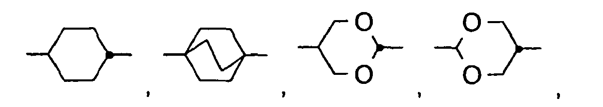 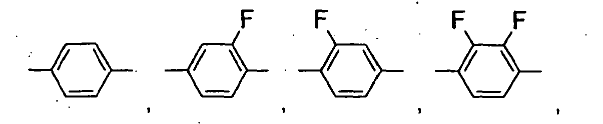 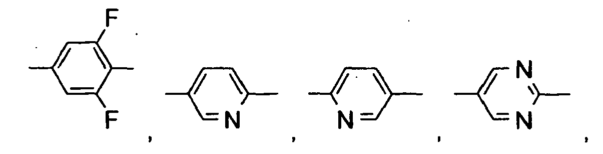 oder 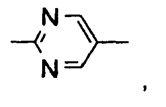
- u und v, und x, y und z: jeweils unabhängig voneinander 0 oder 1,
bevorzugt
- u und v: beide 0 und
- x und v: beide 1,
bedeuten.

Besonders bevorzugte Ausführungsformen der vorliegenden Erfindung erfüllen eine oder mehrere der folgenden Bedingungen.
i. Das flüssigkristalline Medium hat eine Doppelbrechung von 0,095 oder mehr.
ii. Das flüssigkristalline Medium enthält eine oder mehrere Verbindungen ausgewählt aus der Gruppe der Teilformeln I-1 bis I-4
iii. Die Konzentrationen der einzelnen homologen Verbindungen der Formel I im Medium liegen im Bereich von 1 bis 25 %, bevorzugt von 2 bis 20 % und besonders bevorzugt von 5 bis 15 %.
iv. Der Anteil an Verbindungen der Formel II im Medium beträgt 10 Gew.-% oder mehr.
v. Die Konzentrationen der einzelnen homologen Verbindungen der Formel II liegen im Bereich von 2 bis 16 %, bevorzugt von 3 bis 12 % und besonders bevorzugt von 4 bis 10 %.
vi. Das flüssigkristalline Medium enthält eine oder mehrere besonders bevorzugte Verbindungen ausgewählt aus der Gruppe der Verbindungen der Formeln II-1, II-2, II-3 und/oder II-14, bevorzugt der Formeln CY-n-Om, CY-V-On, CY-nV-Om, CEY-n-Om, CEY-V-On, CEY-nV-Om, PY-n-Om, PY-V-On, PY-nV-Om, LY-n-Om, LY-V-On und/oder LY-nV-Om, wobei die Konzentration der einzelnen homologen Verbindungen bevorzugt im Bereich von 2 % oder mehr bis 15 % oder weniger liegt und die Gesamtkonzentration der Verbindungen im Medium 60 % oder weniger beträgt.
vii. Das flüssigkristalline Medium enthält eine oder mehrere besonders bevorzugte Verbindungen ausgewählt aus der Gruppe der Verbindungen der Formeln II-4, II-5, II-15 und/oder II-16, bevorzugt der Formeln CCY-n-m, CCY-V-n, CCY-n CCY-n-m, -m, CCY-n-Om, CCY-V-On, CCY-nV-Om, CPY-n-m, CPY-V-n, CPY-nV-m, CPY-n-Om, CPY-V-On, CPY-nV-Om, CLY-n-m, CLY-V-n, LY-nV-m, CLY-n-Om, CLY-V-On, CLY-nV-Om, wobei die Konzentration der einzelnen homologen Verbindungen bevorzugt im Bereich von 2 % oder mehr bis 20 % oder weniger liegt und die Gesamtkonzentration der Verbindungen im Medium 50 % oder weniger beträgt.
viii. Das flüssigkristalline Medium enthält eine oder mehrere besonders bevorzugte Verbindungen ausgewählt aus der Gruppe der Verbindungen der Formeln II-6 und/oder II-17, bevorzugt der Formeln PPY-n-m, PPY-V-n, PPY-nV-m, PYP-n-m, PYP-V-n und/oder PYP-nV-m, wobei die Konzentration der einzelnen homologen Verbindungen bei PYP-n-m, PYP-V-n und PYP-nV-m bevorzugt im Bereich von 2 % oder mehr bis 20 % oder weniger liegt und bei PPY-n-m, PPY-V-n und PPY-nV-m bevorzugt im Bereich von 2 % oder mehr bis 10 % oder weniger liegt und die Gesamtkonzentration der Verbindungen im Medium 30 % oder weniger beträgt.
ix. Das Medium enthält eine oder mehrere Verbindungen der Formel III, bevorzugt der Formeln III-1 und/oder III-2, besonders bevorzugt der Formel III-2a, die Konzentration der einzelnen homologen Verbindungen im Medium beträgt bevorzugt 2 % oder mehr bis 15 % oder weniger und die Gesamtkonzentration beträgt 30 % oder weniger.
x. Das Medium enthält eine oder mehrere Verbindungen der Formel IV.
xi. Das Medium enthält eine oder mehrere Verbindungen der Formel V, bevorzugt in einer Gesamtkonzentration von 10 % oder mehr bis 80 % oder weniger.
xii. Das Medium enthält eine oder mehrere besonders bevorzugte Verbindungen ausgewählt aus der Gruppe der Verbindungen der Formeln V-1 und V-4, besonders bevorzugt der Formeln V-1 c' und/oder V-4b.
xiii. Das Medium enthält eine oder mehrere besonders bevorzugte Verbindungen ausgewählt aus der Gruppe der Verbindungen der Formeln V-2, bevorzugt V-2a und/oder V-2b, V-3, bevorzugt V-3b, V-4, bevorzugt V-4a, V-5, bevorzugt V-5a, V-12 und V-13 und/oder V-7.
xiv. Das flüssigkristalline Medium enthält eine oder mehrere besonders bevorzugte Verbindungen der Formeln V-1 c und V-1 d ausgewählt aus den nachfolgend genannten den Teilformeln: 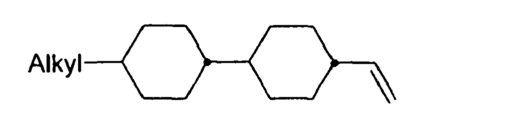 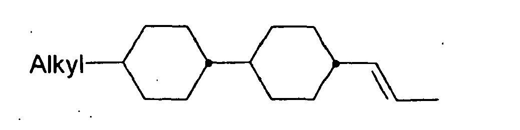 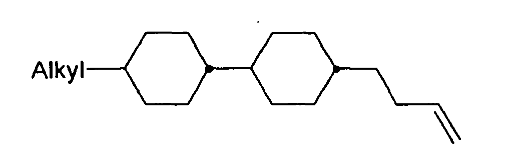 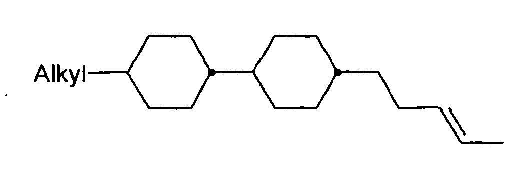 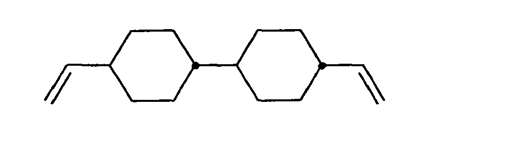 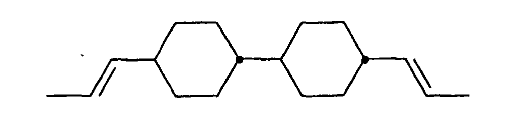 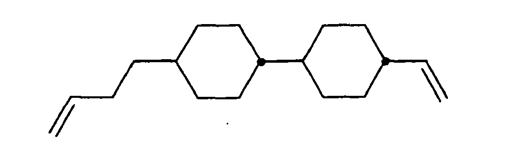 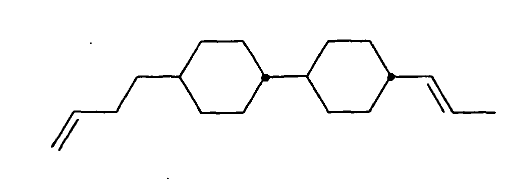 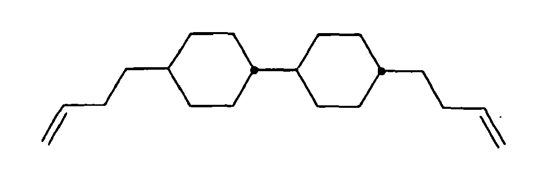 worin Alkyl die oben angegebene Bedeutung besitzt und bevorzugt, jeweils unabhängig voneinander Alkyl mit 1 bis 6, bevorzugt mit 2 bis 5 C-Atomen und besonders bevorzugt *n*-Alkyl, bedeutet.
xv. Das flüssigkristalline Medium enthält eine oder mehrere Verbindungen der Formel V ausgewählt aus der Gruppe der folgenden Formeln 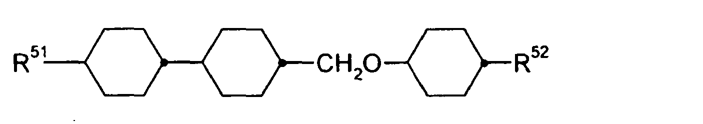 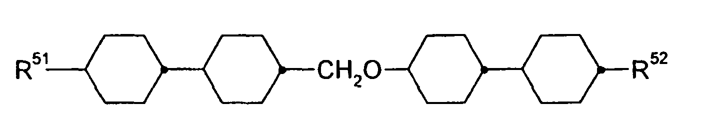 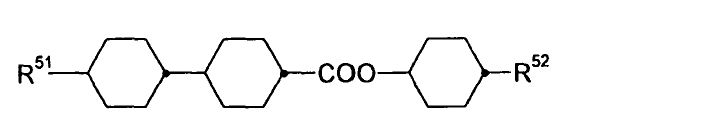 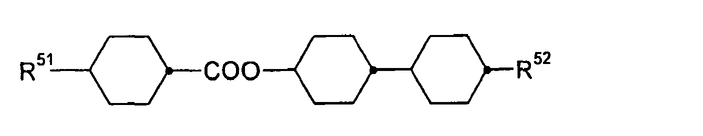 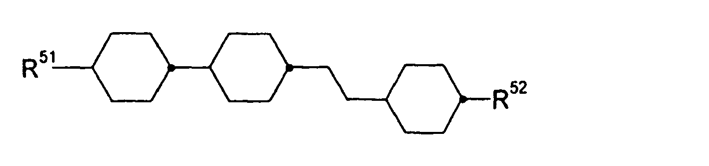 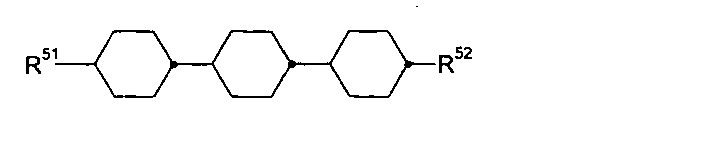 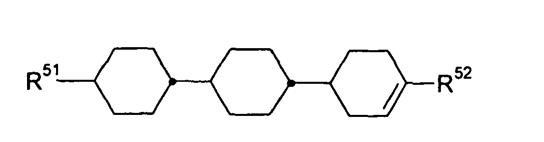 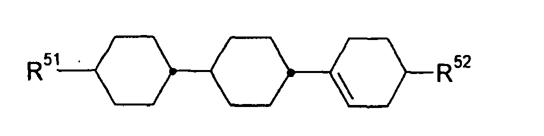 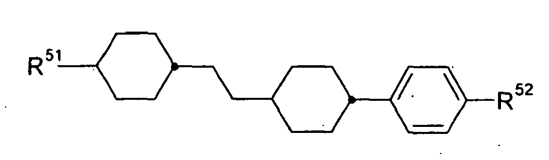 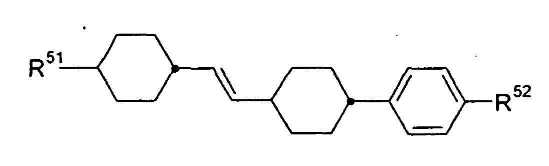 worin R⁵¹ und R⁵² jeweils die oben angegebenen Bedeutungen haben und bevorzugt R⁵¹ und R⁵² jeweils unabhängig voneinander einen geradkettiger Alkyl-, Alkoxy- oder Alkenylrest mit 1 bzw. 2 bis 7 C-Atomen, besonders bevorzugt geradkettiges Alkyl, ferner Alkenyl, bedeuten.
   Der Anteil dieser Verbindungen in der Mischung beträgt vorzugsweise 5 bis 40 Gew.-%.
xvi. Das flüssigkristalline Medium enthält eine oder mehrere Verbindungen der Formel V ausgewählt aus der Gruppe der Verbindungen folgenden Formeln: CC-n-V und/oder CC-n-Vm, CPP-n-m, CGP-n-m und CCOC-n-m, worin die Bedeutung der Akonyme (Abkürzungen) in den Tabellen A bis C erläutert und in Tabelle D durch Beispiele illustriert sind, bevorzugt in einer Gesamtkonzentration von bis zu 10 % oder mehr bis 70 % oder weniger.
xvii. Das flüssigkristalline Medium besteht im Wesentlichen aus
   2 Gew.-% bis 80 Gew.-% einer oder mehrerer Verbindungen der Formel 1,
   2 Gew.-% bis 80 Gew.-% einer oder mehrerer Verbindungen der Formel II,
   2 Gew.-% bis 80 Gew.-% einer oder mehrerer Verbindungen ausgewählt aus der Gruppe der Verbindungen der Formeln III und/oder IV und/oder
   2 Gew.-% bis 80 Gew.-% einer oder mehrerer Verbindungen der Formel V.
xviii. Das flüssigkristalline Medium enthält eine oder mehrere Verbindungen der Formel I mit zwei oder drei sechsgliedrigen bzw. fünfgliedrigen Ringen in Mengen von 1 % bis 15 %, insbesondere von 2 % bis 12 %, und ganz besonders bevorzugt von 3 bis 8 % pro Einzelverbindung.
xix. Das flüssigkristalline Medium enthält eine oder mehrere Verbindungen der Formel II vorzugsweise in Mengen von 2 % oder mehr, insbesondere von 5 % oder mehr, und ganz besonders bevorzugt von 5 % oder mehr bis 30 % oder weniger, insbesondere im Bereich von 2 % oder mehr bis 12 % oder weniger pro homologer Einzelverbindung.
xx. Das flüssigkristalline Medium enthält eine oder mehrere Verbindungen der Formel II-4 und/oder II-5, bevorzugt der Formeln II-4b und/oder II-4d und/oder II-5b und/oder II-5d, besonders bevorzugt II-4b und/oder II-5b, vorzugsweise in einer Gesamtkonzentration von 60 % oder weniger und in einer Konzentration von 2 % oder mehr, insbesondere von 5 % oder mehr, und ganz besonders bevorzugt von 5 % oder mehr bis 20 % oder weniger pro homologer Einzelverbindung.
xxi. Das flüssigkristalline Medium enthält eine oder mehrere Verbindungen der Formel II-6 und/oder II-7, bevorzugt der Formeln II-6a und/oder II-7a, vorzugsweise in einer Gesamtkonzentration von 50 % oder weniger und bevorzugt in einer Konzentration von 2 % oder mehr bis 10 % oder weniger pro homologer Einzelverbindung der Formel II-6 und in einer Konzentration von 2 % oder mehr bis 20 % oder weniger pro homologer Einzelverbindung der Formel II-6.
xxii. Das flüssigkristalline Medium enthält eine oder mehrere Verbindungen der Formel II vorzugsweise in Mengen von 2 % oder mehr, insbesondere von 5 % oder mehr, und ganz besonders bevorzugt von 5 % bis 25 % insbesondere im Bereich von 2 % bis 12 % pro Einzelverbindung.
xxiii. Das flüssigkristalline Medium enthält eine oder mehrere Verbindungen der Formel V vorzugsweise in Mengen von 3 % oder mehr, insbesondere von 5 % oder mehr, und ganz besonders bevorzugt von 5 % bis 25 %, insbesondere im Bereich von 2 % bis 20 % pro Einzelverbindung.

Ein weiterer Gegenstand der Erfindung ist eine elektrooptische Anzeige mit einer Aktivmatrix-Adressierung basierend auf dem ECB-Effekt, dadurch gekennzeichnet, dass sie als Dielektrikum ein flüssigkristallines Medium gemäß der vorliegenden Erfindung enthält.

Vorzugsweise weist die Flüssigkristallmischung einen nematischen Phasenbereich von mindestens 60 Grad, bevorzugt von mindestens 70 Grad und ganz besonders bevorzugt von mindestens 90 Grad und eine Fließviskosität υ₂₀ von maximal 30 mm².S⁻¹ bei 20 °C auf.

Das erfindungsgemäße Flüssigkristallmedium weist bevorzugt ein Δε von -0,5 oder weniger bis -8,0 oder mehr, insbesondere von -2,5 oder weniger bis -6,0 oder mehr auf, wobei Δε die dielektrische Anisotropie bedeutet.

Die Rotationsviskosität γ₁ ist vorzugsweise 135 mPa.s oder weniger, bevorzugt 105 mPa.s oder weniger und insbesondere 85 mPa·s oder weniger.

Die Doppelbrechung Δn der Flüssigkristallmischung liegt in der Regel im Bereich von 0,06 oder mehr bis 0,16 oder weniger, vorzugsweise im Bereich von 0,08 oder mehr bis 0,12 oder weniger.

Die Schwellenspannung V₀ der Flüssigkristallmischung liegt in der Regel im Bereich von 1,2 V oder mehr bis 3,0 V oder weniger, vorzugsweise im Bereich von 2,0 V oder mehr bis 2,5 V oder weniger.

Die erfindungsgemäßen Mischungen sind für alle VA-TFT-Anwendungen geeignet, wie z.B. VAN, MVA, (S)-PVA und ASV. Weiterhin sind sie für IPS-, FFS- und PALC-Anwendungen mit negativem Δε geeignet.

Die nematischen Flüssigkristallmischungen in den erfindungsgemäßen Anzeigen enthalten in der Regel zwei oder drei Komponenten, Komponenten A und B und/oder C, die ihrerseits jeweils aus einer oder mehreren Einzelverbindungen bestehen.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Für Komponente B wird vorzugsweise eine (oder mehrere) Einzelverbindung(en) gewählt, die einen Wert von Δε ≤ -0,8 haben. Dieser Wert muss umso negativer sein, je kleiner der Anteil B an der Gesamtmischung ist.

Die Komponente C weist eine ausgeprägte Nematogenität und eine Fließviskosität von nicht mehr als 30 mm².s⁻¹, vorzugsweise nicht mehr als 25 mm²·s⁻¹, bei 20°C auf.

Für Komponente B wird vorzugsweise eine (oder mehrere) Einzelverbindung(en) gewählt, die einen Absolutwert von Δε von < 0,8 haben.

Besonders bevorzugte Einzelverbindungen der Komponente C sind extrem niedrigviskose nematische Flüssigkristalle mit einer Fließviskosität von nicht mehr als 18, vorzugsweise nicht mehr als 12 mm²·s⁻¹, bei 20°C.

Komponente C ist monotrop oder enantiotrop nematisch und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden.

Dem Fachmann sind aus der Literatur eine Vielzahl geeigneter Materialien bekannt. Besonders bevorzugt sind hier Verbindungen der Formel V.

Vorzugsweise enthalten die erfindungsgemäßen Flüssigkristallmischungen 4 bis 15, insbesondere 5 bis 12, und besonders bevorzugt 10 oder weniger Verbindungen der Formeln I und (II und/oder III und/oder IV) und/oder V.

Neben Verbindungen ausgewählt aus der Gruppe der Formeln I bis V können in den erfindungsgemäßen Flüssigkristallmischungen auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile der erfindungsgemäßen Flüssigkristallmischungen werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl- oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclo-hexylbiphenyle oder Cylohexylpyrimidine, Phenyl- oder Cyclohexyldioxane, gegebenenfalls halogenierten Stilbene, Benzylphenylether, Tolane und substituierten Zimtsäureestern.

Die wichtigsten als Bestandteile derartiger Flüssigkristallmischungen in Frage kommenden Verbindungen lassen sich durch die Formel IX charakterisieren,

R⁹¹-L-G-E-R⁹² IX

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH-CQ- | -CH=N(O)- |
| | -C=C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂- | -OCH₂- |
| | -(CH₂)₄- | -(CH₂)₃O- |

oder eine C-C-Einfachbindung, Q Halogen, vorzugsweise Chlor, oder -CN, und R⁹¹ und R⁹² jeweils Alkyl, Alkenyl, Alkoxy, Alkanoyloxy oder Alkoxycarbonyloxy mit bis zu 18, vorzugsweise bis zu 8 Kohlenstoffatomen, oder einer dieser Reste auch CN, NC, NO₂, NCS, CF₃, OCF₃, F, Cl oder Br bedeuten.

Bei den meisten dieser Verbindungen sind R⁹¹ und R⁹² voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Die Konzentration der Verbindungen der Formel IX in der Gesamtmischung beträgt bevorzugt 1 % bis 25 %, besonders bevorzugt 1 % bis 15 % und ganz besonders bevorzugt 2 % bis 9 %.

Optional können die erfindungsgemäßen Medien auch eine dielektrisch positive Komponente enthalten, deren Gesamtkonzentration bevorzugt 10 % oder weniger bezogen auf das gesamte Medium beträgt.

In einer bevorzugten Ausführungsform enthalten die erfindungsgemäßen Flüssigkristallmedien insgesamt bezogen auf die Gesamtmischung 5 % oder mehr bis 60 % oder weniger, bevorzugt 10 % oder mehr bis 50 % oder weniger, bevorzugt 15 % oder mehr bis 40 % oder weniger und besonders bevorzugt 20 % oder mehr bis 35 % oder weniger und ganz besonders bevorzugt 25 % oder mehr bis 30 % oder weniger an Komponente A und
1 % oder mehr bis 45 % oder weniger, bevorzugt 2 % oder mehr bis 40 % oder weniger, bevorzugt 3 % oder mehr bis 35 % oder weniger und besonders bevorzugt 5 % oder mehr bis 30 % oder weniger und ganz besonders bevorzugt 10 % oder mehr bis 20 % oder weniger an Komponente B und
5 % oder mehr bis 80 % oder weniger, bevorzugt 25 % oder mehr bis 75 % oder weniger, besonders bevorzugt 35 % oder mehr bis 70 % oder weniger und ganz besonders bevorzugt 40 % oder mehr bis 65 % oder weniger an Komponente C.

Die erfindungsgemäßen Flüssigkristallmedien weisen bevorzugt eine nematische Phase von jeweils mindestens von -20°C oder weniger bis 70°C oder mehr, besonders bevorzugt von -30°C oder weniger bis 80°C oder mehr, ganz besonders bevorzugt von -40°C oder weniger bis 85°C oder mehr und am allermeisten bevorzugt von -40°C oder weniger bis 105°C oder mehr auf.
Hierbei bedeutet der Begriff "eine nematische Phase aufweisen" einerseits, dass bei tiefen Temperaturen bei der entsprechenden Temperatur keine smektische Phase und keine Kristallisation beobachtet wird und andererseits, dass beim Aufheizen aus der nematischen Phase noch keine Klärung auftritt. Die Untersuchung bei tiefen Temperaturen wird in einem Fließviskosimeter bei der entsprechenden Temperatur durchgeführt sowie durch Lagerung in Testzellen einer der elektrooptischen Anwendung entsprechenden Schichtdicke für mindestens 100 Stunden überprüft. Wenn die Lagerstabilität bei einer Temperatur von -20°C in einer entsprechenden Testzelle 1.000 h oder mehr beträgt, wird das Medium als bei dieser Temperatur stabil bezeichnet. Bei Temperaturen von -30°C bzw. -40°C betragen die entsprechenden Zeiten 500 h bzw. 250 h. Bei hohen Temperaturen wird der Klärpunkt nach üblichen Methoden in Kapillaren gemessen.

Außerdem weisen die erfindungsgemäßen Flüssigkristallmedien hohe Werte für die Voltage Holding Ratio in Flüssigkristallzellen auf.
Diese sind in frisch gefüllten Zellen bei 20°C in den Zellen größer oder gleich 95 %, bevorzugt größer oder gleich 97 %, besonders bevorzugt größer oder gleich 98 % und ganz besonders bevorzugt größer oder gleich 99 % und nach 5 Minuten im Ofen bei 100°C in den Zellen größer oder gleich 90 %, bevorzugt größer oder gleich 93 %, besonders bevorzugt größer oder gleich 96 % und ganz besonders bevorzugt größer oder gleich 98%.

Diese bevorzugten Werte für die einzelnen physikalischen Eigenschaften werden von den erfindungsgemäßen Medien bevorzugt auch jeweils miteinander kombiniert eingehalten.

In der vorliegenden Anmeldung bedeutet der Begriff "Verbindungen", auch geschrieben als "Verbindung(en)", sofern nicht explizit anders angegeben, sowohl eine als auch mehrere Verbindungen.

Für die vorliegende Erfindung bedeutet im Zusammenhang mit der Angabe der Bestandteile der Zusammensetzungen, wenn nicht im Einzelfall anders angegeben:
- "enthalten": die Konzentration der betreffenden Bestandteile in der Zusammensetzung beträgt bevorzugt 5 % oder mehr, besonders bevorzugt 10 % oder mehr, ganz besonders bevorzugt 20 % oder mehr,
- "überwiegend bestehen aus": die Konzentration der betreffenden Bestandteile in der Zusammensetzung beträgt bevorzugt 50 % oder mehr, besonders bevorzugt 55 % oder mehr und ganz besonders bevorzugt 60 % oder mehr,
- "im wesentlichen bestehen aus": die Konzentration der betreffenden Bestandteile in der Zusammensetzung beträgt bevorzugt 80 % oder mehr, besonders bevorzugt 90 % oder mehr und ganz besonders bevorzugt 95 % oder mehr und
- "nahezu vollständig bestehen aus": die Konzentration der betreffenden Bestandteile in der Zusammensetzung beträgt bevorzugt 98 % oder mehr, besonders bevorzugt 99 % oder mehr und ganz besonders bevorzugt 100,0 %.

Dies gilt sowohl für die Medien als Zusammensetzungen mit ihren Bestandteilen, die Komponenten und Verbindungen sein können, als auch für die Komponenten mit ihren Bestandteilen, den Verbindungen. Lediglich in Bezug auf die Konzentration einer einzelnen Verbindung im Verhältnis zum gesamten Medium bedeutet der Begriff enthalten: die Konzentration der betreffenden Verbindung beträgt bevorzugt 1 % oder mehr, besonders bevorzugt 2 % oder mehr, ganz besonders bevorzugt 4 % oder mehr.
Für die vorliegende Erfindung bedeutet "≤" kleiner oder gleich, bevorzugt kleiner und "≥" größer oder gleich, bevorzugt größer.

Für die vorliegende Erfindung bedeuten 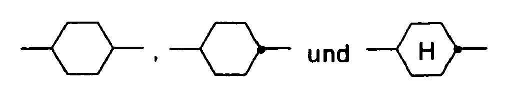 trans-1,4-Cyclohexylen und 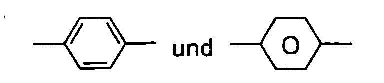 1,4-Phenylen.

Für die vorliegende Erfindung bedeuten die Begriffe "dielektrisch positive Verbindungen" solche Verbindungen mit einem Δε > 1,5, "dielektrisch neutrale Verbindungen" solche mit -1,5 ≤ Δε ≤ 1,5 und "dielektrisch negative" Verbindungen solche mit Δε < -1,5. Hierbei wird die dielektrische Anisotropie der Verbindungen bestimmt, indem 10 % der Verbindungen in einem flüssigkristallinen Host gelöst werden und von der resultierenden Mischung die Kapazität in mindestens jeweils einer Testzelle mit 20 µm Schichtdicke mit homeotroper und mit homogener Oberflächenorientierung bei 1 kHz bestimmt wird. Die Messspannung beträgt typischerweise 0,5 V bis 1,0 V, sie ist jedoch stets niedriger als die kapazitive Schwelle der jeweiligen untersuchten Flüssigkristallmischung.

Als Hostmischung für dielektrisch positive und dielektrisch neutrale Verbindungen wird ZLI-4792 und für dielektrisch negative Verbindungen ZLI-2857, beide von Merck KGaA, Deutschland, verwendet. Aus der Änderung der Dielektrizitätskonstante der Hostmischung nach Zugabe der zu untersuchenden Verbindung und Extrapolation auf 100 % der eingesetzten Verbindung werden die Werte für die jeweiligen zu untersuchenden Verbindungen erhalten. Die zu untersuchende Verbindung wird zu 10 % in der Hostmischung gelöst. Wenn die Löslichkeit der Substanz hierzu zu gering ist, wird die Konzentration schrittweise solange halbiert, bis die Untersuchung bei der gewünschten Temperatur erfolgen kann.

Die erfindungsgemäßen Flüssigkristallmedien können bei Bedarf auch weitere Zusatzstoffe wie z. B. Stabilisatoren und/oder pleochroitische Farbstoffe und/oder chirale Dotierstoffe in den üblichen Mengen enthalten. Die eingesetzte Menge dieser Zusatzstoffe beträgt bevorzugt insgesamt 0 % oder mehr bis 10 % oder weniger bezogen auf die Menge der gesamten Mischung, besonders bevorzugt 0,1 % oder mehr bis 6 % oder weniger. Die Konzentration der einzelnen eingesetzten Verbindungen beträgt bevorzugt 0,1 % oder mehr bis 3 % oder weniger. Die Konzentration dieser und ähnlicher Zusatzstoffe wird bei der Angabe der Konzentrationen sowie der Konzentrationsbereiche der Flüssigkristallverbindungen in den Flüssigkristallmedien in der Regel nicht berücksichtigt.

In einer bevorzugten Ausführungsform enthalten die erfindungsgemäßen Flüssigkristallmedien einen Polymervorläufer, der eine oder mehrere reaktive Verbindungen, bevorzugt reaktive Mesogene und bei Bedarf auch weitere Zusatzstoffe wie z. B. Polymerisationsinitiatoren und/oder Polymerisationsmoderatoren in den üblichen Mengen enthalten. Die eingesetzte Menge dieser Zusatzstoffe beträgt insgesamt 0 % oder mehr bis 10 % oder weniger bezogen auf die Menge der gesamten Mischung bevorzugt 0,1 % oder mehr bis 2 % oder weniger. Die Konzentration dieser und ähnlicher Zusatzstoffe wird bei der Angabe der Konzentrationen sowie der Konzentrationsbereiche der Flüssigkristallverbindungen in den Flüssigkristallmedien nicht berücksichtigt.

Die Zusammensetzungen bestehen aus mehreren Verbindungen, bevorzugt aus 3 oder mehr bis 30 oder weniger, besonders bevorzugt aus 6 oder mehr bis 20 oder weniger und ganz besonders bevorzugt aus 10 oder mehr bis 16 oder weniger Verbindungen, die auf herkömmliche Weise gemischt werden. In der Regel wird die gewünschte Menge der in geringerer Menge verwendeten Komponenten in den Komponenten gelöst, die den Hauptbestandteil der Mischung ausmachenden. Dies erfolgt zweckmäßigerweise bei erhöhter Temperatur. Liegt die gewählte Temperatur über dem Klärpunkt des Hauptbestandteils, so ist die Vervollständigung des Lösungsvorgangs besonders leicht zu beobachten. Es ist jedoch auch möglich, die Flüssigkristallmischungen auf anderen üblichen Wegen, z. B. unter Verwendung von Vormischungen oder aus einem so genannten "Multi Bottle System" herzustellen.

Es versteht sich für den Fachmann von selbst, dass die erfindungsgemäßen Medien für die Verwendung in VA-, IPS-, FFS- oder PALC-Anzeigen auch Verbindungen enthalten kann, worin beispielsweise H, N, O Cl, F durch die entsprechenden Isotope ersetzt sind.

Der Aufbau der erfindungsgemäßen Flüssigkristallanzeigen entspricht der üblichen Geometrie, wie sie z. B. in EP-OS 0 240 379, beschrieben wird.

Mittels geeigneter Zusatzstoffe können die erfindungsgemäßen Flüssigkristallphasen derart modifiziert werden, dass sie in jeder bisher bekannt gewordenen Art von z. B. ECB-, VAN-, IPS-, GH- oder ASM-VA-LCD-Anzeige einsetzbar sind.

In der nachfolgenden Tabelle E werden mögliche Dotierstoffe angegeben, die den erfindungsgemäßen Mischungen zugesetzt werden können. Sofern die Mischungen einen oder mehrere Dotierstoffe enthalten, wird er in Mengen von 0,01 bis 4 Gew.-%, vorzugsweise 0,1 bis 1,0 Gew.-%, eingesetzt.

Stabilisatoren, die beispielsweise den erfindungsgemäßen Mischungen zugesetzt werden können, vorzugsweise in Mengen von 0,01 bis 6 Gew.-%, insbesondere 0,1 bis 3 Gew.-%, werden nachfolgend in Tabelle F genannt.

Alle Konzentrationen sind für die Zwecke der vorliegenden Erfindung, soweit nicht explizit anders vermerkt, in Massenprozent angegeben und beziehen sich auf die entsprechende Mischung oder Mischungskomponente, soweit nicht explizit anders angegeben.

Alle angegebenen Werte für Temperaturen in der vorliegenden Anmeldung, wie z. B. der Schmelzpunkt T(C,N), der Übergang von der smektischen (S) zur nematischen (N) Phase T(S,N) und der Klärpunkt T(N,I), sind in Grad Celsius (°C) und alle Temperaturdifferenzen entsprechend Differenzgrad (° oder Grad) angegeben, sofern nicht explizit anders angegeben.

Der Begriff "Schwellenspannung" bezieht sich für die vorliegende Erfindung auf die kapazitive Schwelle (V₀), auch Freedericksz-Schwelle genannt, sofern nicht explizit anders angegeben.

Alle physikalischen Eigenschaften werden und wurden nach "Merck Liquid Crystals, Physical Properties of Liquid Crystals", Status Nov. 1997, Merck KGaA, Deutschland bestimmt und gelten für eine Temperatur von 20°C und Δn wird bei 589 nm und Δε bei 1 kHz bestimmt, sofern nicht jeweils explizit anders angegeben.

Die elektrooptischen Eigenschaften, z. B. die Schwellenspannung (V₀) (kapazitive Messung) werden, ebenso wie das Schaltverhalten, in bei der Merck Japan^{Ltd.} hergestellten Testzellen bestimmt. Die Messzellen haben Substrate aus Natriumglas (Sodalime Glas) und sind in einer ECB- bzw. VA-Konfiguration mit Polyimidorientierungsschichten (SE-1211 mit Verdünner **26 (Mischungsverhältnis 1:1), beide der Firma Nissan Chemicals, Japan), die senkrecht zueinander gerieben sind und die eine homöotrope Orientierung der Flüssigkristalle bewirken, ausgeführt. Die Fläche der durchsichtigen, nahezu quadratischen Elektroden aus ITO beträgt 1cm².

Die verwendeten Flüssigkristallmischungen sind, wenn nicht anders angegeben, nicht mit einem chiralen Dotierstoff versetzt, sie eignen sich aber auch besonders für Anwendungen, in denen eine solche Dotierung erforderlich ist.

Die Voltage Holding Ratio wird in bei der Merck Japan^{Ltd.} hergestellten Testzellen bestimmt. Die Messzellen haben Substrate aus Natriumglas (Sodalime Glas) und sind mit Polyimidorientierungsschichten (AL-3046 der Firma Japan Synthetic Rubber, Japan) mit einer Schichtdicke von 50 nm, die senkrecht zueinander gerieben sind ausgeführt. Die Schichtdicke beträgt einheitlich 6,0 µm. Die Fläche der durchsichtigen Elektroden aus ITO beträgt 1 cm².

Die Voltage Holding Ratio wird bei 20°C (HR₂₀) und nach 5 Minuten im Ofen bei 100°C (HR₁₀₀) bestimmt. Die verwendete Spannung hat eine Frequenz von 60 Hz.

Die Rotationsviskosität wird mit der Methode des rotierenden Permanentmagneten und die Fließviskosität in einem modifizierten Ubbelohde-Viskosimeter bestimmt. Für die Flüssigkristallmischungen ZLI-2293, ZLI-4792 und MLC-6608, alle Produkte der Firma Merck KGaA, Darmstadt, Deutschland, betragen die bei 20°C bestimmten Werte der Rotationsviskosität 161 mPa·s, 133 mPa·s bzw. 186 mPa·s und die der Fließviskosität (v) 21 mm²·s⁻¹, 14 mm²·s⁻¹ bzw. 27 mm²·S⁻¹.

In der vorliegenden Anmeldung werden die folgenden Symbole verwendet:
- V₀: Schwellenspannung, kapazitiv [V] bei 20°C,
- nₑ: außerordentlicher Brechungsindex gemessen bei 20°C und 589 nm,
- n₀: ordentlicher Brechungsindex gemessen bei 20°C und 589 nm,
- Δn: optische Anisotropie gemessen bei 20°C und 589 nm,
- ε_{⊥}: dielektrische Suszeptibilität senkrecht zum Direktor bei 20°C und 1 kHz,
- ε_{∥}: dielektrische Suszeptibilität parallel zum Direktor bei 20°C und 1 kHz,
- Δε: dielektrische Anisotropie bei 20°C und 1 kHz, T(N,I) bzw.
- cp.: Klärpunkt [°C],
- γ₁: Rotationsviskosität gemessen bei 20°C [mPa.s],
- K₁: elastische Konstante, "splay"-Deformation bei 20°C [pN],
- K₂: elastische Konstante, "twist"-Deformation bei 20°C [pN],
- K₃: elastische Konstante, "bend"-Deformation bei 20°C [pN] und
- LTS: "low temperature stability" (Stabilität der Phase), bestimmt in Testzellen.

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschaftskombinationen zugänglich sind.

Für die vorliegende Erfindung und in den folgenden Beispielen sind die Strukturen der Flüssigkristallverbindungen durch Acronyme angegeben, wobei die Transformation in chemische Formeln gemäß folgender Tabellen A bis C erfolgt. Alle Reste CₙH₂ₙ₊₁, CₘH₂ₘ₊₁ und C_{I}H_{2I+1} bzw. CₙH₂ₙ, CₘH₂ₘ und C_{I}H_{2I} sind geradkettige Alkylreste bzw. Alkylenreste jeweils mit n, m bzw. I C-Atomen. In Tabelle A sind die Ringelemente der Kerne der Verbindung codiert, in Tabelle B sind die Brückenglieder aufgelistet und in Tabelle C sind die Bedeutungen der Symbole für die linken bzw. rechten Endgruppen der Moleküle aufgelistet. Die Akronyme werden aus den Codes für die Ringelemente mit optionalen Verknüpfungsgruppen, gefolgt von einem ersten Bindestrich und den Codes für die linke Endgruppe, sowie einem zweiten Bindestrich und den Codes für die rechts Endgruppe, zusammengesetzt. In Tabelle D sind Beispielstrukturen von Verbindungen mit ihren jeweiligen Abkürzungen zusammengestellt.

**Tabelle A: Ringelemente**

| | | | |
|---|---|---|---|
| **C** | 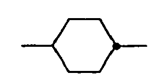 | | |
| **D** | 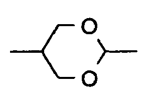 | **Dl** | 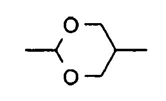 |
| **A** | 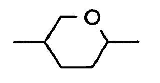 | **Al** | 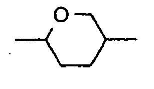 |
| **P** | 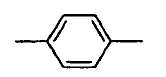 | | |
| **G** | 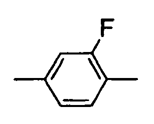 | **Gl** | 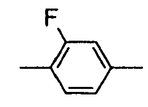 |
| **U** | 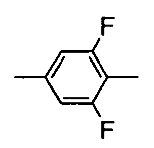 | **Ul** | 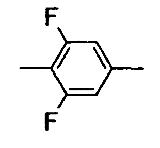 |
| **Y** | 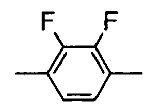 | | |
| **P(F, CI)Y** | 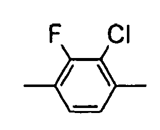 | **P(Cl,F)Y** | 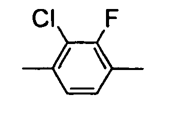 |
| **np** | 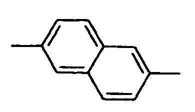 | | |
| **n3f** | 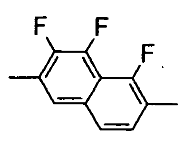 | **n3fl** | 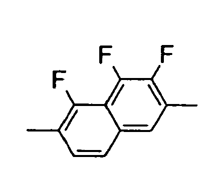 |
| **th** | 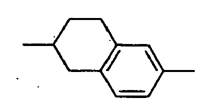 | **thl** | 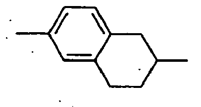 |
| **tH2f** | 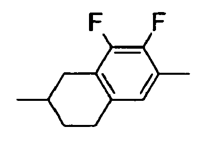 | **tH2fl** | 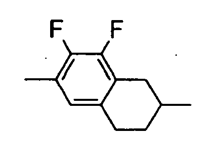 |
| **o2f** | 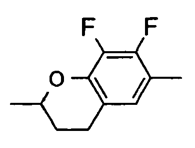 | **o2fl** | 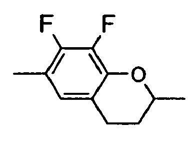 |
| **dh** | 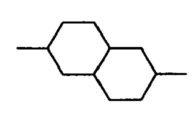 | | |
| **K** | 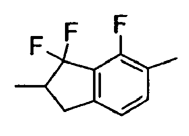 | **Kl** | 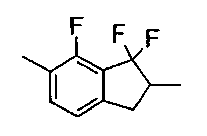 |
| **L** | 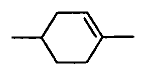 | **Ll** | 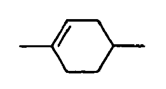 |
| **F** | 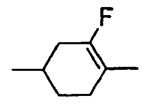 | **Fl** | 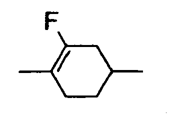 |
| S | 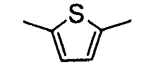 | | |
| Se | 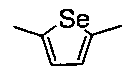 | | |
| **Te** | 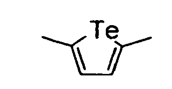 | | |

**Tabelle B: Brückenglieder**

| | | | |
|---|---|---|---|
| **E** | -CH₂-CH₂- | | |
| **V** | -CH=CH- | | |
| **T** | -C≡C- | | |
| **W** | -CF₂-CF₂- | | |
| **B** | -CF=CF- | | |
| **Z** | -CO-O- | **Zl** | -O-CO- |
| **X** | -CF=CH- | **Xl** | -CH=CF- |
| **O** | -CH₂-O- | **Ol** | -O-CH₂- |
| **Q** | -CF₂-O- | **Ql** | -O-CF₂- |

**Tabelle C: Endgruppen**

| **Links einzeln stehend oder in Kombination** | | **Rechts einzeln stehend oder in Kombination** | |
|---|---|---|---|
| **-n**- | CₙH₂ₙ₊₁- | **-n** | -CₙH₂ₙ₊₁ |
| **-nO-** | CₙH₂ₙ₋₁-O- | **-nO** | -O- CₙH₂ₙ₊₁ |
| **-V-** | CH₂=CH- | **-V** | -CH=CH₂ |
| **-nV-** | CₙH₂ₙ₊₁-CH=CH- | **-nV** | -CₙH₂ₙ-CH=CH₂ |
| **-Vn-** | CH₂=CH- CₙH₂ₙ₋ | **-Vn** | -CH=CH-CₙH₂ₙ₊₁ |
| **-nVm-** | CₙH₂ₙ₊₁-CH=CH-CₘH₂ₘ- | **-nVm** | - CₙH₂ₙ-CH=CH-CₘH₂ₘ₊₁ |
| **-N-** | N=C- | **-N** | -C≡N |
| **-S-** | S=C=N- | **-S** | -N=C=S |
| **-F-** | F- | **-F** -F | |
| **-CL-** | Cl- | **-CL** | -Cl |
| **-M-** | CFH₂- | **-M** | -CFH₂ |
| **-D-** | CF₂H- | **-D** | -CF₂H |
| **-T-** | CF₃- | **-T** | -CF₃ |
| **-MO-** | CFH₂O - | **-OM** | -OCFH₂ |
| **-DO-** | CF₂HO - | **-OD** | -OCF₂H |
| **-TO-** | CF₃O - | **-OT** | -OCF₃ |
| **-A-** | H-C≡C- | **-A** | -C≡C-H |
| **-nA-** | CₙH₂ₙ₊₁-C≡C- | **-An** | -C≡-C-CₙH₂ₙ₊₁ |
| **-NA-** | N=C-C≡C- | **-AN** | -C≡C-C≡N |
| | | | |

| **Links nur in Kombination** | | **Rechts nur in Kombination** | |
|---|---|---|---|
| **-...n...-** | -CₙH₂ₙ₋ | **-...n...-** | -CₙH₂ₙ- |
| **-...M...-** | -CFH- | -**...M...-** | -CFH- |
| **-...D...-** | -CF₂- | **-...D...-** | -CF₂- |
| **-...V...-** | -CH=CH- | **-...V...-** | -CH=CH- |
| **-...Z...-** | -CO-O- | **-...Z...-** | -CO-O- |
| **-....L..-** | -O-CO- | -**...Zl...-** | -O-CO- |
| **-...K...-** | -CO- | **-...K...-** | -CO- |
| **-...W...-** | -CF=CF- | **-...W...-** | -CF=CF- |

worin n und m jeweils ganze Zahlen und die drei Punkte "..." Platzhalter für andere Abkürzungen aus dieser Tabelle sind.

Vorzugsweise enthalten die erfindungsgemäßen Mischungen neben den Verbindungen der Formeln 1 eine oder mehrere Verbindungen der nachfolgend genannten Verbindungen.

Folgende Abkürzungen werden verwendet:
(n, m und z unabhängig voneinander jeweils eine ganze Zahl, bevorzugt 1 bis 6)

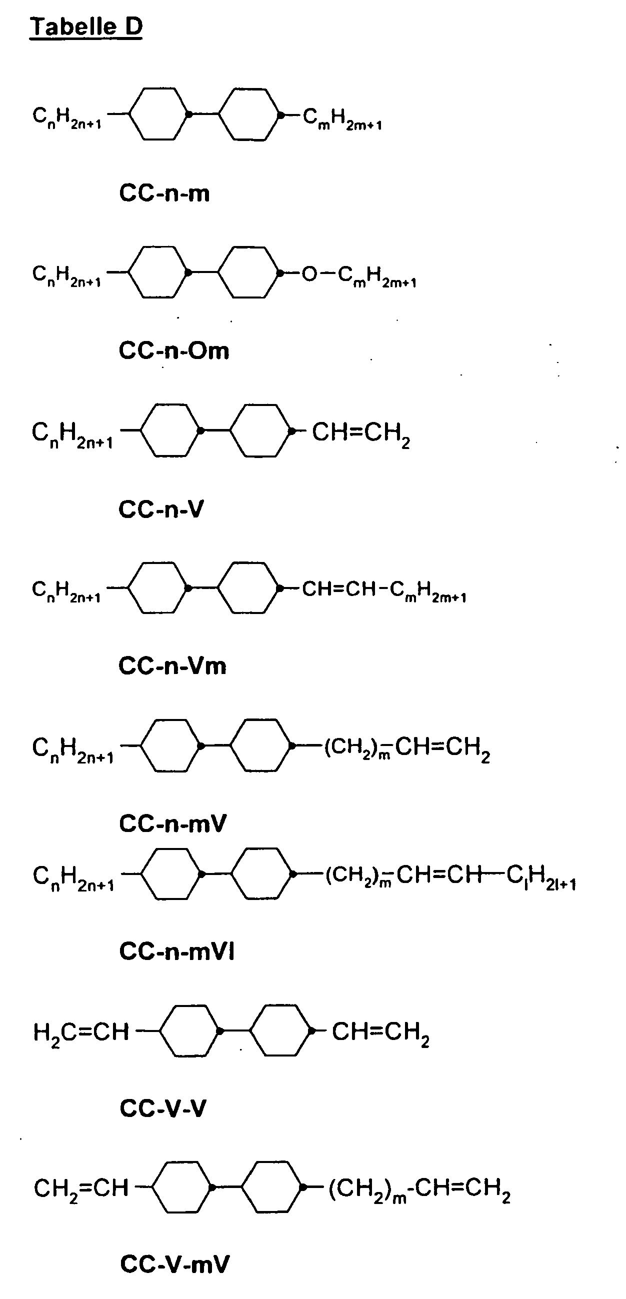

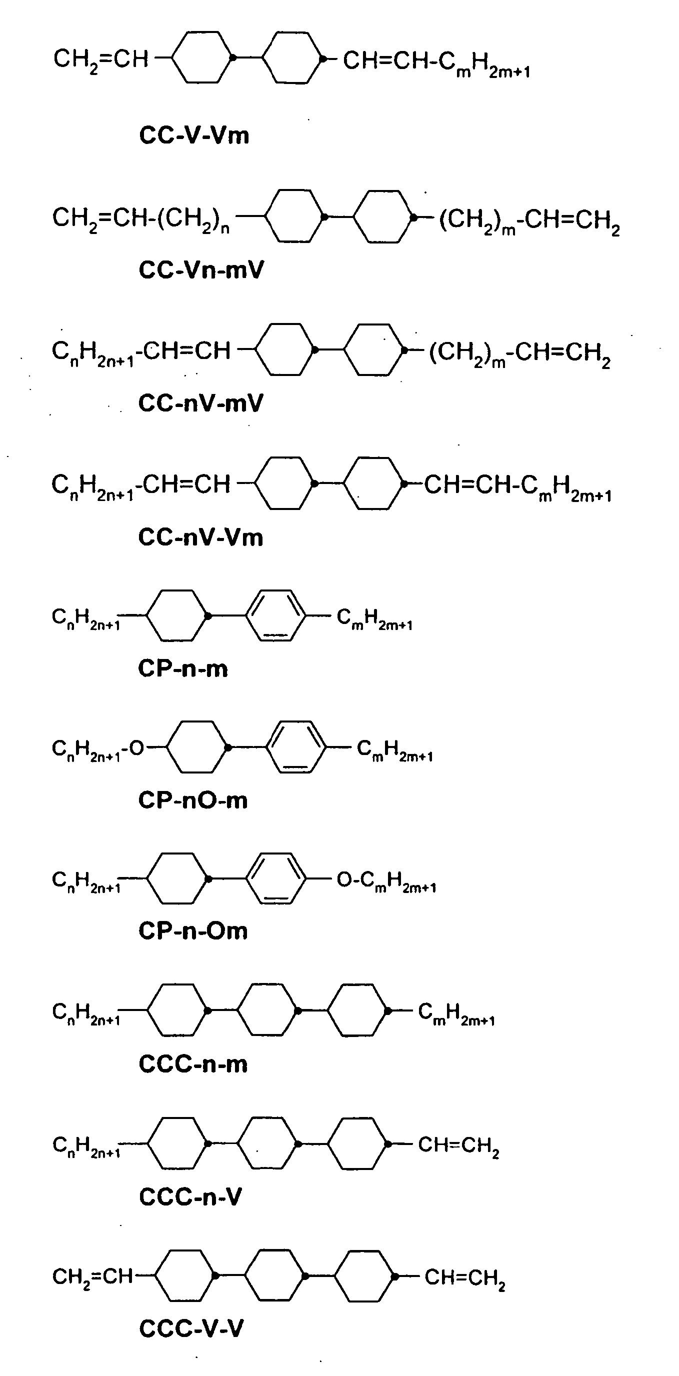

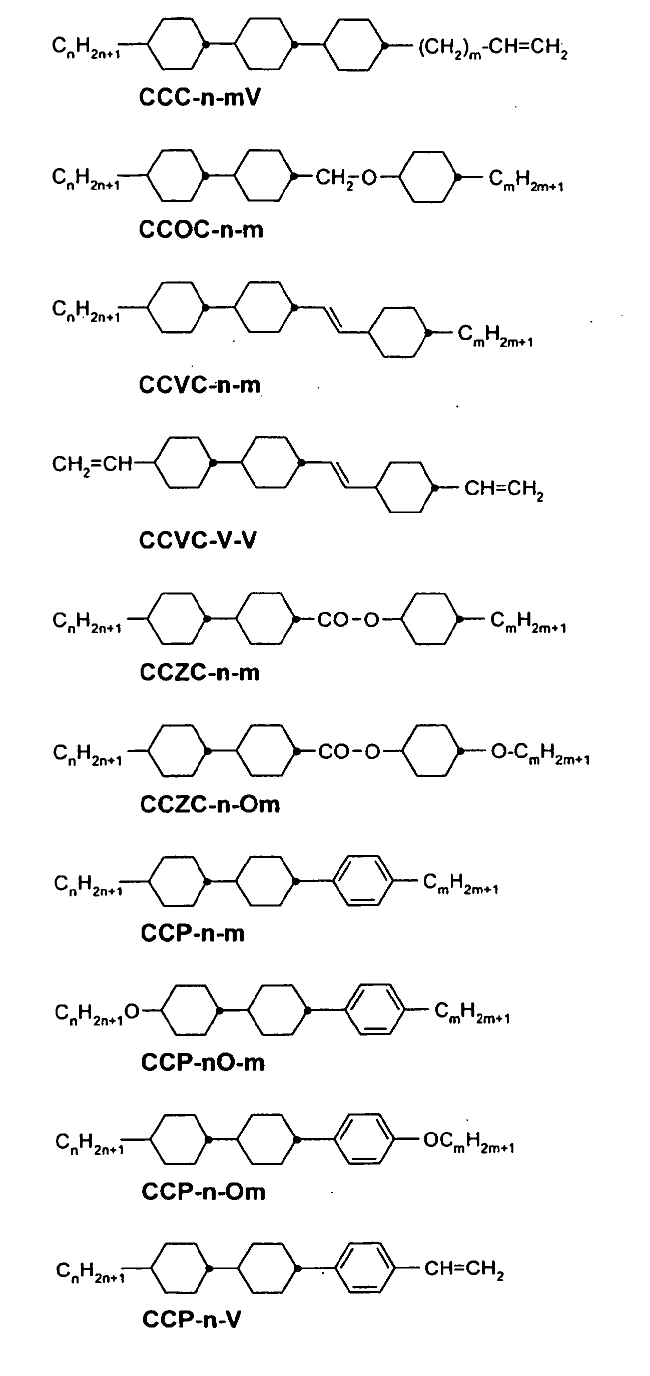

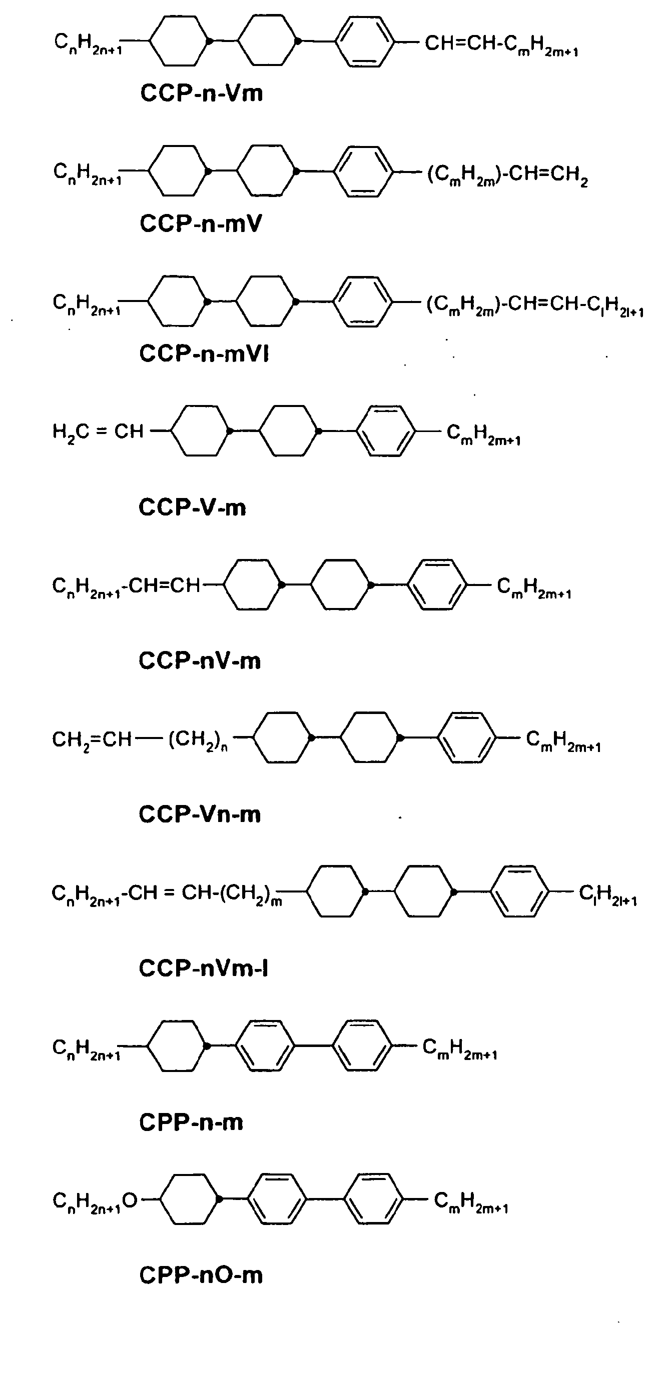

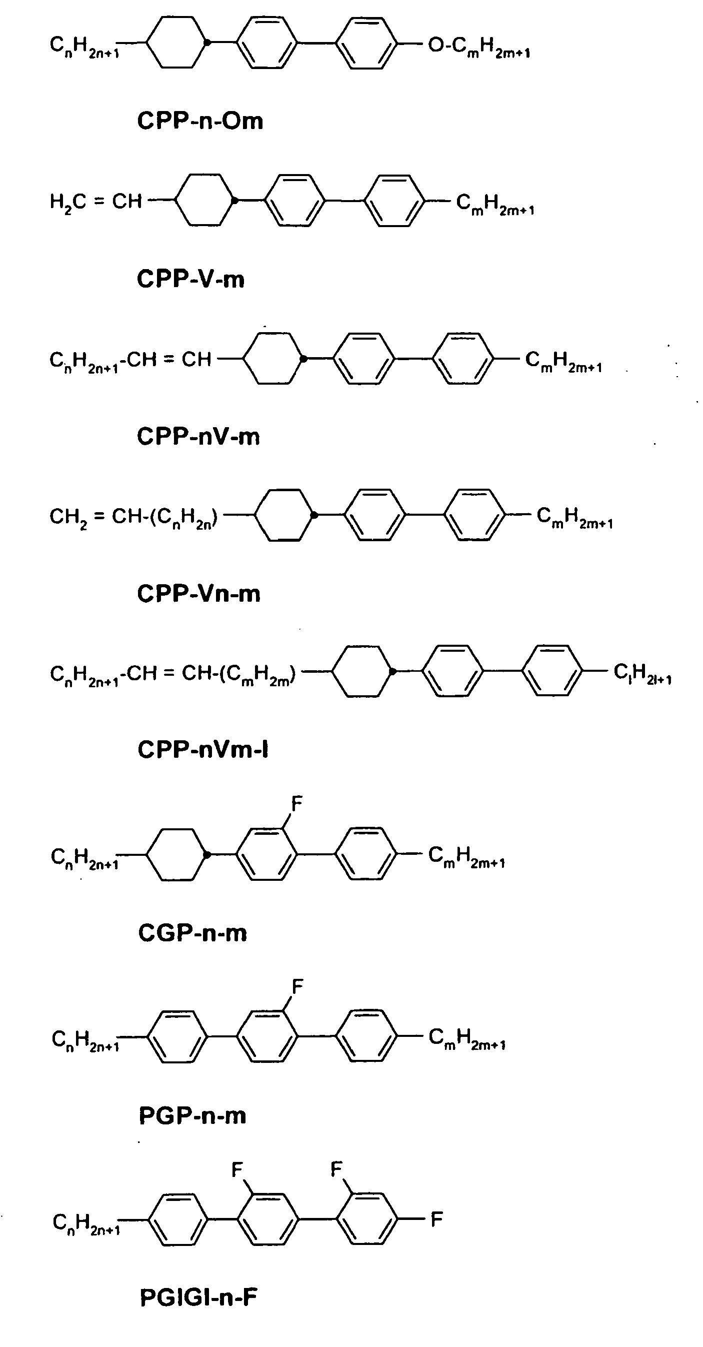

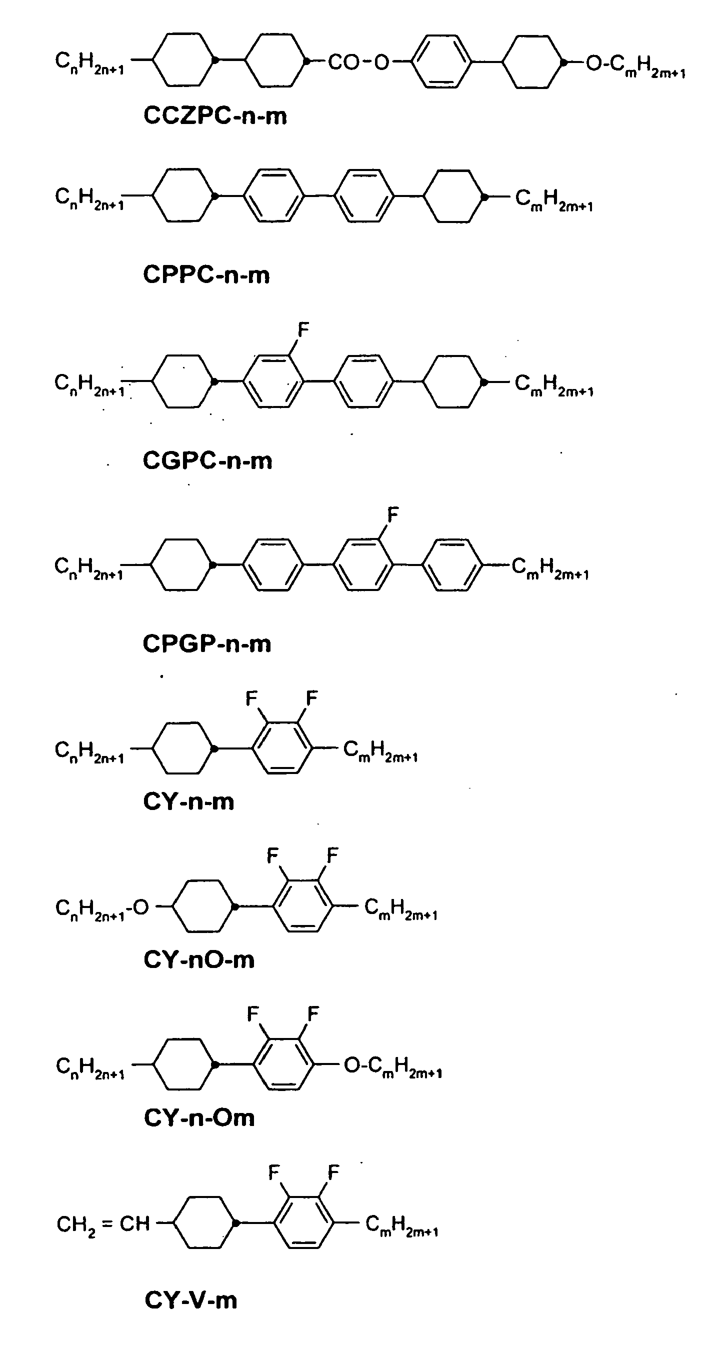

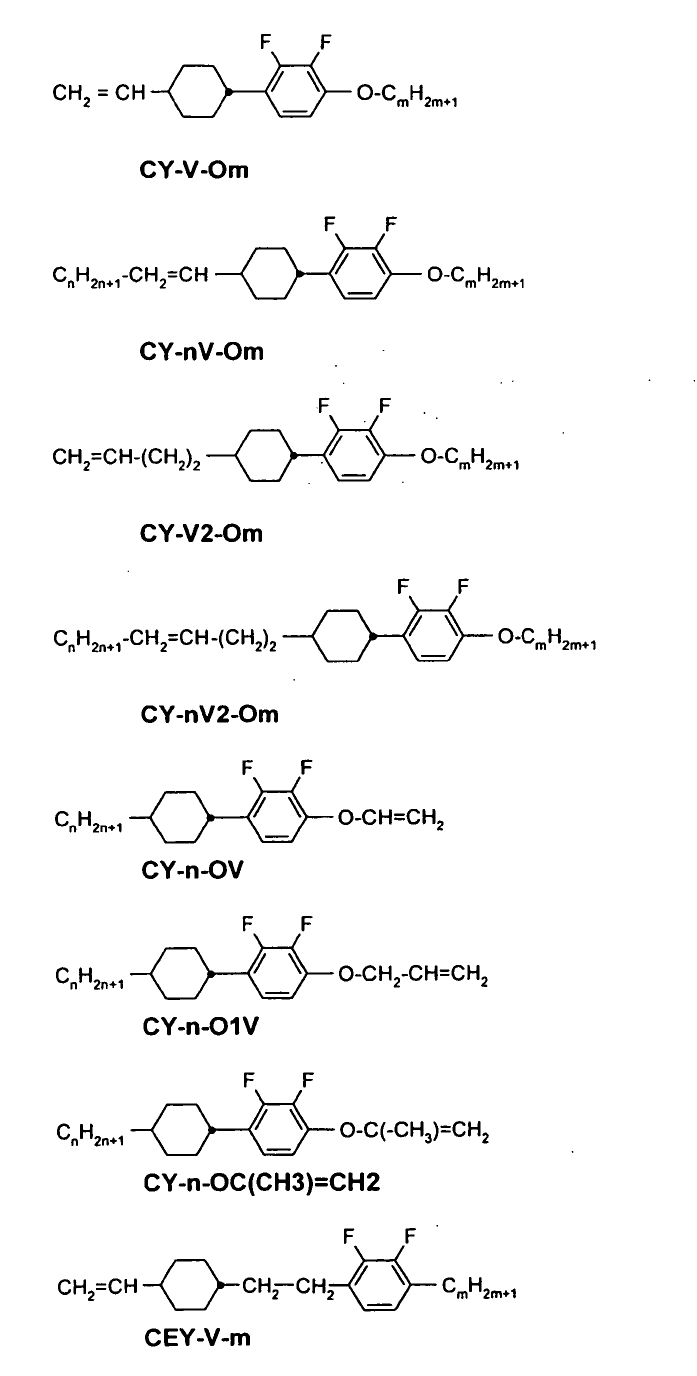

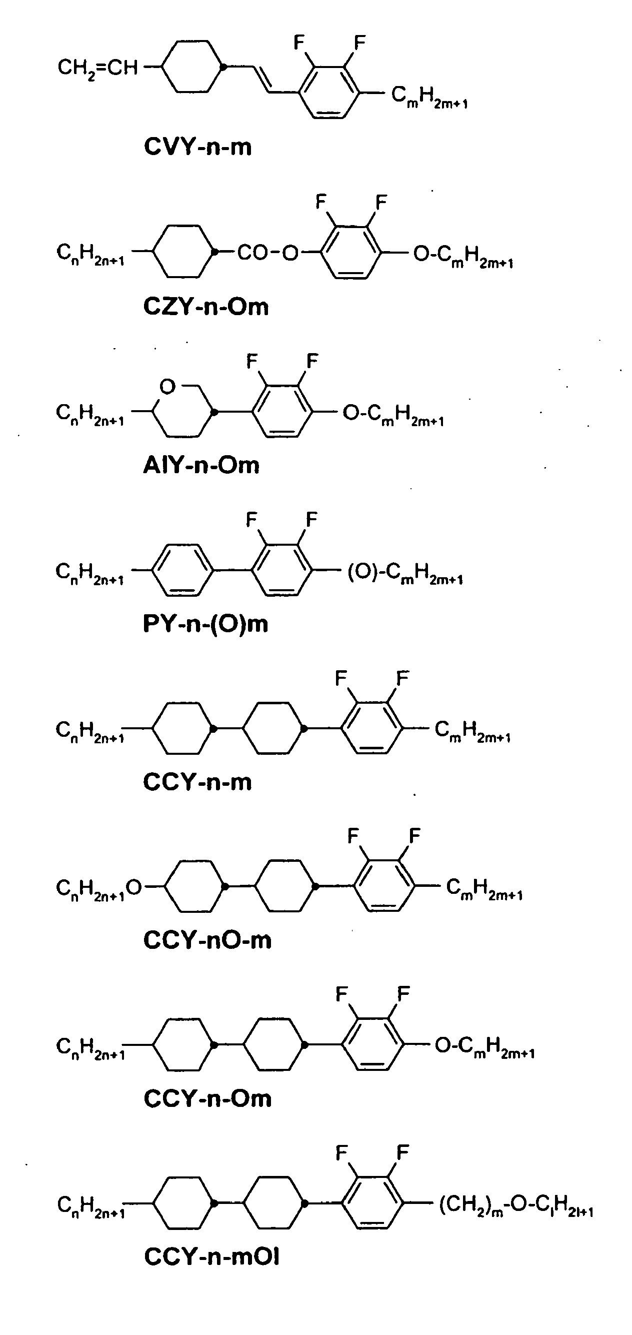

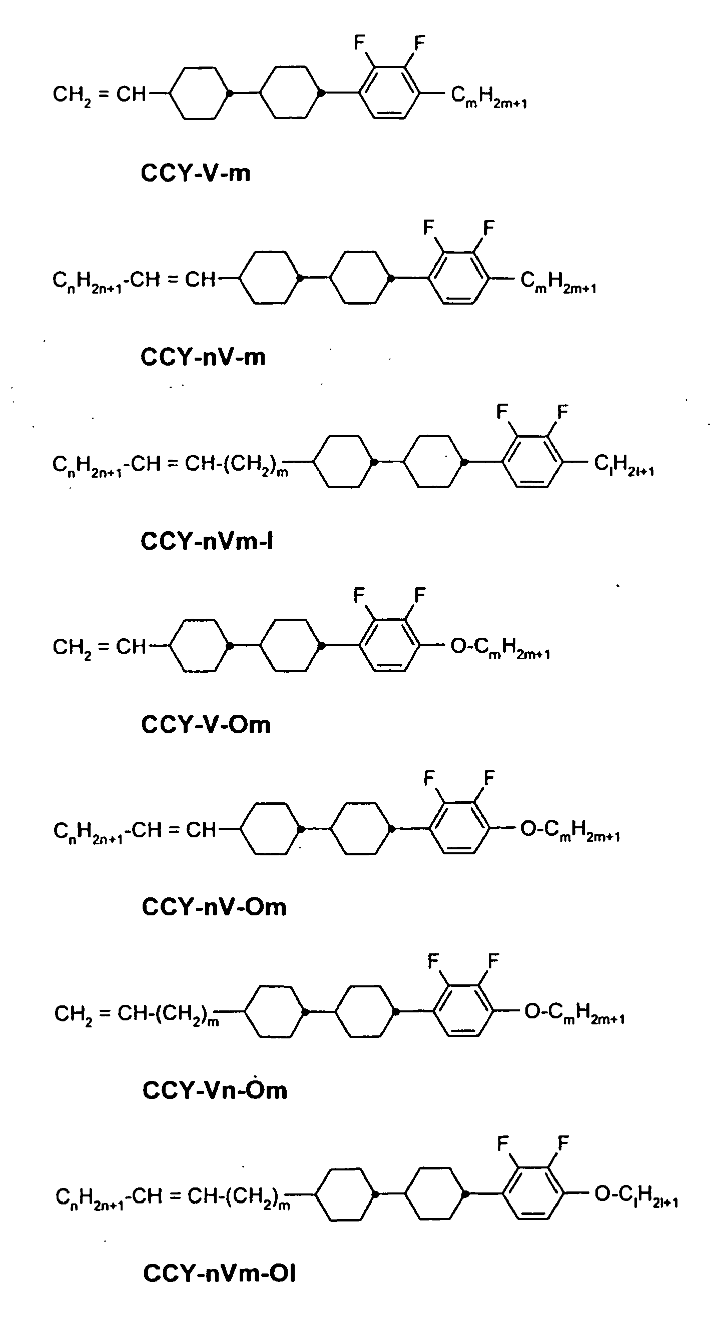

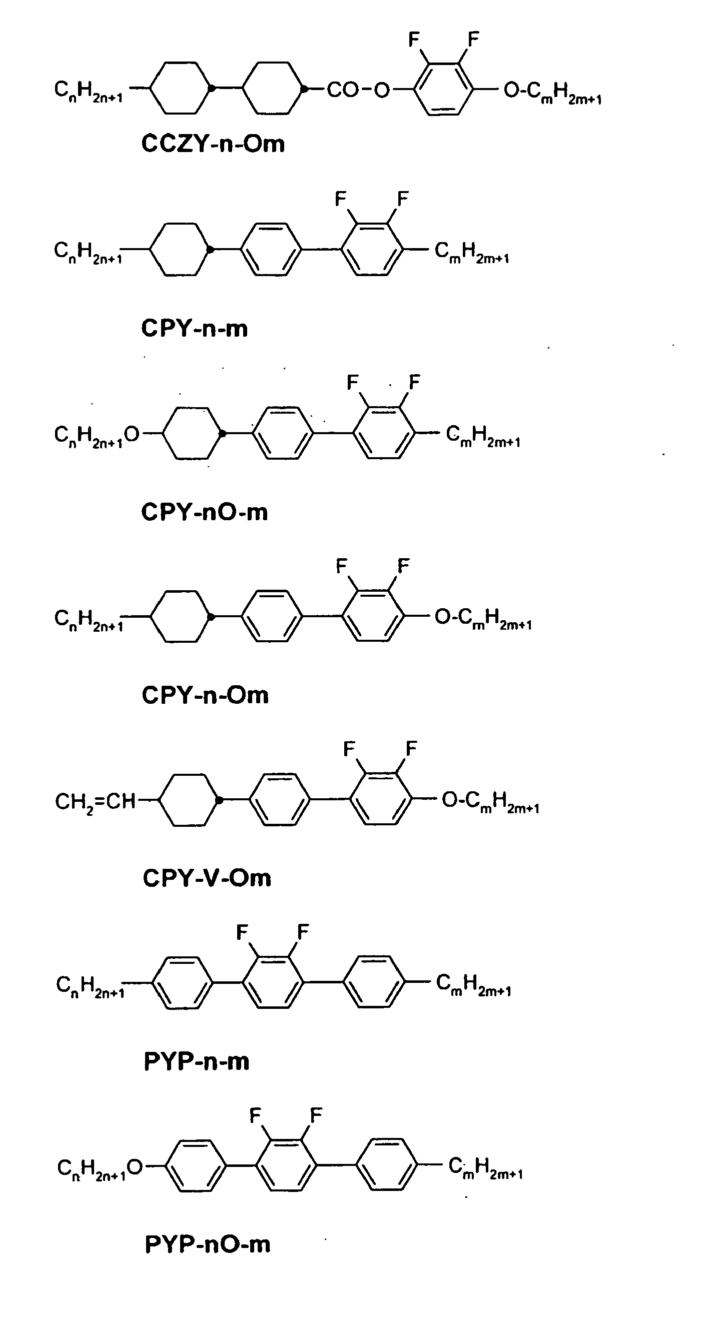

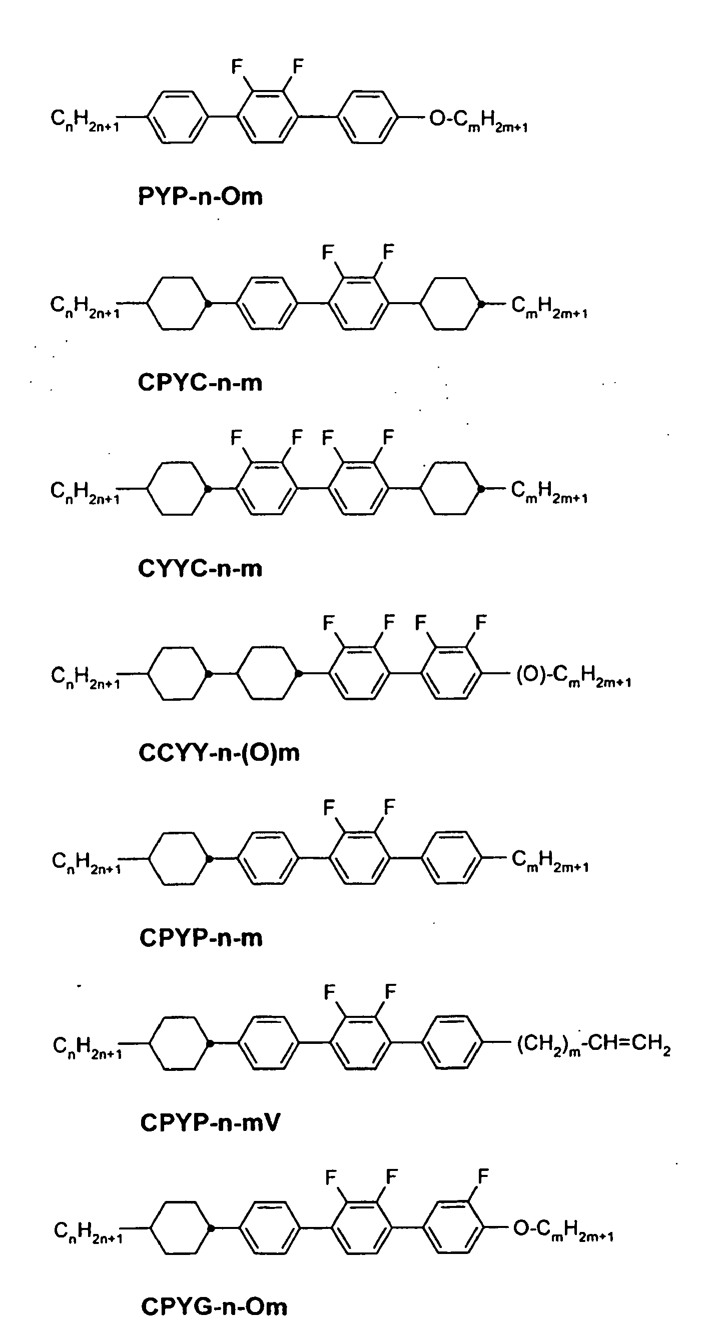

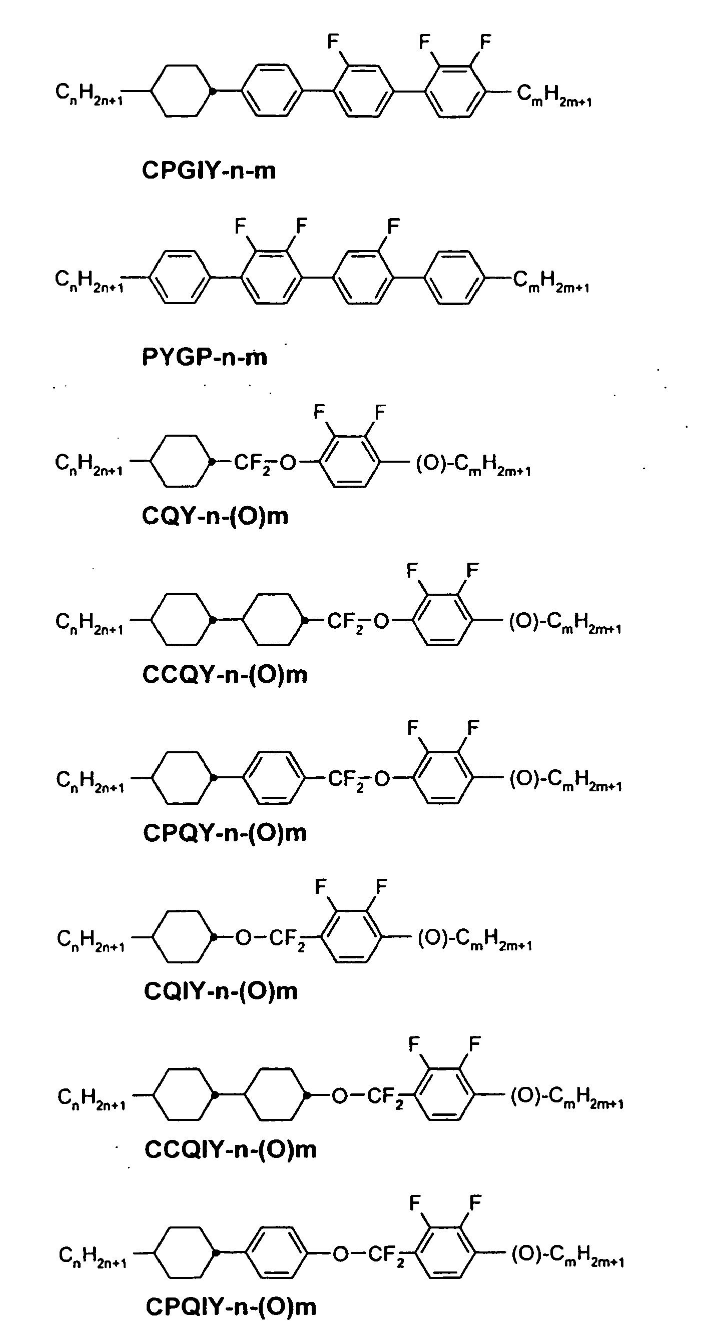

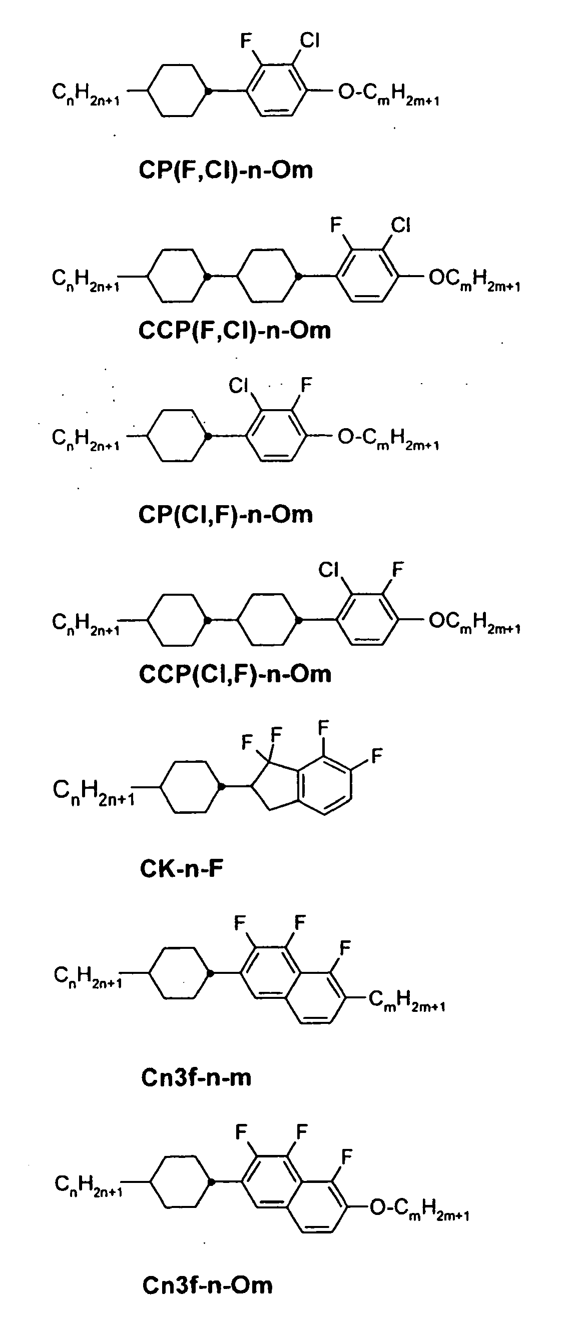

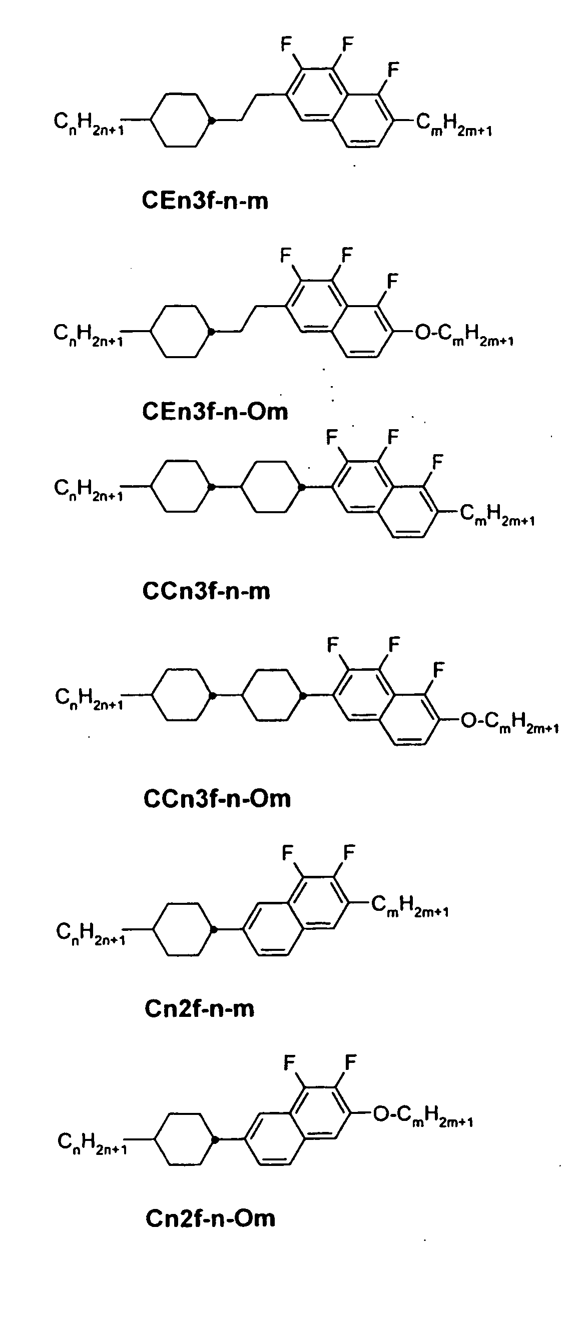

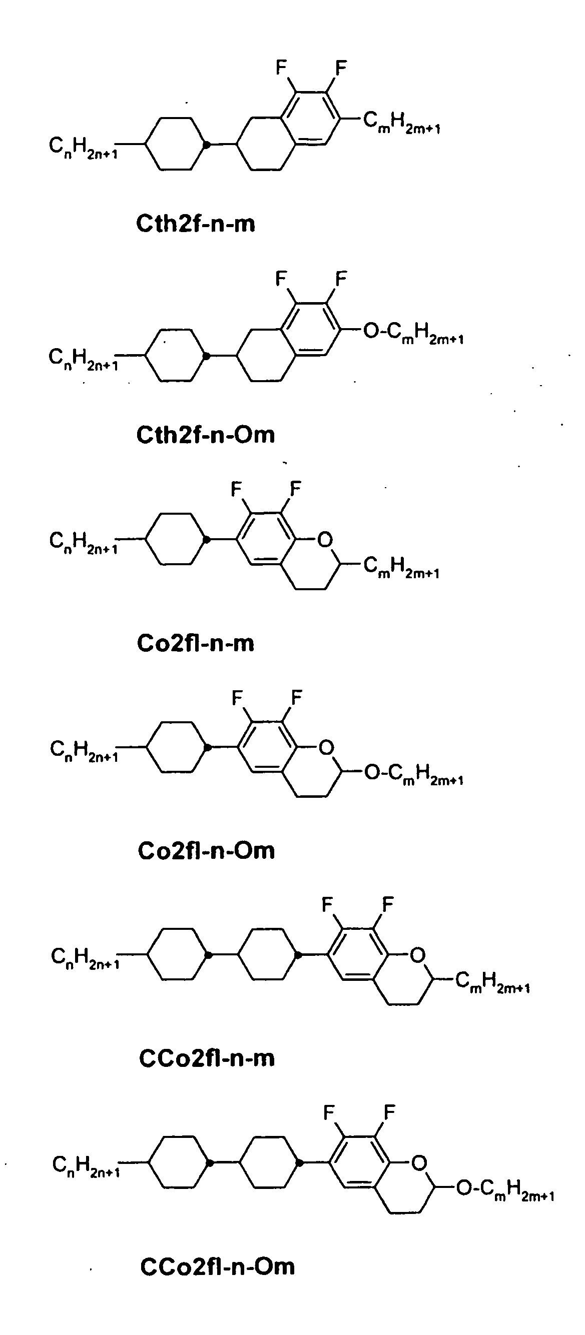

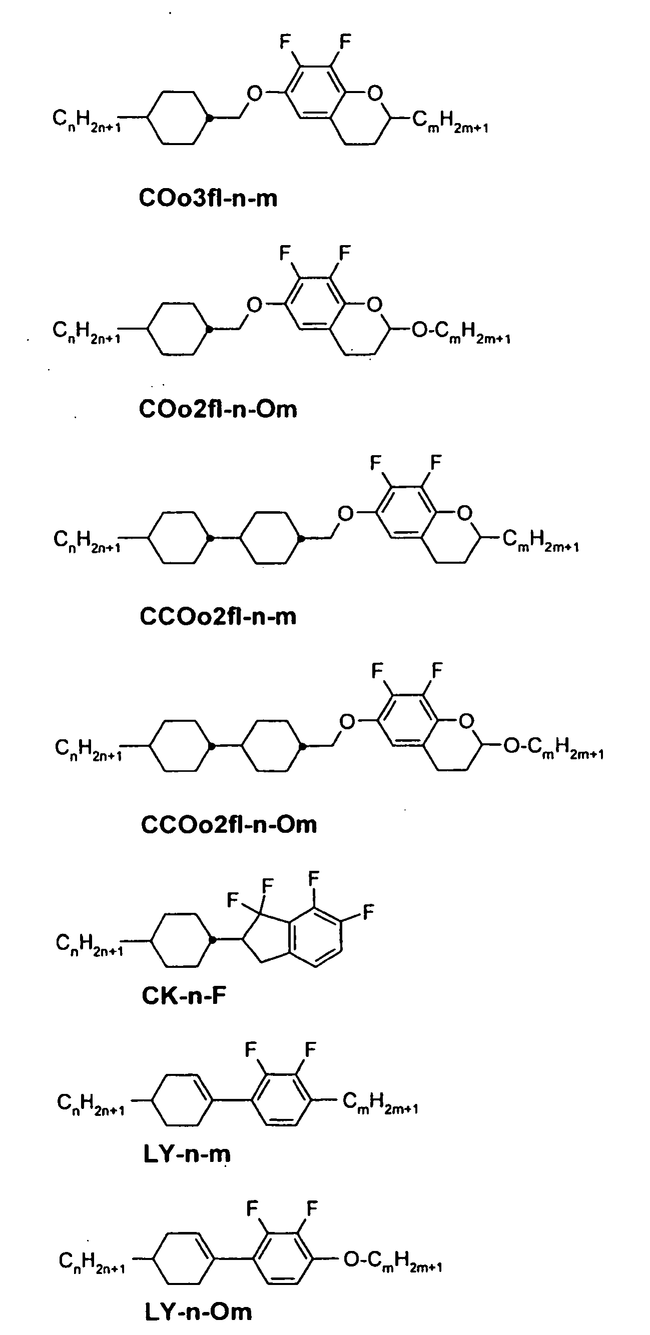

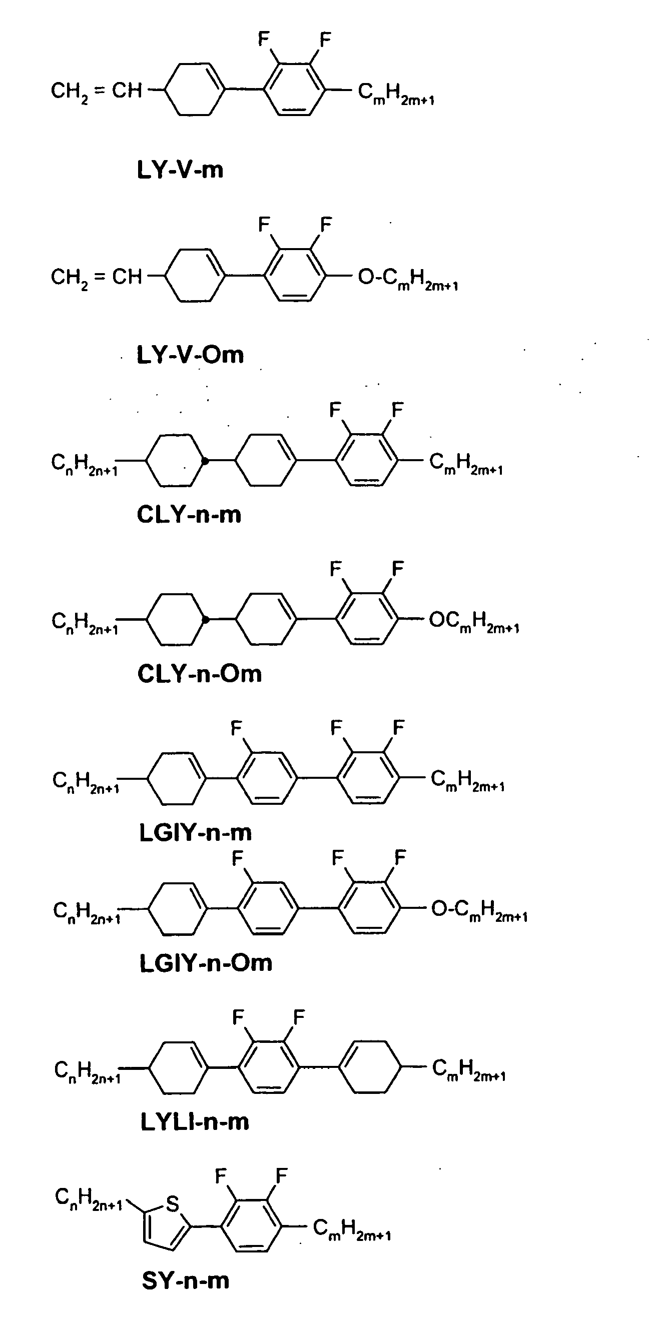

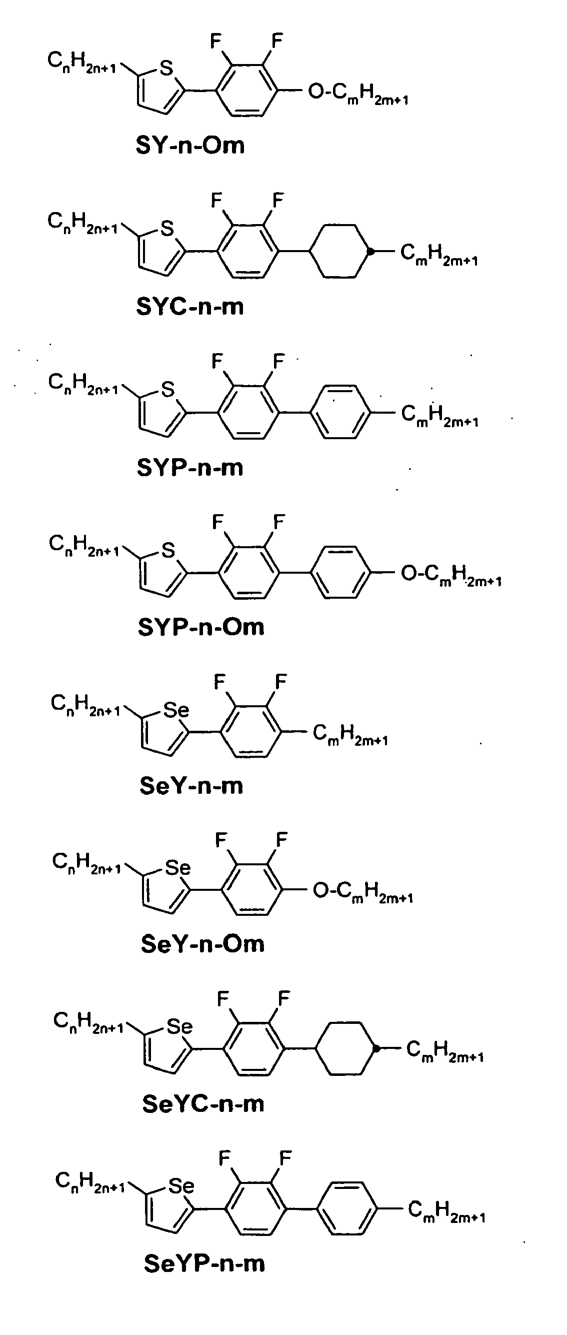

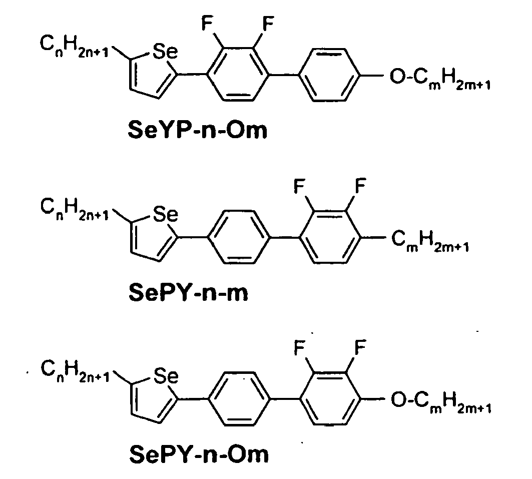

In der Tabelle E werden chirale Dotierstoffe genannt, die bevorzugt in den erfindungsgemäßen Mischungen eingesetzt werden.

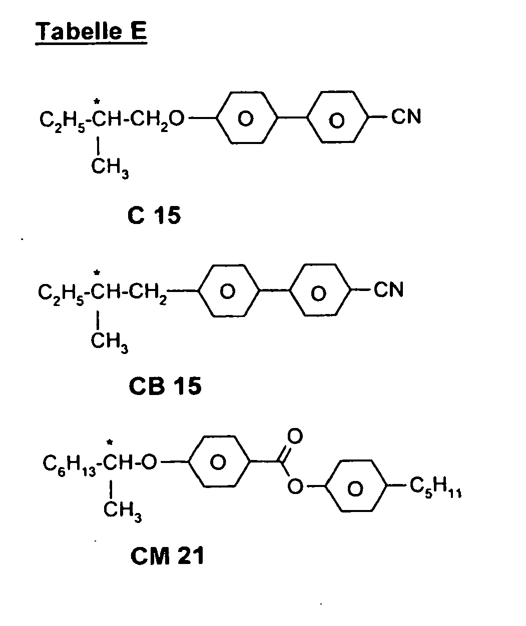

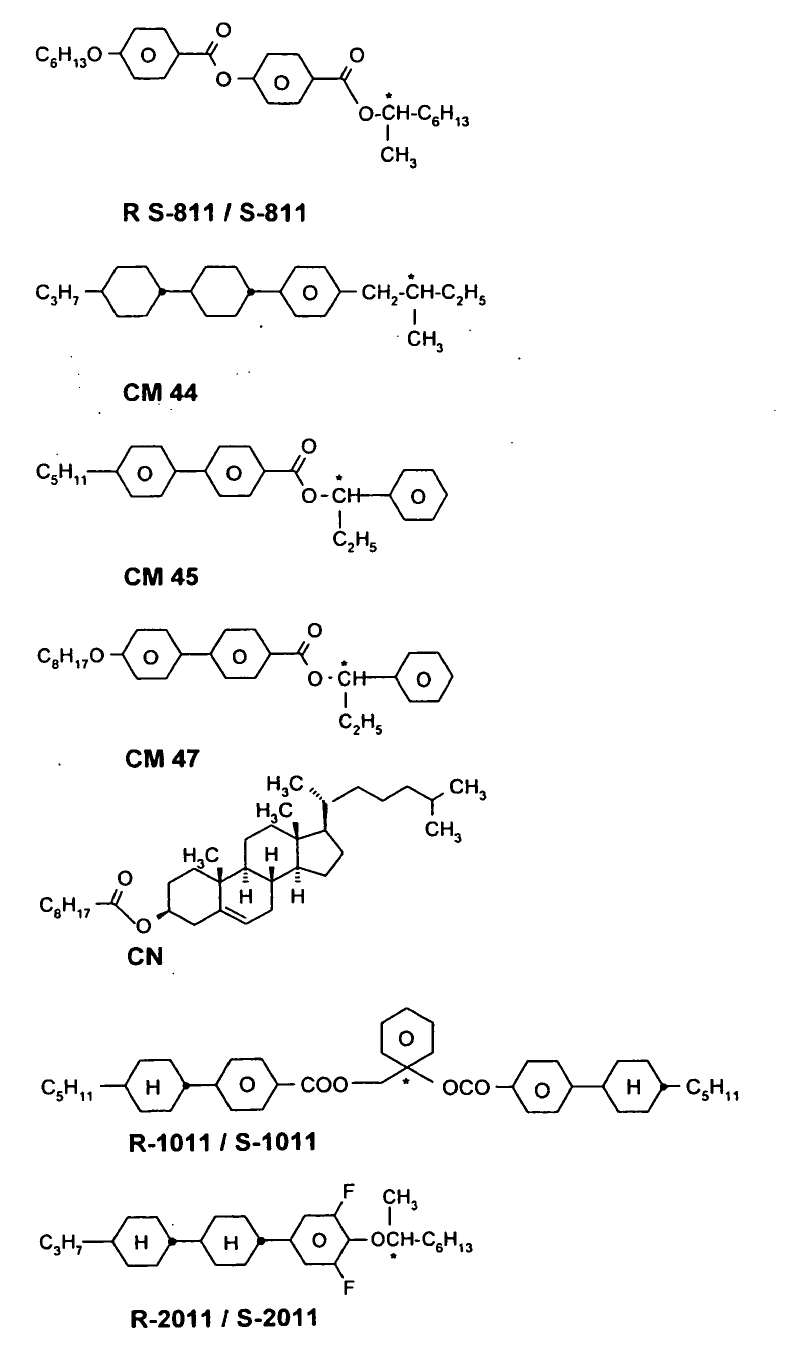

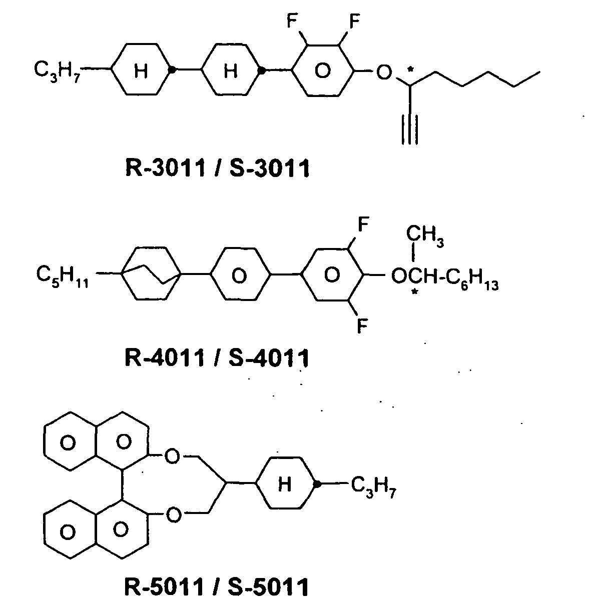

Verbindungen, ausgewählt aus der Gruppe der Verbindungen der Tabelle E.

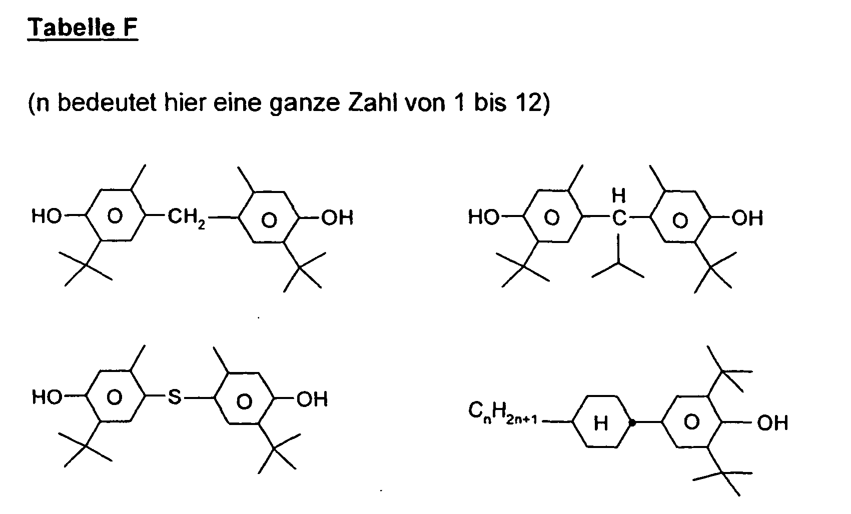

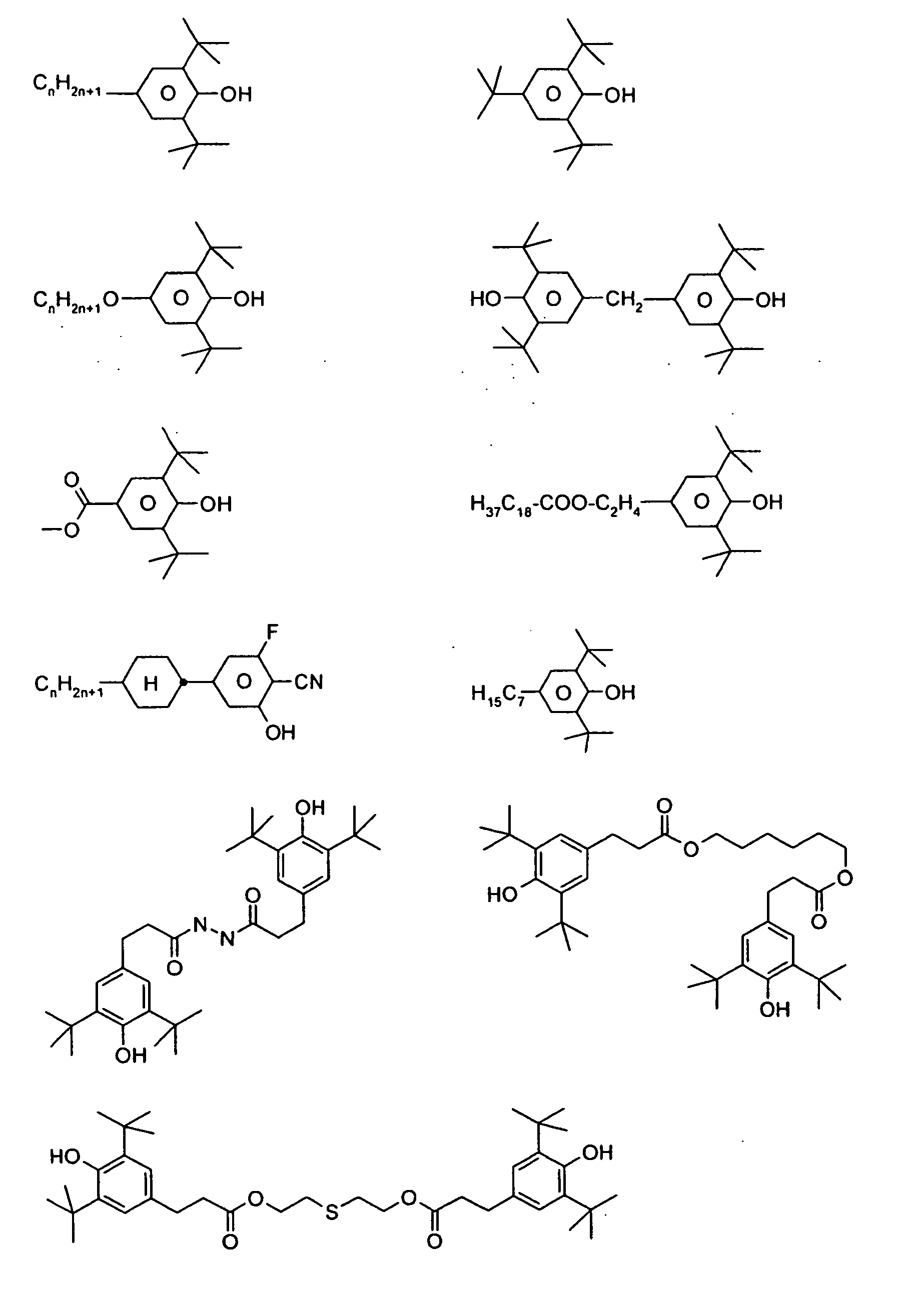

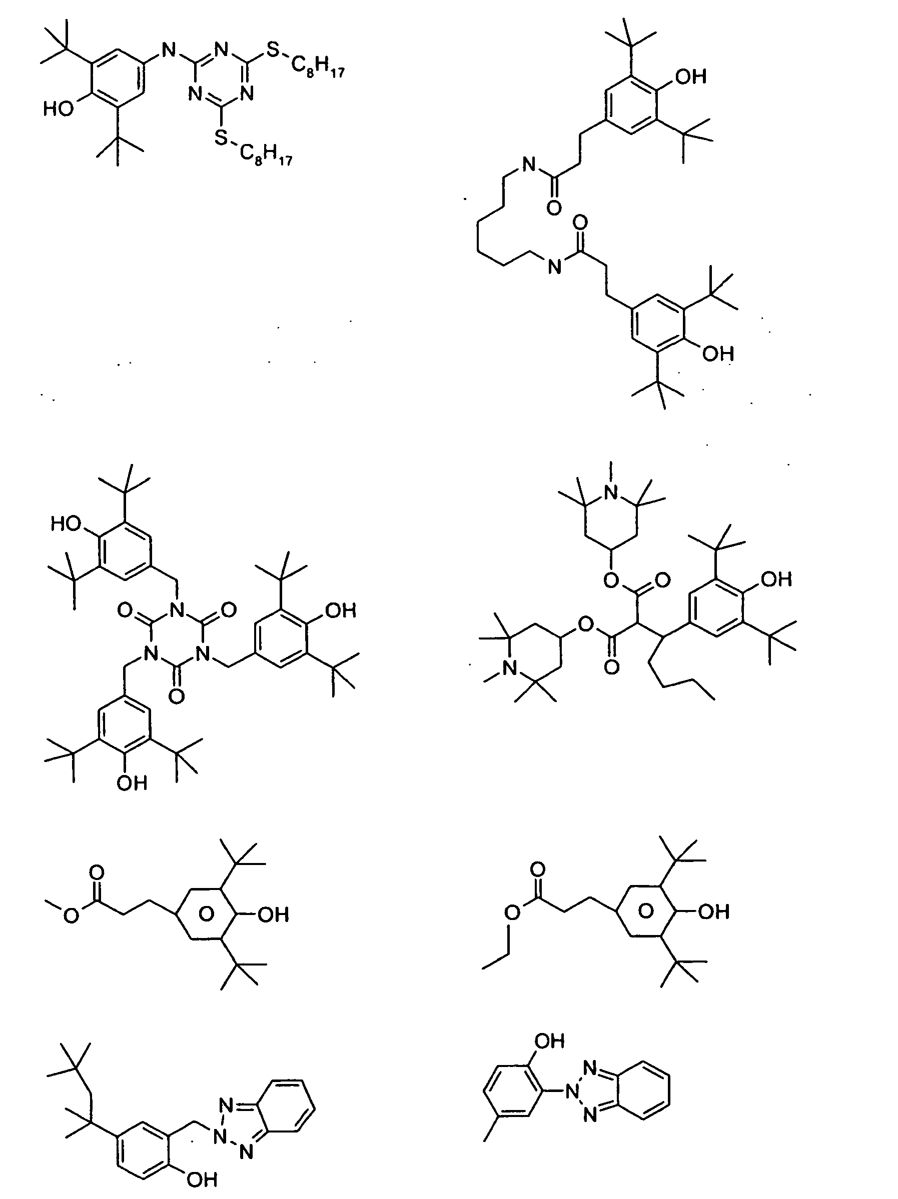

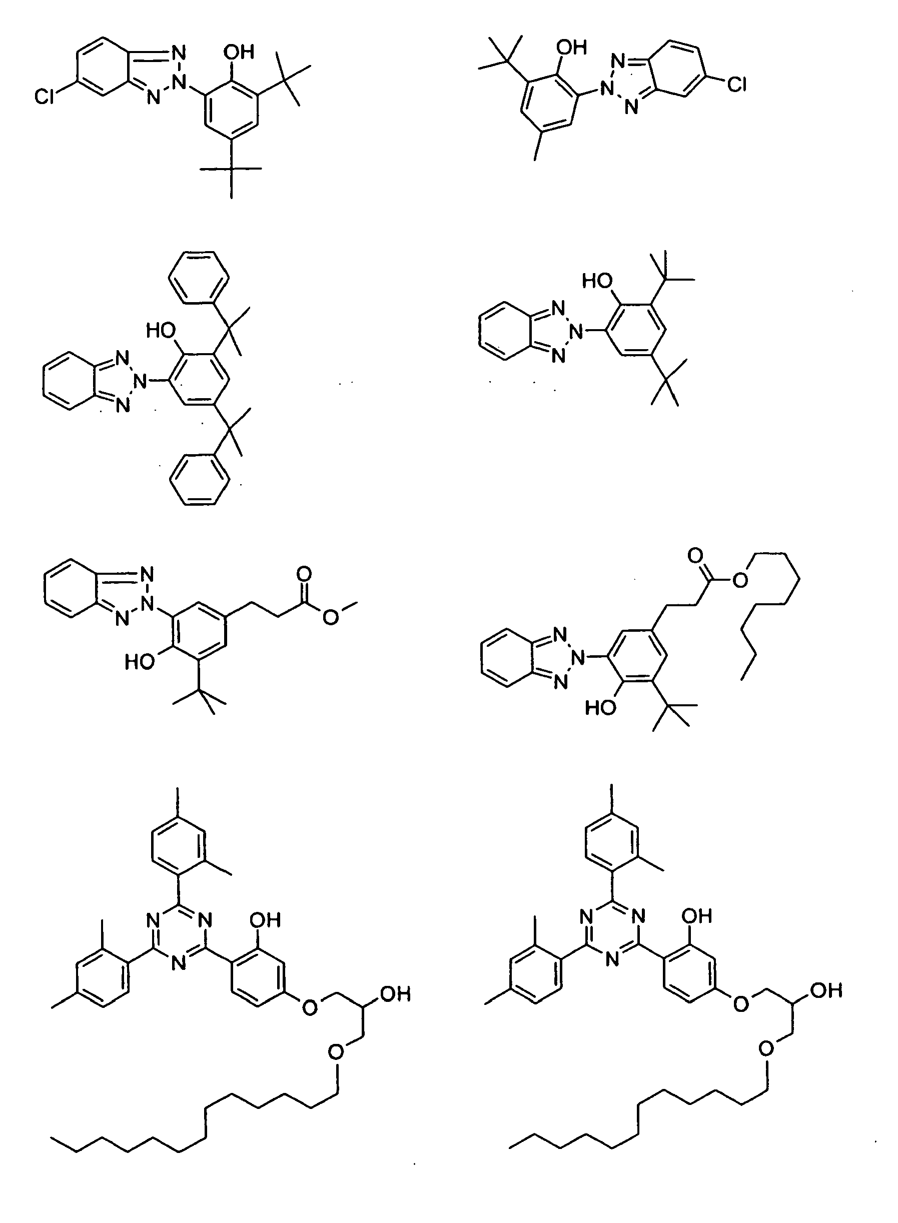

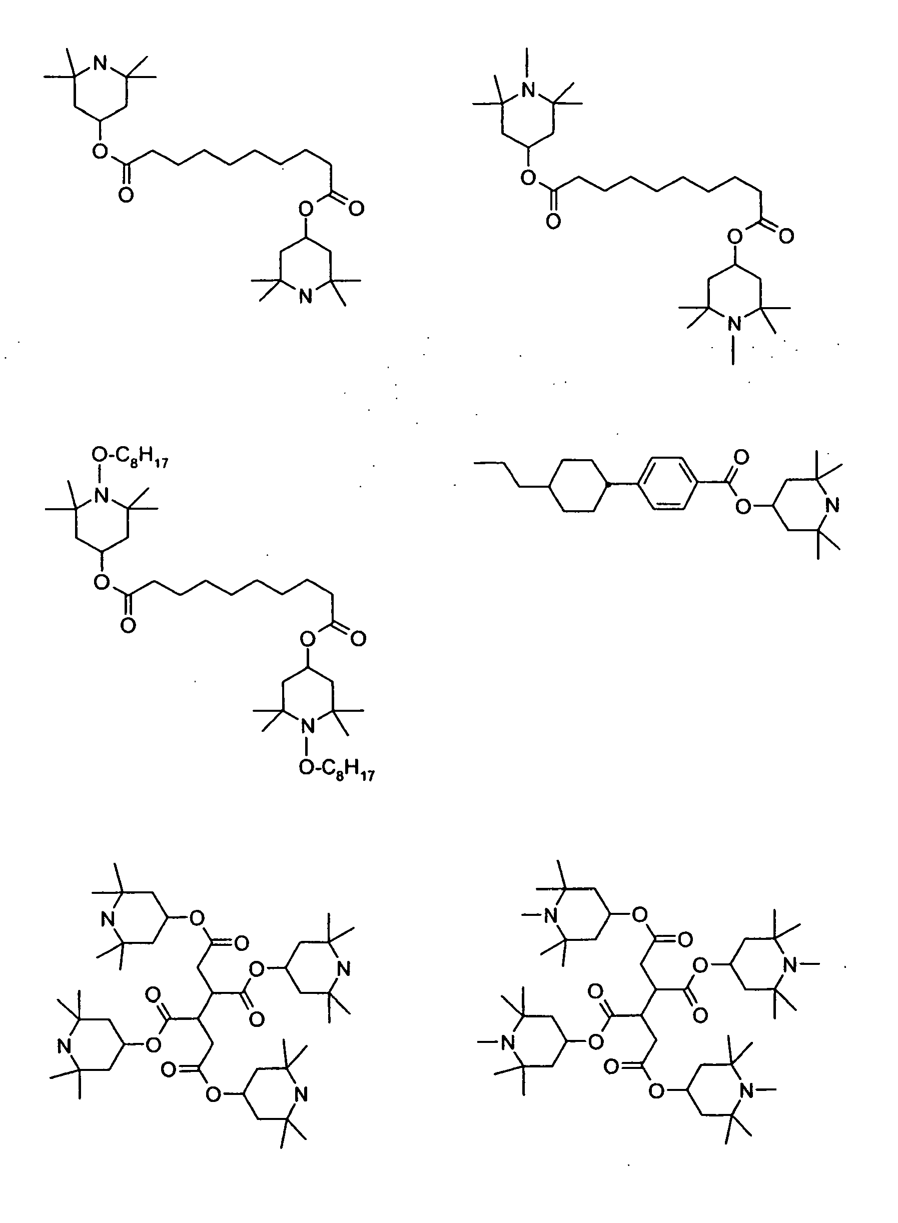

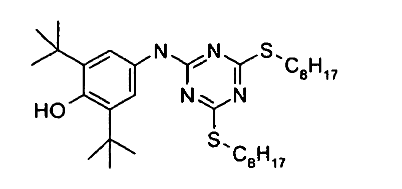

In einer bevorzugten Ausführungsform der vorliegenden Erfindung enthalten die erfindungsgemäßen Medien eine oder mehrere Verbindungen, ausgewählt aus der Gruppe der Verbindungen der Tabelle F.

Geeignete reaktive Mesogene für den Einsatz der erfindungsgemäßen Mischungen in PS-VA-Anwendungen werden nachfolgend in Tabelle G genannt:

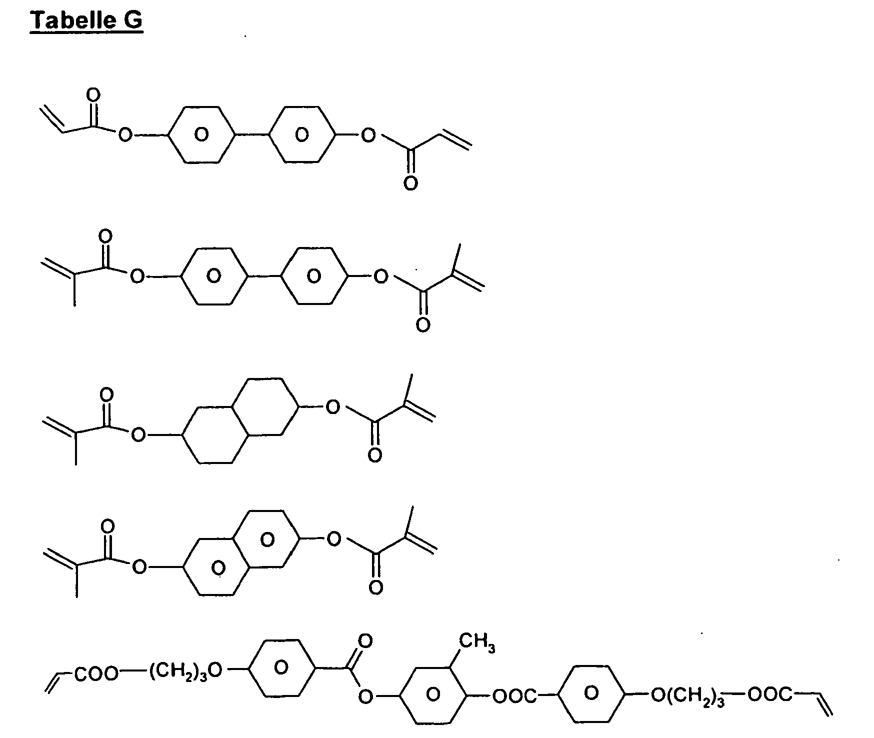

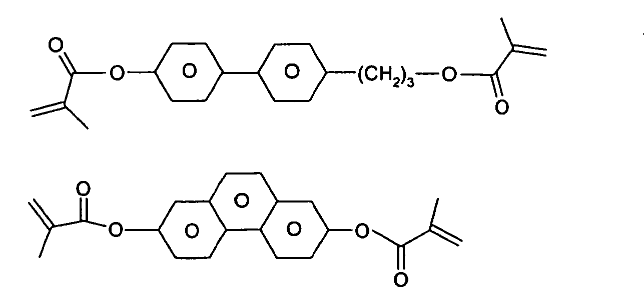

### Mischungsbeispiele

### Beispiel 1

| Zusammensetzung | | | Physikalische Eigenschaften | |
|---|---|---|---|---|
| Verbindung | | Konzentration | | |
| No. | Abkürzung | /Massen-% | T(N,l) | = 76,0 °C |
| 1 | SY-1-O2 | 10,0 | | |
| 2 | CY-3-O4 | 13,0 | Δn(20°C,589 nm) | = 0,0972 |
| 3 | CCY-3-O2 | 8,0 | | |
| 4 | CCY-3-O3 | 4,0 | Δε(20°C, 1 kHz) | = -2,9 |
| 5 | CCY-2-1 | 11,0 | | |
| 6 | CCY-3-1 | 11,0 | γ₁(20°C) | = 128 mPa·s |
| 7 | PYP-2-4 | 9,0 | | |
| 8 | CC-3-4 | 15,0 | | |
| 9 | CC-3-O3 | 10,0 | | |
| 10 | CC-5-O1 | 4,0 | | |
| 11 | CCOC-3-3 | 2,0 | | |
| 12 | CCOC-4-3 | 3.0 | | |
| Σ | | 100,0 | | |

Diese Mischung eignet sich hervorragend für die Anwendung in VA-Anzeigen und auch besonders gut als Host für PS-VA-Anwendungen.

### Beispiel 2

| Zusammensetzung | | | Physikalische Eigenschaften | |
|---|---|---|---|---|
| Verbindung | | Konzentration | | |
| No. | Abkürzung | /Massen-% | T(N,l) = | 81,0 °C |
| 1 | SY-1-O2 | 10,0 | | |
| 2 | CY-3-O2 | 14,0 | Δn(20°C, 589 nm) | =0,0953 |
| 3 | CCY-3-O2 | 7,0 | | |
| 4 | CCY-4-O2 | 9,0 | Δε(20°C, 1 kHz) | = -3,1 |
| 5 | CPY-2-O2 | 6,0 | | |
| 6 | CPY-3-O2 | 6,0 | γ₁(20°C) | = 106 mPa·s |
| 7 | CC-2-3 | 22,0 | | |
| 8 | CC-3-4 | 8,0 | | |
| 9 | CP-3-O | 3,0 | | |
| 10 | CCP-3-1 | 6,0 | | |
| 11 | CCP-3-3 | 9.0 | | |
| Σ | | 100.0 | | |

Diese Mischung eignet sich hervorragend für die Anwendung in VA-Anzeigen und auch besonders gut als Host für PS-VA-Anwendungen.

### Beispiel 3

| Zusammensetzung | | | Physikalische Eigenschaften | |
|---|---|---|---|---|
| Verbindung | | Konzentration | | |
| No. | Abkürzung | /Massen-% | T(N,l) | = 75,5 °C |
| 1 | SYP-1-2 | 11,0 | nₑ(20°C, 589 nm) | = 1,5898 |
| 2 | CY-3-O2 | 17,0 | Δn(20°C,589nm) | = 0,1048 |
| 3 | CCY-3-O2 | 11,0 | ε_{⊥}(20°C, 1 kHz) | = 6,4 |
| 4 | CCY-3-O3 | 6,0 | Δε(20°C, 1 kHz) | = -2,9 |
| 5 | CPY-2-O2 | 7,0 | K₁(20°C) | = 12,9 pN |
| 6 | CPY-3-O2 | 7,0 | K₃/K₁(20°C) | = 1,11 |
| 7 | CC-3-V | 41,0 | γ₁,(20°C) | = 81 mPa·s |
| Σ | | 100.0 | V₀(20°C) | = 2,34 V |

Diese Mischung eignet sich hervorragend für die Anwendung in VA-Anzeigen oder als Host für PS-VA-Anwendungen.

### Beispiel 4

| Zusammensetzung | | | Physikalische Eigenschaften | |
|---|---|---|---|---|
| Verbindung | | Konzentration | | |
| No. | Abkürzung 1 | /Massen-% | T(N,l) | = 75,5 °C |
| 1 | SYP-1-2 | 8,0 | | |
| 2 | CY-3-O4 | 24,0 | Δn(20°C, 589 nm) | = 0,0952 |
| 3 | CCY-3-O2 | 3,0 | | |
| 4 | CCY-3-O3 | 7,0 | Δε(20°C, 1 kHz) | = -2.8 |
| 5 | CCY-2-1 | 10,0 | | |
| 6 | CCY-3-1 | 10,0 | γ₁(20°C) | = 134 mPa.s |
| 7 | PYP-2-4 | 5,0 | | |
| 8 | CC-3-4 | 15,0 | | |
| 9 | CC-3-O3 | 7,0 | | |
| 10 | CC-5-O1 | 5,0 | | |
| 11 | CCOC-3-3 | 2,0 | | |
| 12 | CCOC-4-3 | 3,0 | | |
| 13 | CGPC-3-3 | 1.0 | | |
| Σ | | 100.0 | | |

Diese Mischung eignet sich hervorragend für die Anwendung in VA-Anzeigen und auch besonders gut als Host für PS-VA-Anwendungen.

### Vergleichsbeispiel 1

| Zusammensetzung | | | Physikalische Eigenschaften | |
|---|---|---|---|---|
| Verbindung | | Konzentration | | |
| No. | Abkürzung | /Massen-% | T(N,l) | = 76,5 °C |
| 1 | SeY-2-O2 | 10,0 | | |
| 2 | CY-3-O4 | 15,0 | Δn(20°C,589nm) | = 0,0960 |
| 3 | CCY-3-O2 | 6,0 | | |
| 4 | CCY-3-O3 | 6,0 | Δε(20°C, 1 kHz) | = -2,8 |
| 5 | CCY-2-1 | 11,0 | | |
| 6 | CCY-3-1 | 11,0 | γ₁(20°C) | = 129 mPa·s |
| 7 | PYP-2-4 | 9,0 | | |
| 8 | CC-3-4 | 15,0 | | |
| 9 | CC-3-03 | 8,0 | | |
| 10 | CC-5-O1 | 4,0 | | |
| 11 | CCOC-3-3 | 2,0 | | |
| 12 | CCOC-4-3 | 3.0 | | |
| Σ | | 100.0 | | |

Diese Mischung eignet sich hervorragend für die Anwendung in VA-Anzeigen und auch besonders gut als Host für PS-VA-Anwendungen.

### Vergleichsbeispiel 2

| Zusammensetzung | | | Physikalische Eigenschaften | |
|---|---|---|---|---|
| Verbindung | | Konzentration | | |
| No. | Abkürzung | /Massen-% | T(N,l) | = 79,5 °C |
| 1 | SeY-2-O2 | 10,0 | | |
| 2 | CY-3-O2 | 15,0 | Δn(20°C, 589 nm) | = 0,0949 |
| 3 | CCY-3-O2 | 7,0 | | |
| 4 | CCY-4-O2 | 9,0 | Δε(20°C, 1 kHz) | = -3,1 |
| 5 | CPY-2-O2 | 7,0 | | |
| 6 | CPY-3-O2 | 7,0 | γ₁(20°C) | = 106 mPa·s |
| 7 | CC-2-3 | 22,0 | | |
| 8 | CC-3-4 | 8,0 | | |
| 9 | CP-3-O1 | 3,0 | | |
| 10 | CCP-3-1 | 5,0 | | |
| 11 | CCP-3-3 | 7.0 | | |
| Σ | | 100,0 | | |

Diese Mischung eignet sich hervorragend für die Anwendung in VA-Anzeigen und auch besonders gut als Host für PS-VA-Anwendungen.

### Vergleichsbeispiel 3

| Zusammensetzung | | | Physikalische Eigenschaften | |
|---|---|---|---|---|
| Verbindung | | Konzentration | | |
| No. | Abkürzung | /Massen-% | T(N,l) | = 75,5 °C |
| 1 | SeYP-3-2 | 7,0 | nₑ(20°C, 589 nm) | = 1,5934 |
| 2 | SeYP-4-2 | 7,0 | Δn(20°C, 589 nm) | = 0,1067 |
| 3 | CY-3-O2 | 17,0 | ε_{⊥}(20°C, 1 kHz) | = 6,5 |
| 4 | CCY-3-O2 | 11,0 | Δε(20°C, 1 kHz) | = -3,0 |
| 5 | CCY-3-O3 | 6,0 | K₁(20°C) | = 13,1 pN |
| 6 | CPY-2-O2 | 6,5 | K₃K₁(20°C) | = 1,06 |
| 7 | CPY-3-02 | 7,0 | γ₁(20°C) | = 85 mPa.s |
| 8 | CC-3-V | 38,5 | V₀(20°C) | = 2,28 V |
| Σ | | 100,0 | | |

Diese Mischung eignet sich hervorragend für die Anwendung in VA-Anzeigen oder als Host für PS-VA-Anwendungen.

### Vergleichsbeispiel 4

| Zusammensetzung | | | Physikalische Eigenschaften | |
|---|---|---|---|---|
| Verbindung | | Konzentration | | |
| No. | Abkürzung | /Massen-% | T(N,l) | = 75,5 °C |
| 1 | SeYP-3-2 | 6,5 | | |
| 2 | SeYP-4-2 | 7,0 | Δn(20°C, 589 nm) | = 0,0950 |
| 3 | CY-3-O4 | 25,0 | | |
| 4 | CCY-3-O2 | 4,0 | Δε(20°C, 1 kHz) | = -2,8 |
| 5 | CCY-3-O3 | 5,0 | | |
| 6 | CCY-2-1 | 10,0 | γ₁(20°C) | = 133 mPa·s |
| 7 | CCY-3-1 | 9,0 | | |
| 8 | CC-3-4 | 14,5 | | |
| 9 | CC-3-O3 | 8,0 | | |
| 10 | CC-5-O1 | 4,0 | | |
| 11 | CCOC-3-3 | 2,0 | | |
| 12 | CCOC-4-3 | 3,0 | | |
| 13 | CGPC-3-3 | 2.0 | | |
| Σ | | 100.0 | | |

Diese Mischung eignet sich hervorragend für die Anwendung in VA-Anzeigen und auch besonders gut als Host für PS-VA-Anwendungen.

Optional können auch verschiedene der genannten Beispielmischungen miteinander gemischt werden, wobei ähnliche, vorteilhafte Ergebnisse erhalten werden wie für die entsprechenden Ausgangsmischungen. Insbesondere führt die in der Regel mit dem Mischen verschiedener Ausgangsmischungen einhergehende Erhöhung der Zahl der Mischungsbestandteile meist zu einer Verbesserung der Lagerstabilität derartiger Mischungen.

## Patentansprüche

1. Flüssigkristallines Medium mit negativer dielektrischer Anisotropie, welches
a) eine erste dielektrisch negative Komponente *(Komponente* A), die aus einer oder mehreren Verbindungen der Formel I besteht 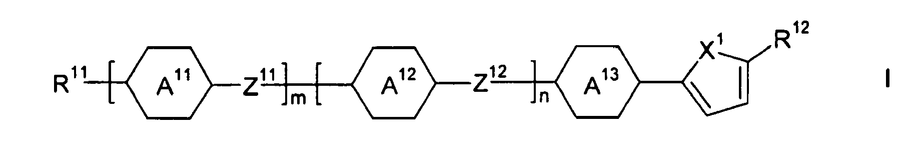 worin
R¹¹ und R¹² jeweils unabhängig voneinander H, einen unsubstituierten Alkyl- oder Alkenylrest mit bis zu 15 C-Atomen, wobei in diesen Resten auch eine oder mehrere CH₂-Gruppen durch -O-, -S-, 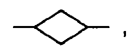 -C=C-, -CF₂-O-, -O-CF₂-, -CO-O- oder -O-CO- so ersetzt sein können, dass O-Atome nicht direkt miteinander verknüpft sind,
einer der vorhandenen Ringe 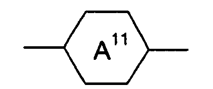 bis 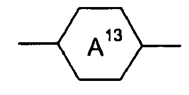 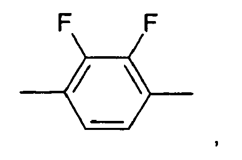 und die anderen, soweit vorhanden, jeweils unabhängig voneinander 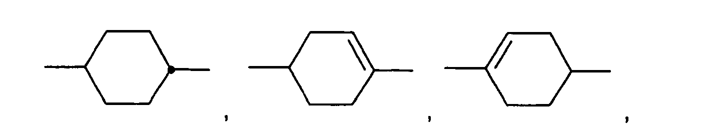 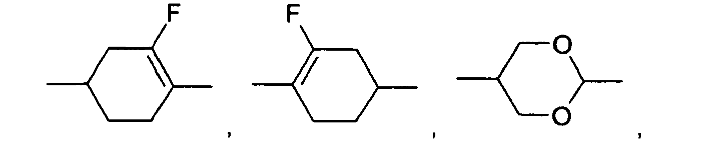 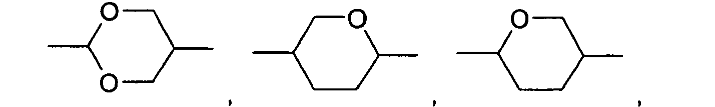 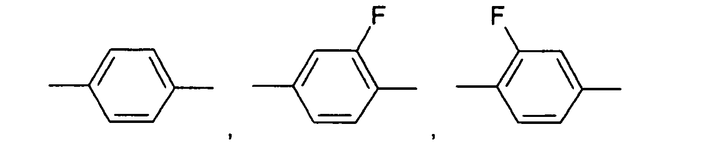 oder 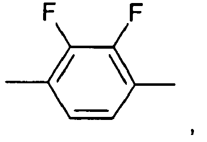
Z¹¹ und Z¹² jeweils unabhängig voneinander -CH₂-CH₂-, -CH=CH-, -C=C-, -CH₂-O-, -O-CH₂-, -CO-O-, -O-CO-, -CF₂-O-, -O-CF₂-, -CF₂-CF₂- oder eine Einfachbindung,
X¹ S,
m und n unabhängig voneinander 0 oder 1 und
bedeuten,
b) eine zweite dielektrisch negative Komponente *(Komponente* B), die aus einer oder mehreren Verbindungen ausgewählt aus der Gruppe der Formeln II-1 bis II-16 besteht 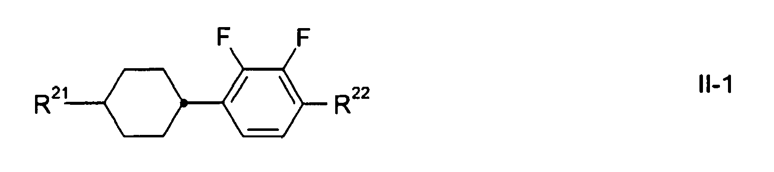 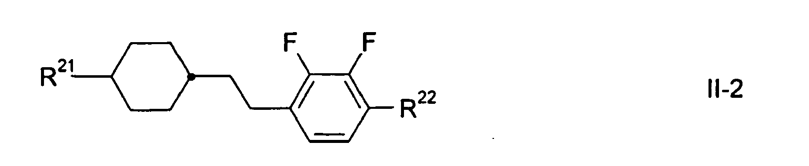 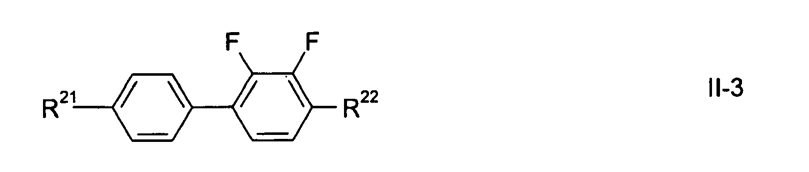 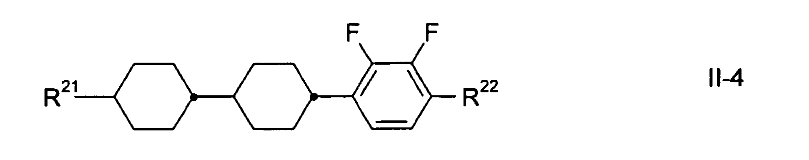 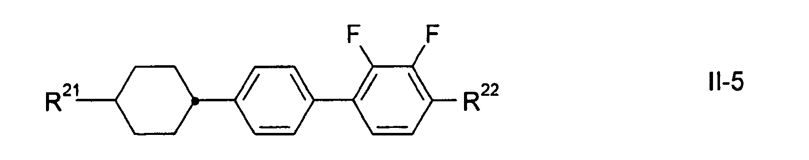 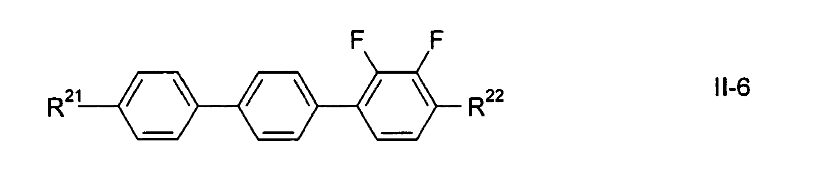 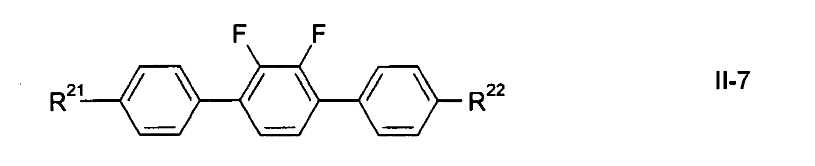 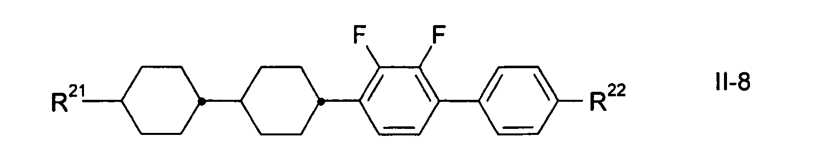 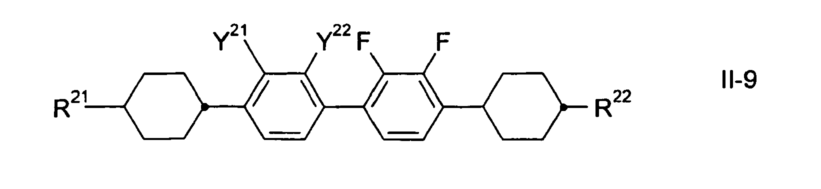 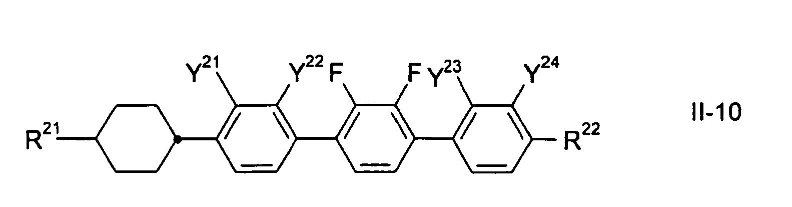 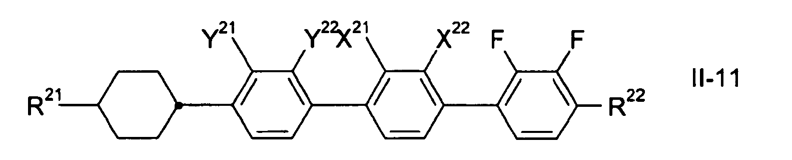 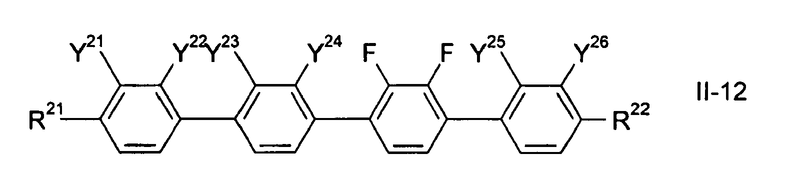 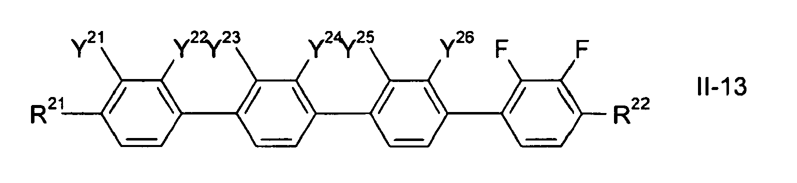 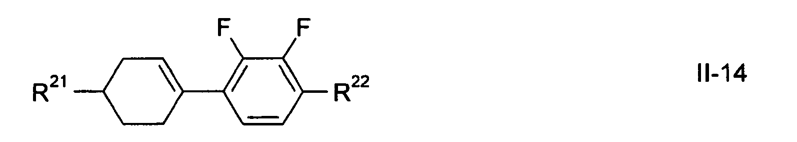 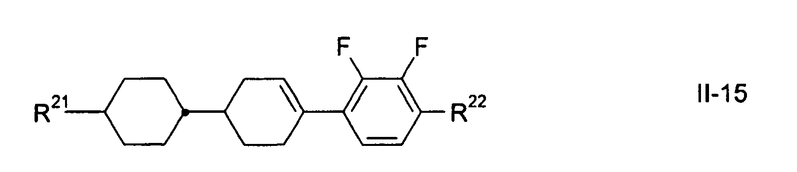 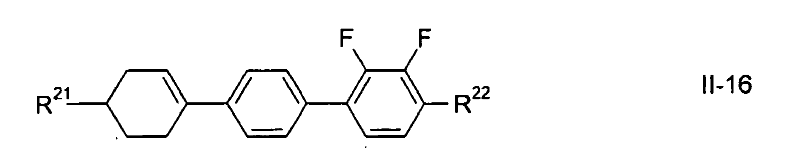 worin
R²¹ und R²² jeweils unabhängig voneinander H, einen unsubstituierten Alkyl- oder Alkenylrest mit bis zu 15 C- Atomen, wobei in diesen Resten auch eine oder mehrere CH₂-Gruppen durch -O-, -S-, 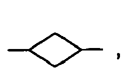 -C≡C-, -CF₂-O-, -O-CF₂-,
-CO-O- oder -O-CO- so ersetzt sein können, dass O-Atome nicht direkt miteinander verknüpft sind,
Y²¹ bis Y²⁶ unabhängig voneinander H oder F, und
X²¹ und X²² beide H oder einer von X²¹ und X²² H und der andere F,
jedoch bevorzugt höchstens vier, besonders bevorzugt höchstens drei und ganz besonders bevorzugt einer oder zwei, von Y²¹ bis Y²⁶, X²¹ und X²² F,
bedeuten und
c) eine dielektrisch neutrale Komponente (*Komponente C*), die aus einer oder mehreren Verbindungen ausgewählt aus der Gruppe der Formeln V-1 bis V-14 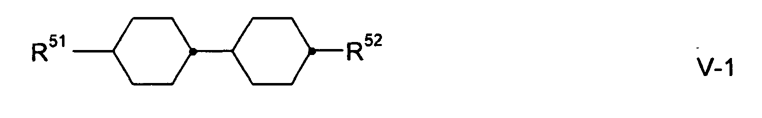 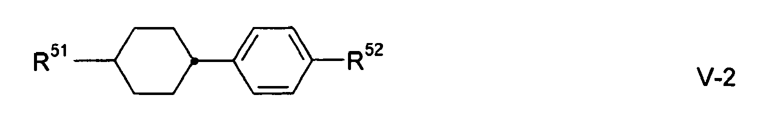 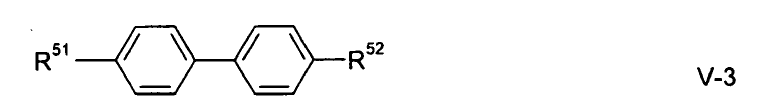 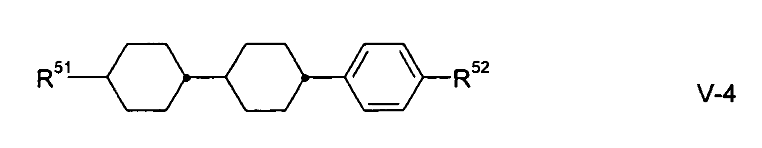 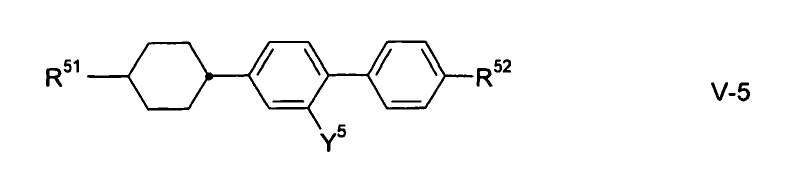 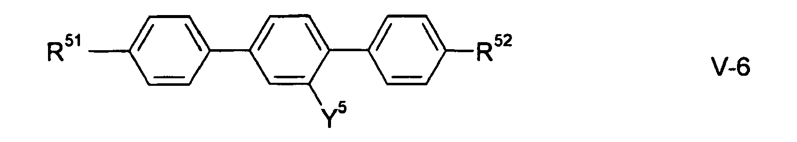 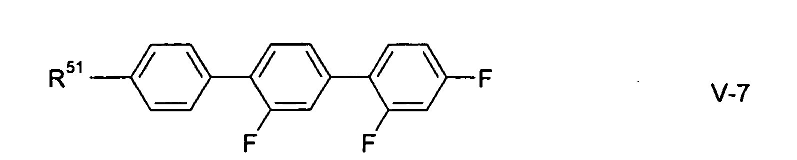 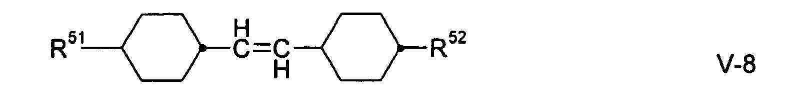 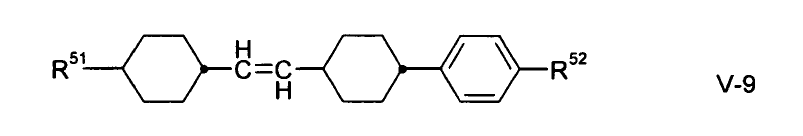 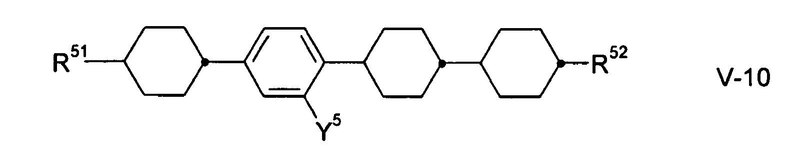 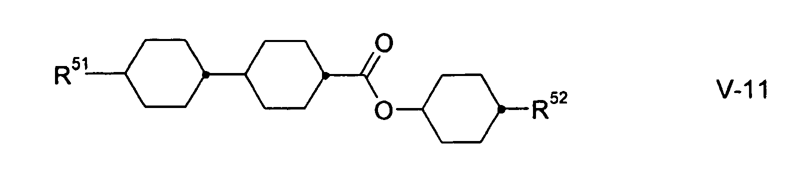 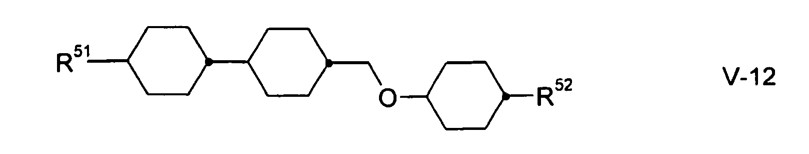 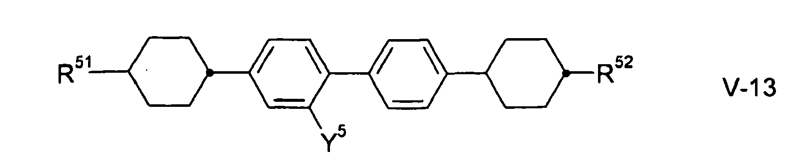 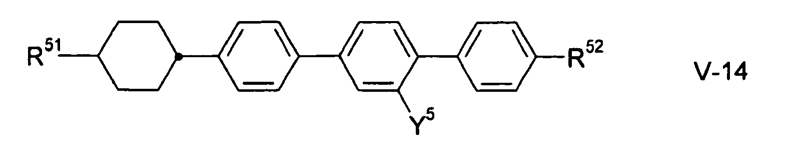
worin
R⁵¹ und R⁵² jeweils unabhängig voneinander, eine der für R¹¹ und R¹² gegebenen Bedeutung haben und
Y⁵ H oder F bedeutet,
enthält.

2. Medium nach Anspruch 1, **dadurch gekennzeichnet, dass** die zweite dielektrisch negative Komponente (*Komponente B*) eine oder mehrere Verbindungen der Formel II-1 enthält.

3. Medium nach mindestens einem der Ansprüche 1 und 2, **dadurch gekennzeichnet, dass** es eine oder mehrere Verbindungen der Formel V-1, wie in Anspruch 1 gegeben, enthält.

4. Medium nach einem oder mehreren der Ansprüche 1 bis 3, **dadurch gekennzeichnet, dass** es zusätzlich
d) eine chirale Komponente (*Komponente D*), die aus einer oder mehreren chiralen Verbindungen besteht, enthält.

5. Medium nach einem oder mehreren der Ansprüche 2 bis 4, **dadurch gekennzeichnet, dass** die zweite dielektrisch negative Komponente (*Komponente B*), eine oder mehrere Verbindungen der Formel II-4 nach Anspruch 1 enthält.

6. Medium nach einem oder mehreren der Ansprüche 1 bis 5, **dadurch gekennzeichnet, dass** es eine oder mehrere Verbindung ausgewählt aus der Gruppe der Verbindungen der Formeln I-1 bis I-4 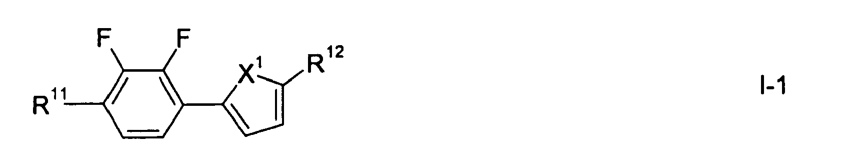 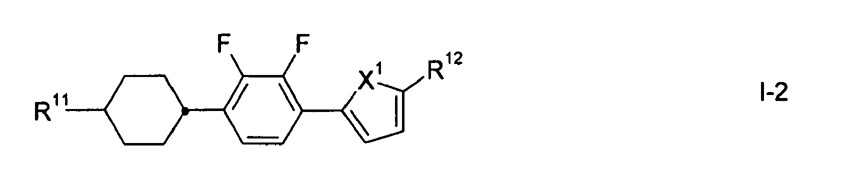 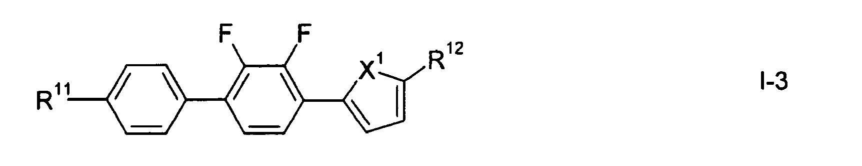 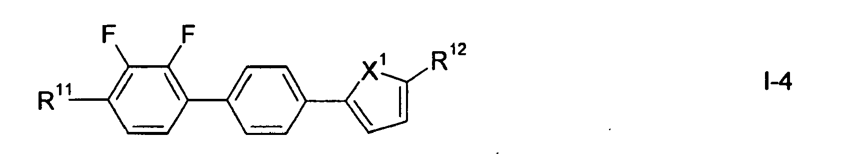 worin die Parameter die in Anspruch 1 gegebenen Bedeutungen haben, enthält.

7. Medium nach einem oder mehreren der Ansprüche 3 bis 6, **dadurch gekennzeichnet, dass** es
| | |
|---|---|
| 2-80 | Gew.-% einer oder mehrerer Verbindungen der Formel I, und |
| 2-80 | Gew.-% einer oder mehrerer Verbindungen der Formeln II-1 bis II-16, und/oder |
| 2-80 | Gew.-% einer oder mehrerer Verbindungen der Formel III und/oder |
| 2-80 | Gew.-% einer oder mehrerer Verbindungen der Formeln IV und |
| 2-80 | Gew.-% einer oder mehrerer Verbindungen der Formeln V-1 bis V-14 |
enthält, wobei der Gesamtgehalt aller Verbindungen der Formeln I bis V-14 in dem Medium 100 Gew.-% oder weniger beträgt.

8. Elektrooptische Anzeige **dadurch gekennzeichnet, dass** sie als Dielektrikum ein flüssigkristallines Medium nach einem oder mehreren der Ansprüche 1 bis 7 enthält.

9. Anzeige nach Anspruch 8, **dadurch gekennzeichnet, dass** sie eine Aktivmatrix-Adressierungsvorrichtung aufweist.

10. Anzeige nach Anspruch 8 oder 9, **dadurch gekennzeichnet, dass** sie auf dem VA-, ECB-, PS-VA-, FFS- oder dem IPS-Effekt basiert.

11. Verwendung eines flüssigkristallinen Mediums nach einem oder mehreren der Ansprüche 1 bis 7 in einer elektrooptischen Anzeige.

12. Verwendung eines flüssigkristallinen Mediums nach Anspruch 11 in einer elektrooptischen Anzeige, die eine Aktivmatrix-Adressierungsvorrichtung aufweist.

13. Verfahren zur Herstellung eines Mediums nach einem oder mehreren der Ansprüche 1 bis 7, **dadurch gekennzeichnet, dass** eine oder mehrere Verbindungen der Formel I, wie in Anspruch 1 angegeben, mit einer oder mehreren Verbindungen ausgewählt aus der Gruppe der Verbindungen der Formeln II-1 bis II-16, III und IV, wie in Anspruch 1 angegeben, und mit einer oder mehreren Verbindungen der Formeln V-1 bis V-14, wie in Anspruch 1 angegeben und/oder einer oder mehreren weiteren flüssigkristallinen Verbindungen und/oder einem oder mehreren Dotierstoffen, Farbstoffen und/oder Additiven gemischt wird.

## Claims

1. Liquid-crystalline medium having negative dielectric anisotropy which comprises
a) a first dielectrically negative component (*component* A), which consists of one or more compounds of the formula I 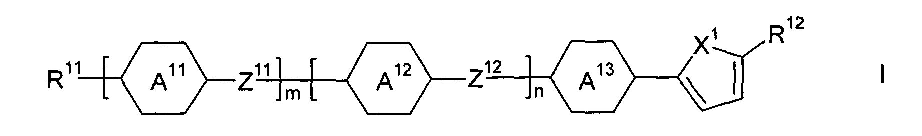 in which
R¹¹ and R¹² each, independently of one another, denote H, an unsub- stituted alkyl or alkenyl radical having up to 15 C atoms, where, in addition, one or more CH₂ groups in these radicals may be replaced by -O-, -S-, 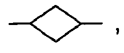 -C≡C-, -CF₂-O-, -O-CF₂-, -CO-O- or -O-CO- in such a way that O atoms are not linked directly to one another,
one of the rings 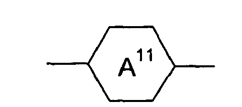 to 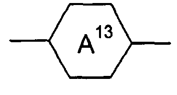 present denotes 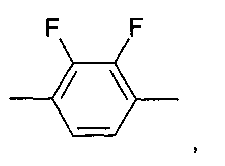 and the others, if present, each, independently of one another, denote 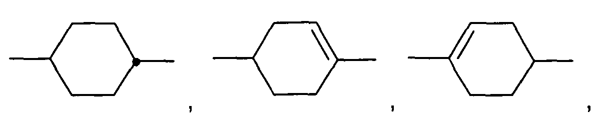 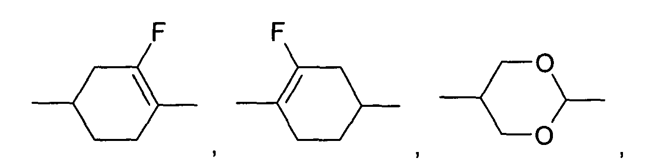 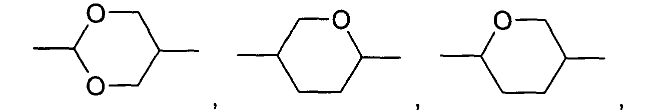 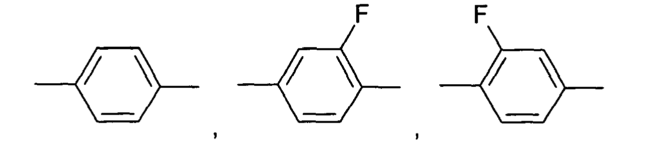 or 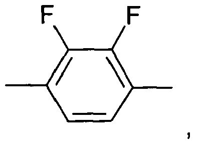
Z¹¹ and Z¹² each, independently of one another, denote -CH₂-CH₂-, -CH =CH-, -C≡C-, -CH₂-O-, -O-CH₂-, -CO-O-, -O-CO-, -CF₂-O-, -O-CF₂-, -CF₂-CF₂- or a single bond,
X¹ denotes S,
m and n, independently of one another, denote 0 or 1, and
b) a second dielectrically negative component (*component B*), which consists of one or more compounds selected from the group of the formulae II-1 to II-16 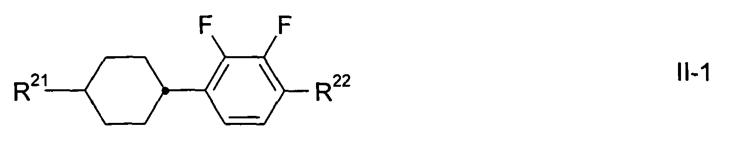 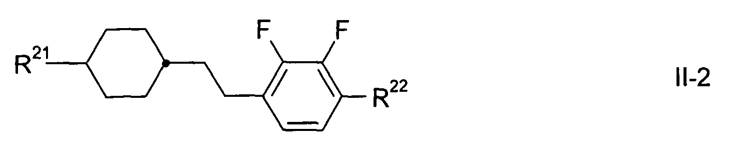 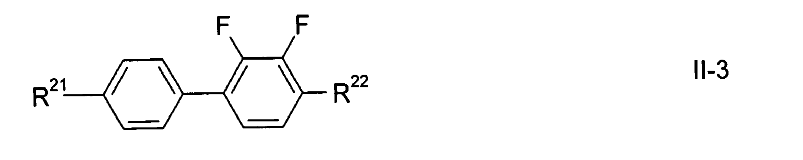 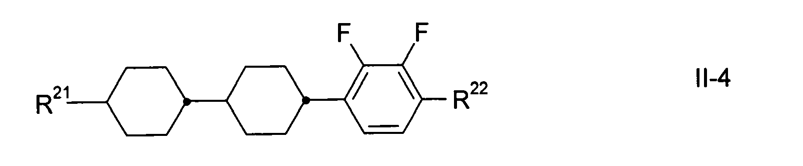 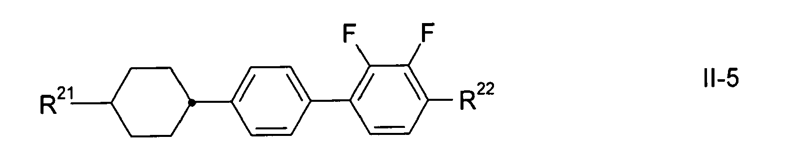 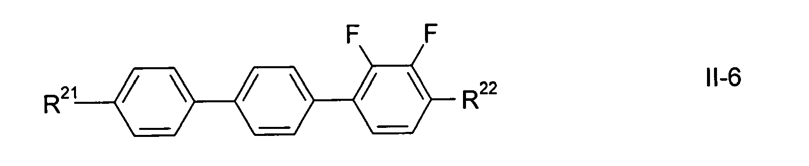 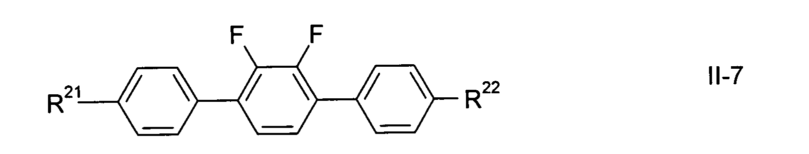 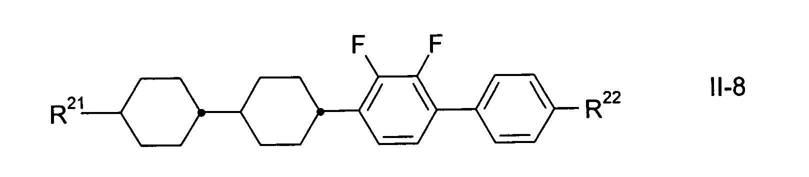 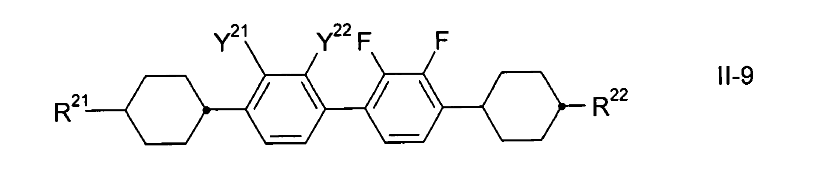 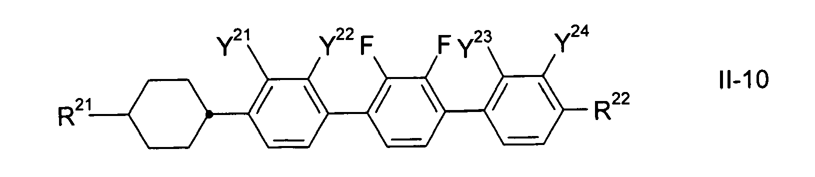 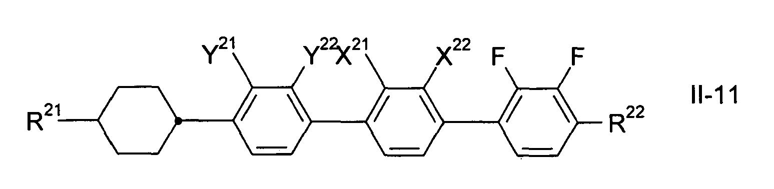 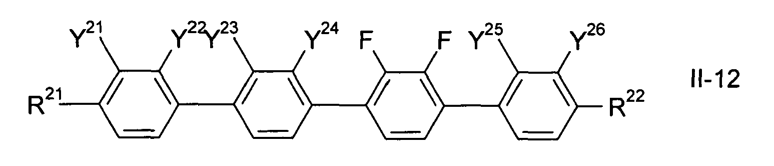 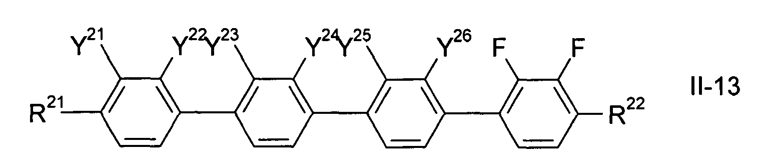 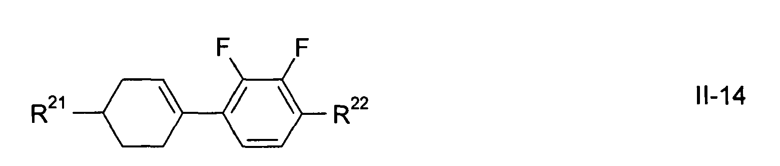 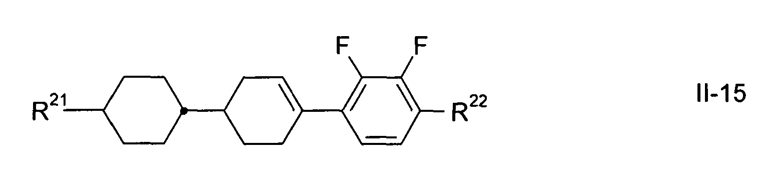 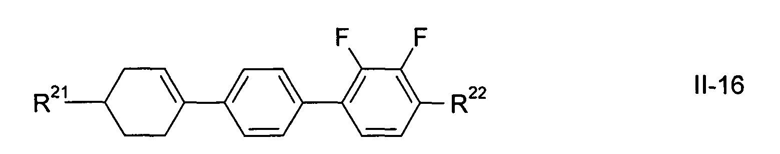 in which
R²¹ and R²² each, independently of one another, denote H, an unsubstituted alkyl or alkenyl radical having up to 15 C atoms, where, in addition, one or more CH₂ groups in these radicals may be replaced by -O-, -S-, 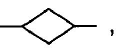 -C=C-, -CF₂-O-, -O-CF₂-, -CO-O- or -O-CO- in such a way that O atoms are not linked directly to one another,
Y²¹ to Y²⁶, independently of one another, denote H or F, and
X²¹ and X²² both denote H or one of X²¹ and X²² denotes H and the other denotes F,
but preferably at most four, particularly preferably at most three and very particularly preferably one or two, of Y²¹ to Y²⁶, X²¹ and X²² denote F,
and
c) a dielectrically neutral component (*component C*), which consists of one or more compounds selected from the group of the formulae V-1 to V-14 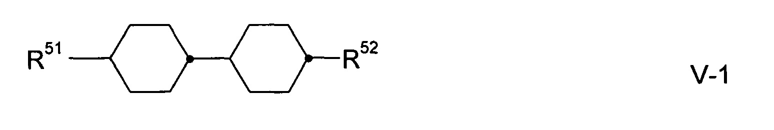 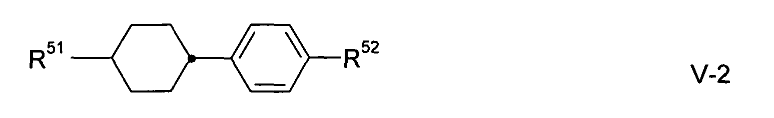 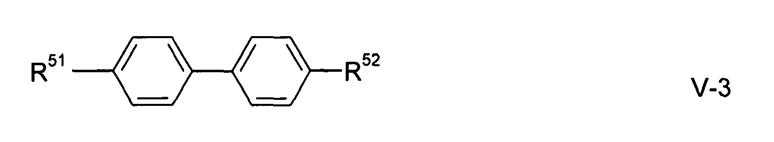 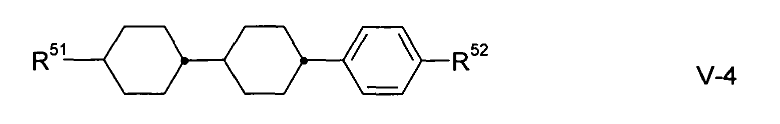 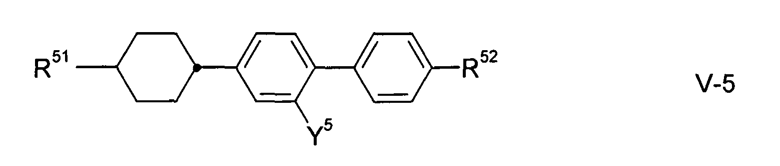 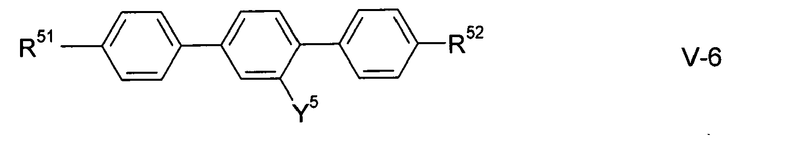 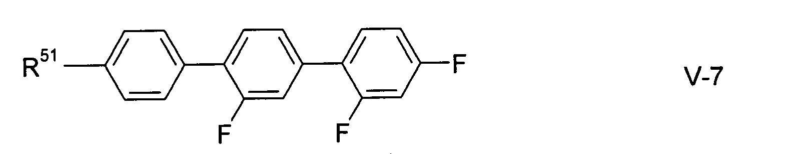 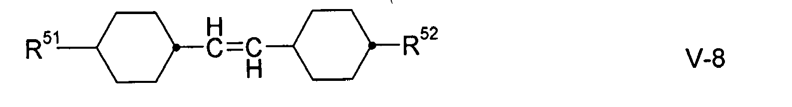 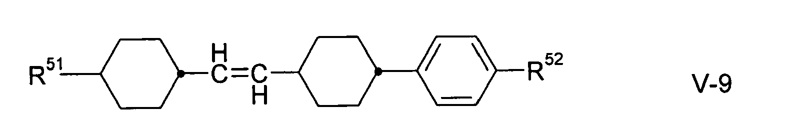 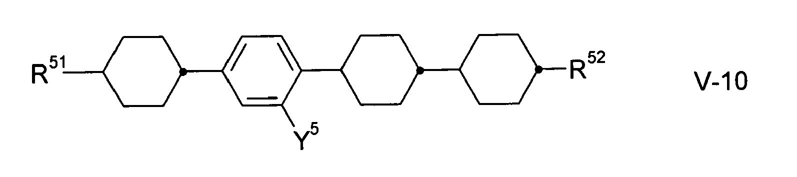 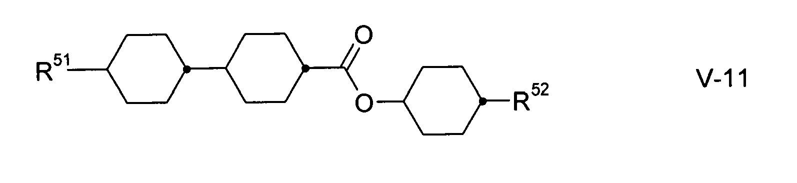 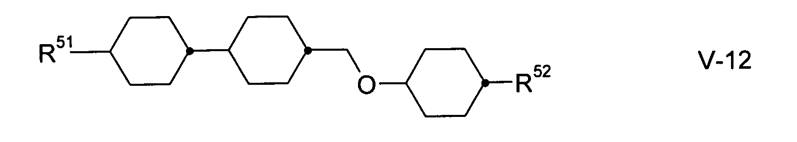 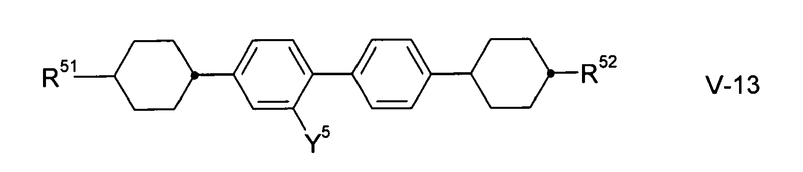 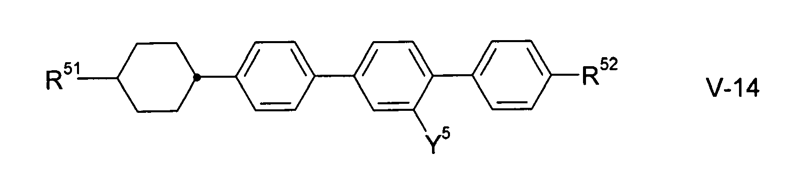 in which
R⁵¹ and R⁵² each, independently of one another, have one of the meanings given for R¹¹ and R¹² and
Y⁵ denotes H or F.

2. Medium according to Claim 1, **characterised in that** the second dielectrically negative component (*component B*) comprises one or more compounds of the formula II-1.

3. Medium according to at least one of Claims 1 and 2, **characterised in that** it comprises one or more compounds of the formula V-1, as given in Claim 1.

4. Medium according to one or more of Claims 1 to 3, **characterised in that** it additionally comprises
d) a chiral component (*component D*), which consists of one or more chiral compounds.

5. Medium according to one or more of Claims 2 to 4, **characterised in that** the second dielectrically negative component (*component B*) comprises one or more compounds of the formula 11-4 according to Claim 1.

6. Medium according to one or more of Claims 1 to 5, **characterised in that** it comprises one or more compounds selected from the group of the compounds of the formulae I-1 to I-4 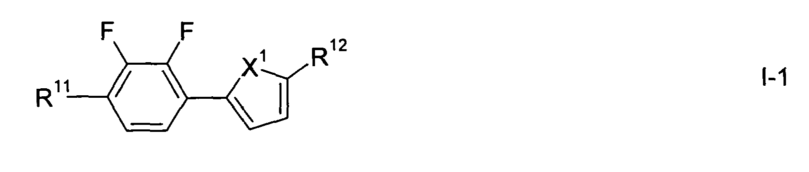 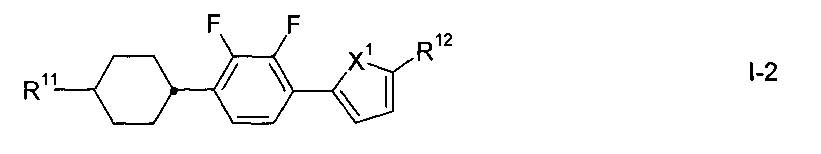 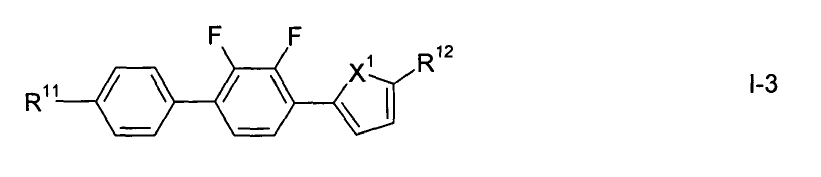 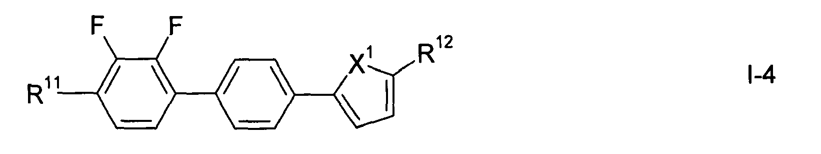 in which the parameters have the meanings given in Claim 1.

7. Medium according to one or more of Claims 3 to 6, **characterised in that** it comprises
| | |
|---|---|
| 2-80% | by weight of one or more compounds of the formula I, and |
| 2-80% | by weight of one or more compounds of the formulae II-1 to II-16, and/or |
| 2-80% | by weight of one or more compounds of the formula III and/or |
| 2-80% | by weight of one or more compounds of the formula IV and |
| 2-80% | by weight of one or more compounds of the formulae V-1 to V-14, |
where the total content of all compounds of the formulae I to V-14 in the medium is 100% by weight or less.

8. Electro-optical display, **characterised in that** it contains, as dielectric, a liquid-crystalline medium according to one or more of Claims 1 to 7.

9. Display according to Claim 8, **characterised in that** it has an active-matrix addressing device.

10. Display according to Claim 8 or 9, **characterised in that** it is based on the VA, ECB, PS-VA, FFS or IPS effect.

11. Use of a liquid-crystalline medium according to one or more of Claims 1 to 7 in an electro-optical display.

12. Use of a liquid-crystalline medium according to Claim 11 in an electro-optical display which has an active-matrix addressing device.

13. Process for the preparation of a medium according to one or more of Claims 1 to 7, **characterised in that** one or more compounds of the formula I, as indicated in Claim 1, are mixed with one or more compounds selected from the group of the compounds of the formulae II-1 to II-16, III and IV, as indicated in Claim 1, and with one or more compounds of the formulae V-1 to V-14, as indicated in Claim 1, and/or one or more further liquid-crystalline compounds and/or one or more dopants, dyes and/or additives.

## Revendications

1. Milieu cristallin liquide présentant une anisotropie diélectrique négative, lequel comprend
a) un premier composant diélectriquement négatif (*composant A*), lequel est constitué par un ou plusieurs composés de la formule I 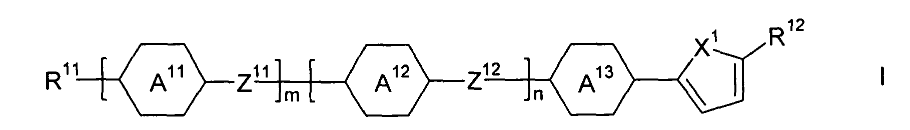 dans laquelle
R¹¹ et R¹² représentent, chacun indépendamment de l'autre, H, un radical alkyle ou alkényle non substitué comportant jusqu'à 15 atomes de C, où, en outre, un ou plusieurs groupes CH₂ dans ces radicaux peut/peuvent être remplacé(s) par -O-, -S-, 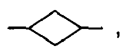 -C=C-, -CF₂-O-, -O-CF₂-, -CO-O- ou -O-CO- de telle sorte que des atomes de O ne soient pas liés directement les uns aux autres,
l'un des cycles 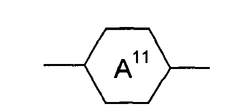 à 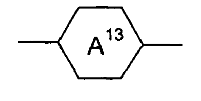 présents représente 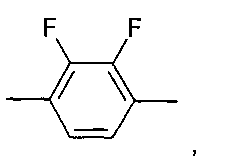 et les autres, s'ils sont présents, représentent, chacun indépendamment des autres, 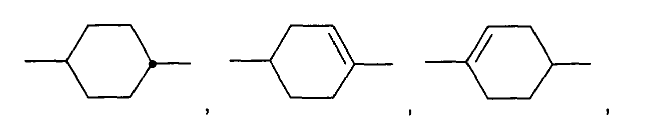 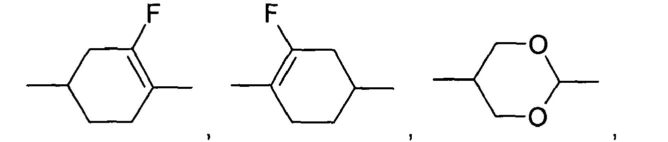 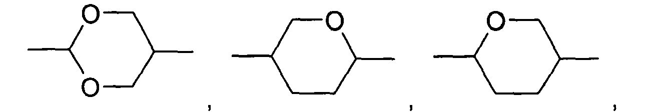 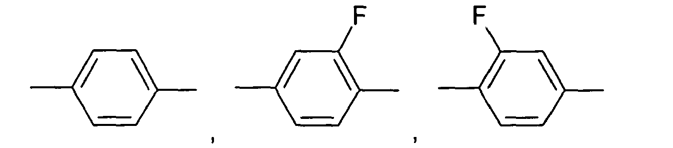 ou 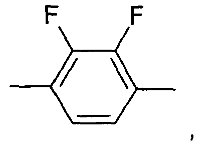
Z¹¹ et Z¹² représentent, chacun indépendamment de l'autre, -CH₂-CH₂-, -CH=CH-, -C≡C-, -CH₂-O-, -O-CH₂-, -CO-O-, -O-CO-, -CF₂-O-, -O-CF₂-, -CF₂-CF₂- ou une liaison simple,
X¹ représente S,
m et n, représentent, indépendamment l'un de l'autre, 0 ou 1, et
b) un second composant diélectriquement négatif *(composant B),* lequel est constitué par un ou plusieurs composés choisis parmi le groupe des formules II-1 à II-16 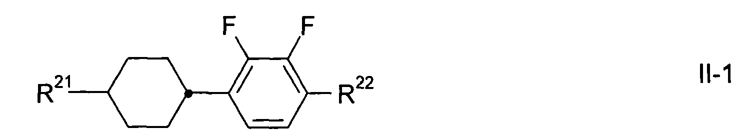 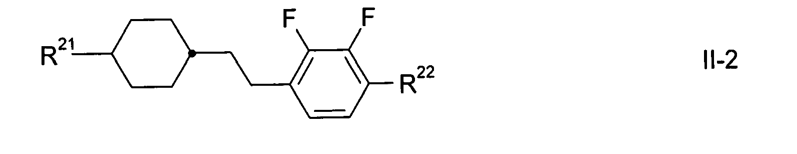 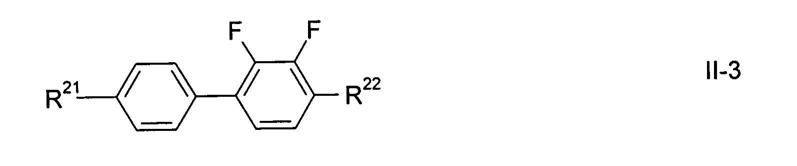 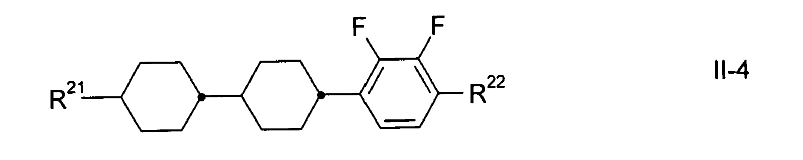 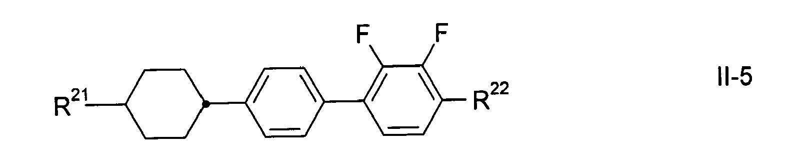 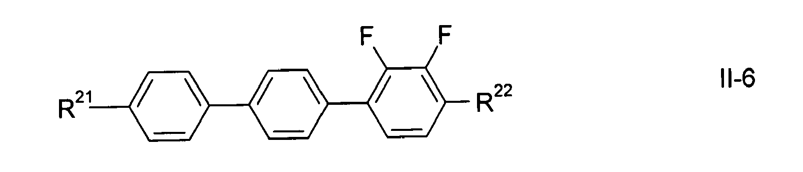 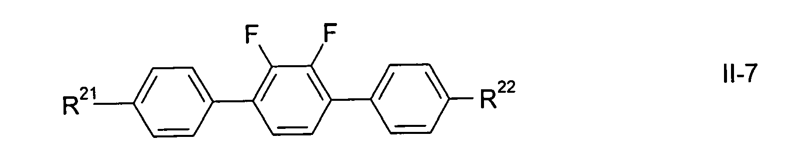 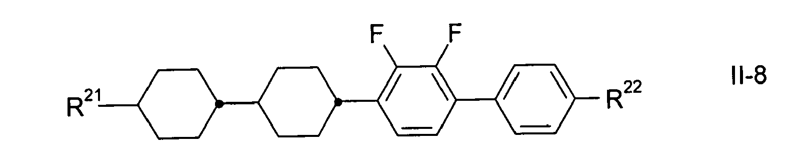 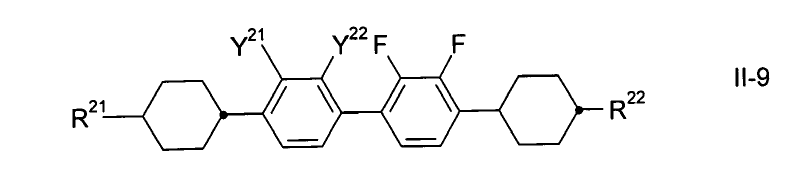 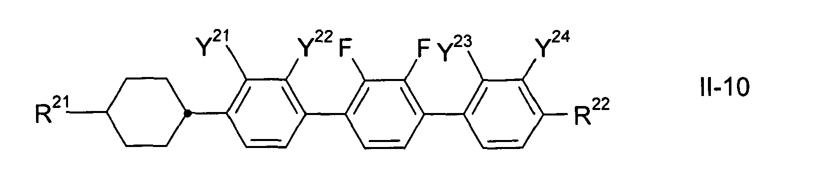 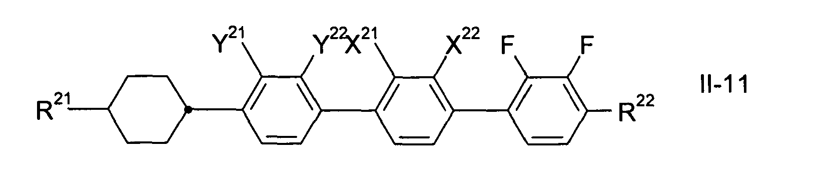 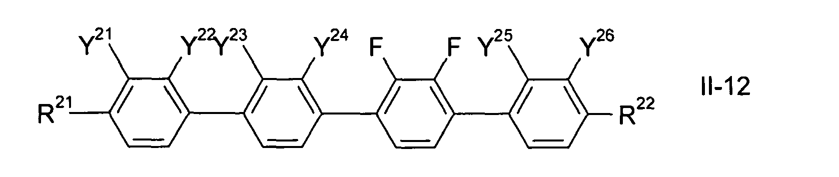 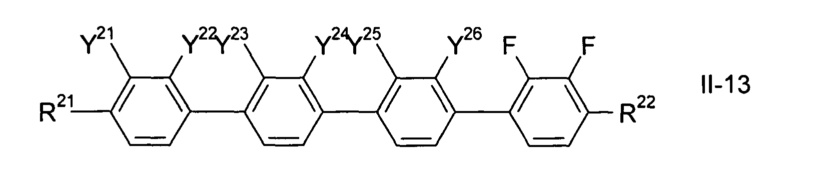 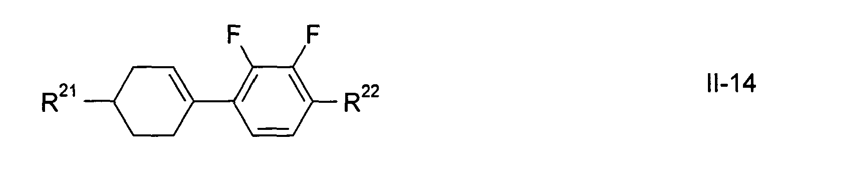 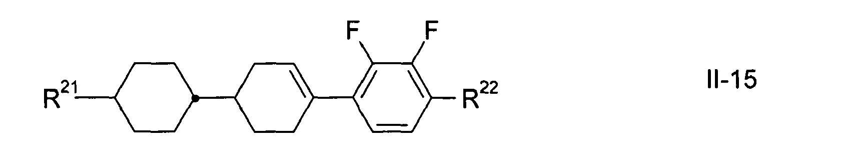 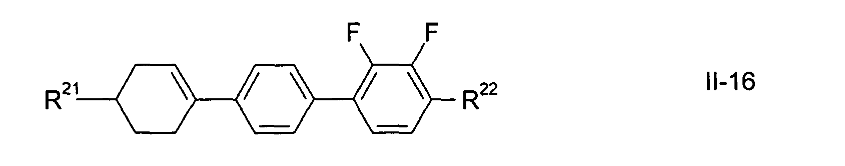 dans lesquelles
R²¹ et R²² représentent, chacun indépendamment de l'autre, H, un radical alkyle ou alkényle non substitué compor- tant jusqu'à 15 atomes de C, où, en outre, un ou plu- sieurs groupes CH₂ dans ces radicaux peut/peuvent être remplacé(s) par -O-, -S-, 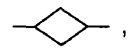 -C≡C-, -CF₂-O-, -O-CF₂-, -CO-O- ou -O-CO- de telle sorte que des atomes de O ne soient pas liés directement les uns aux autres,
Y²¹ à Y²⁶ représentent, indépendamment les uns des autres, H ou F, et
X²¹ et X²² représentent tous deux H ou l'un de X²¹ et X²² repré- sente H et l'autre représente F,
mais de préférence au plus quatre, plus particulièrement de préférence au plus trois et de façon très particulièrement préférable un ou deux de Y²¹ à Y²⁶, X²¹ et X²² représentent F,
et
c) un composant diélectriquement neutre *(composant C*), lequel est constitué par un ou plusieurs composés choisis parmi le groupe des formules V-1 à V-14 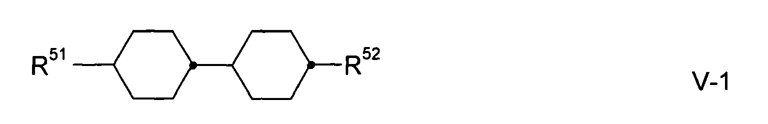 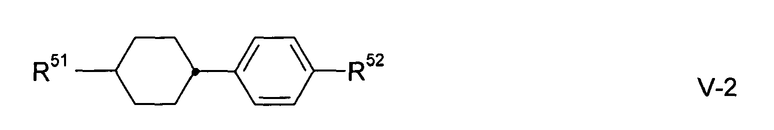 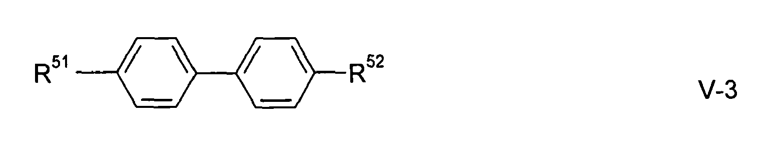 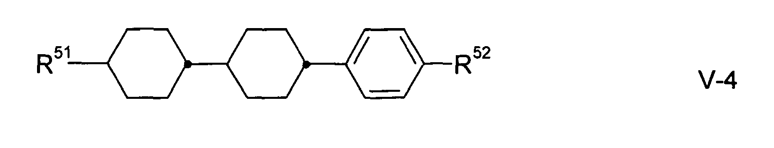 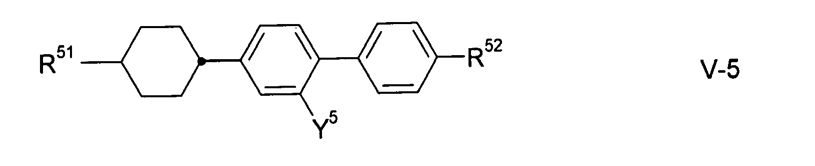 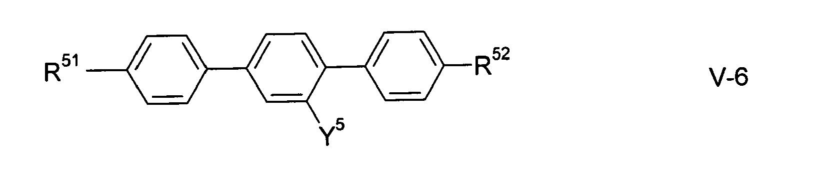 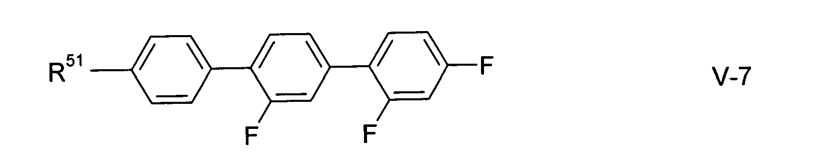 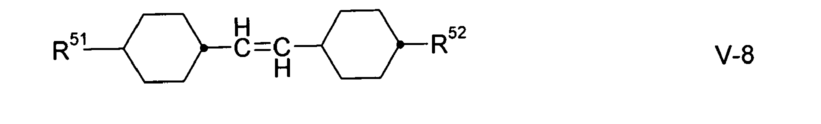 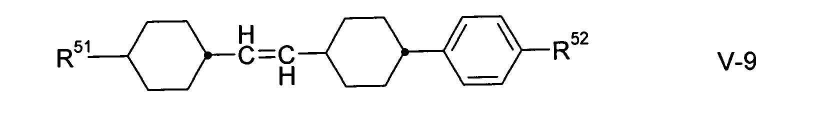 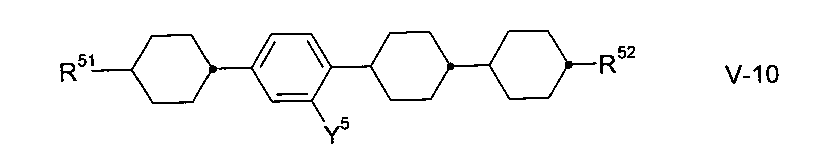 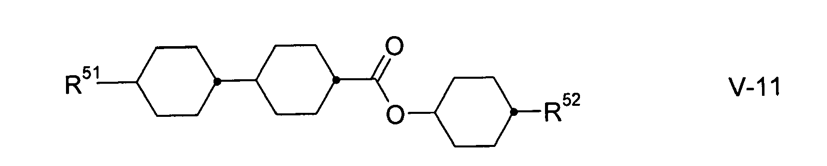 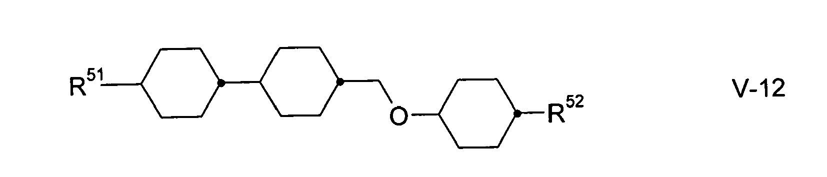 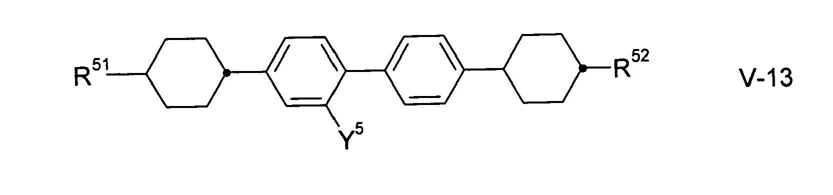 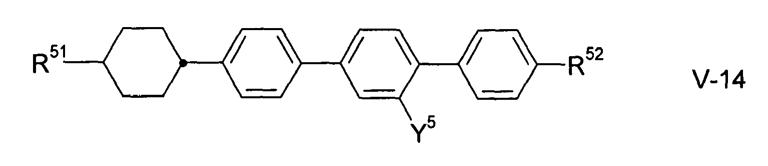 dans lesquelles
R⁵¹ et R⁵² présentent, chacun indépendamment de l'autre, l'une des significations données pour R¹¹ et R¹² et
Y⁵ représente H ou F.

2. Milieu selon la revendication 1, **caractérisé en ce que** le second composant diélectriquement négatif *(composant B)* comprend un ou plusieurs composés de la formule II-1.

3. Milieu selon au moins l'une des revendications 1 et 2, **caractérisé en ce qu'**il comprend un ou plusieurs composés de la formule V-1, comme donné selon la revendication 1.

4. Milieu selon une ou plusieurs des revendications 1 à 3, **caractérisé en ce qu'**il comprend additionnellement
d) un composant chiral *(composant D),* lequel est constitué par un ou plusieurs composés chiraux.

5. Milieu selon une ou plusieurs des revendications 2 à 4, **caractérisé en ce que** le second composant diélectriquement négatif *(composant B)* comprend un ou plusieurs composés de la formule II-4 selon la revendication 1.

6. Milieu selon une ou plusieurs des revendications 1 à 5, **caractérisé en ce qu'**il comprend un ou plusieurs composés choisis parmi le groupe des composés des formules I-1 à I-4 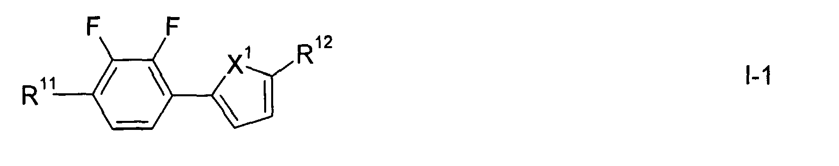 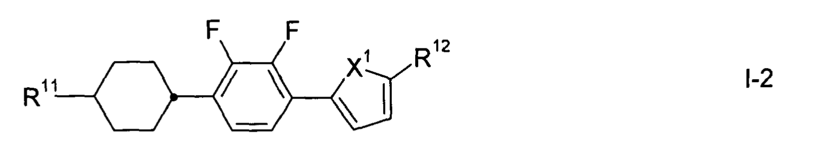 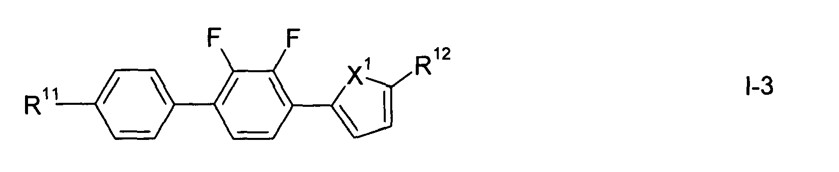 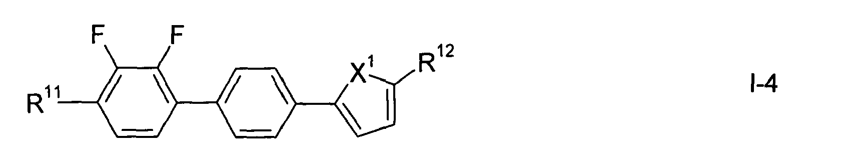 dans lesquelles les paramètres présentent les significations données selon la revendication 1.

7. Milieu selon une ou plusieurs des revendications 3 à 6, **caractérisé en ce qu'**il comprend
| | |
|---|---|
| 2-80% | en poids d'un ou de plusieurs composés de la formule I, et |
| 2-80% | en poids d'un ou de plusieurs composés des formules II-1 à II-16, et/ou |
| 2-80% | en poids d'un ou de plusieurs composés de la formule III et/ou |
| 2-80% | en poids d'un ou de plusieurs composés de la formule IV et |
| 2-80% | en poids d'un ou de plusieurs composés des formules V-1 à V-14, |
où la teneur totale de tous les composés des formules I à V-14 dans le milieu est de 100% en poids ou moins.

8. Affichage électro-optique, **caractérisé en ce qu'**il contient, en tant que diélectrique, un milieu cristallin liquide selon une ou plusieurs des revendications 1 à 7.

9. Affichage selon la revendication 8, **caractérisé en ce qu'**il comporte un dispositif d'adressage par matrice active.

10. Affichage selon la revendication 8 ou 9, **caractérisé en ce qu'**il est basé sur l'effet VA, ECB, PS-VA, FFS ou IPS.

11. Utilisation d'un milieu cristallin liquide selon une ou plusieurs des revendications 1 à 7 dans un affichage électro-optique.

12. Utilisation d'un milieu cristallin liquide selon la revendication 11 dans un affichage électro-optique, lequel comporte un dispositif d'adressage par matrice active.

13. Procédé pour la préparation d'un milieu selon une ou plusieurs des revendications 1 à 7, **caractérisé en ce qu'**un ou plusieurs composés de la formule I, comme indiqué selon la revendication 1, est/sont mélangé(s) avec un ou plusieurs composés choisis parmi le groupe des composés des formules II-1 à II-16, III et IV, comme indiqué selon la revendication 1, et avec un ou plusieurs composés des formules V-1 à V-14, comme indiqué selon la revendication 1, et/ou un ou plusieurs autres composés cristallins liquides et/ou un ou plusieurs dopants, colorants et/ou additifs.
